# EUROPÄISCHE PATENTSCHRIFT

(11) **EP 1 689 760 B1**
(45) Veröffentlichungstag und Bekanntmachung des Hinweises auf die Patenterteilung: **28.10.2009**
(21) Anmeldenummer: 04803259.3
(22) Anmeldetag: 24.11.2004
(51) Int. Cl.: C07F 9/58

(54) **VERFAHREN ZUR ASYMMETRISCHEN SYNTHESE**
METHOD FOR ASYMMETRIC SYNTHESIS
PROCEDE DE SYNTHESE ASYMETRIQUE

(30) Priorität: 25.11.2003 DE 10355066
(43) Veröffentlichungstag der Anmeldung: 16.08.2006
(73) Patentinhaber: BASF SE, 67056 Ludwigshafen (DE)
(72) Erfinder: JÄKEL, Christoph, 67117 Limburgerhof (DE); VOLLAND, Martin, 69115 Heidelberg (DE); MACKEWITZ, Thomas, 68219 Mannheim (DE); PACIELLO, Rocco, 67098 Bad Dürkheim (DE); BREIT, Bernhard, 79194 Gundelfingen (DE); SEICHE, Wolfgang, 79112 Freiburg (DE); WEIS, Martine, 79106 Freiburg (DE); WALOCH, Christoph, 79100 Freiburg (DE)
(74) Vertreter: Reitstötter - Kinzebach
(86) Internationale Anmeldenummer: PCT/EP2004/013344
(87) Internationale Veröffentlichungsnummer: WO 2005/051964

(56) Entgegenhaltungen:
- WO-A-93/03839
- BERNHARD BREIT AND WOLFGANG SEICHE: "Hydrogen Bonding asa Construction Element for Bidentate Donor Ligands in Homogeneous Catalysis: Regioselective Hydroformylation of Terminal Alkenes" J. AM. CHEM. SOC., Bd. 125, 2003, Seiten 6608-6609, XP002324849 in der Anmeldung erwähnt

## Beschreibung

Die vorliegende Erfindung betrifft ein Verfahren zur asymmetrischen Synthese in Gegenwart eines chiralen Katalysators, umfassend wenigstens einen Komplex eines Metalls der VIII. Nebengruppe mit zur Dimerisierung über nichtkovalente Bindungen befähigten Liganden, solche Liganden und Katalysatoren sowie deren Verwendung.

Asymmetrische Synthese ist die Bezeichnung für Reaktionen, bei denen aus einer prochiralen eine chirale Gruppierung so erzeugt wird, dass die stereoisomeren Produkte (Enantiomere oder Diastereomere) in ungleichen Mengen entstehen. Die asymmetrische Synthese hat vor allem im Bereich der pharmazeutischen Industrie immense Bedeutung gewonnen, da häufig nur ein bestimmtes optisch aktives Isomer therapeutisch aktiv ist. Es besteht somit ein ständiger Bedarf an neuen asymmetrischen Syntheseverfahren und speziell Katalysatoren mit einer großen asymmetrischen Induktion für bestimmte Stereozentren, d.h. die Synthese soll zu dem gewünschten Isomeren in hoher optischer Reinheit und in hoher chemischer Ausbeute führen.

Eine wichtige Klasse von Reaktionen ist die Addition an Kohlenstoff-Kohlenstoff- und an Kohlenstoff-Heteroatom-Mehrfachbindungen. Dabei wird die Addition an die beiden benachbarten Atome einer C=X-Doppelbindung (X = C, Heteroatom) auch als 1,2-Addition bezeichnet. Zusätzlich können Additionsreaktionen nach der Art der angelagerten Gruppen charakterisiert werden, wobei mit Hydro-Addition die Anlagerung eines Wasserstoffatoms und mit Carbo-Addition die Anlagerung eines kohlenstoffhaltigen Fragments bezeichnet wird. So bezeichnet eine 1-Hydro-2-Carbo-Addition eine Anlagerung von Wasserstoff und einer kohlenstoffatomhaltigen Gruppe. Wichtige Vertreter dieser Reaktion sind z. B. die Hydroformylierung, Hydrocyanierung und die Carbonylierung. Eine weitere sehr bedeutsame Addition an Kohlenstoff-Kohlenstoff- und an Kohlenstoff-Heteroatom-Mehrfachbindungen ist die Hydrierung. Es besteht ein Bedarf an Katalysatoren für asymmetrische Additionsreaktionen an prochirale ethylenisch ungesättigte Verbindungen mit guter katalytischer Aktivität und hoher Stereoselektivität.

Die Hydroformylierung oder Oxo-Synthese ist ein wichtiges großtechnisches Verfahren und dient der Herstellung von Aldehyden aus Olefinen, Kohlenmonoxid und Wasserstoff. Diese Aldehyde können gegebenenfalls im gleichen Arbeitsgang mit Wasserstoff zu den entsprechenden Oxo-Alkoholen hydriert werden. Die asymmetrische Hydroformylierung ist eine wichtige Methode zur Synthese chiraler Aldehyde und ist als Zugang zu chiralen Bausteinen für die Herstellung von Aromastoffen, Kosmetika, Pflanzenschutzmitteln und Pharmazeutika von Interesse. Die Hydroformylierungsreaktion selbst ist stark exotherm und läuft im Allgemeinen unter erhöhtem Druck und bei erhöhten Temperaturen in Gegenwart von Katalysatoren ab. Als Katalysatoren werden Co-, Rh-, Ir-, Ru-, Pd- oder Pt-Verbindungen bzw. -komplexe eingesetzt, die zur Aktivitäts- und/oder Selektivitätsbeeinflussung mit N-, P-, As- oder Sb-haltigen Liganden modifiziert sein können. Bei der Hydroformylierungsreaktion von Olefinen mit mehr als zwei C-Atomen kann es auf Grund der möglichen CO-Anlagerung an jedes der beiden C-Atome einer Doppelbindung zur Bildung von Gemischen isomerer Aldehyde kommen. Zusätzlich kann es beim Einsatz von Olefinen mit mindestens vier Kohlenstoffatomen durch eine Doppelbindungsisomerisierung zur Bildung von Gemischen isomerer Olefine und gegebenenfalls auch isomerer Aldehyde kommen. Für eine effiziente asymmetrische Hydroformylierung müssen daher folgende Bedingungen erfüllt sein: 1. hohe Aktivität des Katalysators, 2. hohe Selektivität bezüglich des gewünschten Aldehyds und 3. hohe Stereoselektivität zugunsten des gewünschten Isomers.

Es ist bekannt, bei der Rhodium-Niederdruck-Hydroformylierung phosphorhaltige Liganden zur Stabilisierung und/oder Aktivierung des Katalysatormetalls einzusetzen. Geeignete phosphorhaltige Liganden sind z. B. Phosphine, Phosphinite, Phosphonite, Phosphite, Phosphoramidite, Phosphole und Phosphabenzole. Die derzeit am weitesten verbreiteten Liganden sind Triarylphosphine, wie z. B. Triphenylphosphin und sulfoniertes Triphenylphosphin, da diese unter den Reaktionsbedingungen eine hinreichende Stabilität besitzen.

Es ist bekannt, dass der Einsatz von Chelatliganden, die zwei zur Koordination befähigte Gruppen aufweisen, sich vorteilhaft auf die erzielte Stereoselektivität in asymmetrischen Hydroformylierungsreaktionen auswirkt. So beschreiben beispielsweise M. M. H. Lambers-Verstappen und J. de Vries in Adv. Synth. Catal. 2003, 345, Nr. 4, S. 478-482 die Rhodium katalysierte Hydroformylierung von ungesättigten Nitrilen, wobei nur mit asymmetrischen BINAPHOS-Liganden eine befriedigende asymmetrische Hydroformylierung möglich war. Es ist weiterhin bekannt, dass der Einsatz von Chelatliganden sich auch vorteilhaft auf die erzielte n-Selektivität bei der Hydroformylierung auswirkt (siehe Moulijn, van Leeuwen und van Santen, Catalysis, Bd. 79, S.199 - 248, EIsevier 1993). Nachteilig am Einsatz von Chelatliganden ist jedoch, dass zu deren Bereitstellung vielfach aufwendige Synthesen erforderlich sind und/oder sie nur in schlechten Ausbeuten erhalten werden.

M. Akazome et al. beschreiben in J. Org. Chem. 2000, 65, S. 6917-6921 die Synthese, Festkörperstruktur und das Aggregationsverhalten von Phosphinen, die einen 2-Pyridonring tragen. G.R. Newkome und D.C. Hager beschreiben in J. Org. Chem. 1978, 43, S. 947-949 ein Verfahren zur Herstellung von Pyridyldiphenylphosphinen. Ein Einsatz als Liganden in Übergangsmetallkatalysatoren ist in diesen Dokumenten nicht beschrieben. In der US 4,786,443 und der US 4,940,787 sind Verfahren zur Carbonylierung von acetylenisch ungesättigten Verbindungen in Gegenwart eines Palladium-Katalysators beschrieben. Als Liganden werden Phosphine eingesetzt, die wenigstens einen Hetarylrest, z. B. einen gegebenenfalls substituierten Pyridylrest, tragen. Der Einsatz von Phosphinen, die wenigstens eine zur Ausbildung nichtkovalenter Bindungen befähigte Gruppe aufweisen, als Liganden wird nicht beschrieben.

Die WO 80/01690 beschreibt einen Rhodium-Katalysator, der wenigstens einen Phosphinliganden umfasst, bei dem an das P-Atom zwei Arylgruppen und über eine Alkylenbrücke ein heteroatomhaltiger Rest gebunden sind. Bei diesem heteroatomhaltigen Rest kann es sich um eine Vielzahl verschiedener Reste handeln, wobei u. a. auch Carbonsäureamidgruppen-haltige Reste genannt werden. Dieses Dokument lehrt jedoch nicht den Einsatz von Liganden mit einer funktionellen Gruppe, die zur Ausbildung intermolekularer nichtkovalenter Bindungen befähigt Ist. So betrifft das einzige Ausführungsbeispiel zu Carbonsäureamidgruppen-haltigen Liganden (N-2-Pyrolidinonylethyl)diphenylphosphin, welches nicht zur Ausbildung intermolekularer nichtkovalenter Bindungen zwischen den Amidgruppen befähigt ist. Die US 4,687,874 hat einen der WO 80/01690 vergleichbaren Offenbarungsgehalt.

Die unveröffentlichte deutsche Patentanmeldung P 10313319.4 (= EP 1 486 481 A2) beschreibt ein Hydroformylierungsverfahren, das sich zur Hydroformylierung von 1-Olefinen mit hoher n-Selektivität eignet. Darin kommen Hydroformylierungskatalysatoren auf Basis von Monophosphorliganden zum Einsatz die zur Ausbildung intermolekularer nlchtkovalenter Bindungen befähigt sind. Derartige Liganden können prinzipiell über intermolekulare nichtkovalente Bindungen dimerisieren und somit Pseudochelatkomplexe ausbilden.

B. Breit und W. Seiche beschreiben in J. Am. Chem. Soc. 2003, 125, 6608 - 6609 die Dimerisierung monodentater Liganden über Wasserstoffbrückenbindungen unter Ausbildung bidentater Donorliganden und deren Einsatz in Hydroformylierungskatalysatoren mit hoher Regioselektivität.

Keines der zuvor genannten Dokumente beschäftigt sich mit chiralen Liganden bzw. Katalysatoren für einen Einsatz in asymmetrischen Synthesen.

Die EP-A-0 614 870 beschreibt ein Verfahren zur Herstellung optisch aktiver Aldehyde durch Hydroformylierung prochiraler 1-Olefine in Gegenwart eines Rhodiumkomplexes als Hydroformylierungskatalysator, der einen unsymmetrischen phosphoratomhaltlgen Liganden mit 1,1'-Binaphthylen-Rückgrat aufweist. Die Herstellung der unsymmetrischen phosphoratomhaltigen Liganden ist mit hohem Syntheseaufwand verbunden. Die EP-A-0 614 901, EP-A-0 614 902, EP-A-0 614 903, EP-A- 0 684 249 und DE-A-198 53 748 beschreiben unsymmetrische phosphoratomhaltige Liganden mit vergleichbarer Struktur.

Die WO 93/03839 (EP-B-0 600 020) beschreibt einen optisch aktiven Metall-Ligand-Komplex-Katalysator umfassend eine optisch aktive Pnicogenverbindung als Ligand sowie Verfahren zur asymmetrischen Synthese in Gegenwart eines solchen Katalysators.

Der vorliegenden Erfindung liegt die Aufgabe zugrunde, ein Verfahren zur Herstellung chiraler Verbindungen mit hoher Stereoselektivität zur Verfügung zu stellen. Zudem soll das gewünschte Isomer auch in hoher Ausbeute erhalten werden. Eine spezielle Aufgabe der Erfindung ist es ein Verfahren zur Verfügung zu stellen, das sich zur Hydrierung von Kohlenstoff-Kohlenstoff- und Kohlenstoff-Heteroatom-Mehrfachbindungen mit hoher Stereoselektivität eignet. Eine weitere spezielle Aufgabe der vorliegenden Erfindung ist es, ein Hydroformylierungsverfahren zur Verfügung zu stellen, das sich zur Hydroformylierung von Olefinen mit hoher Stereoselektivität eignet. Vorzugsweise sollen in den Verfahren Katalysatoren zum Einsatz kommen, deren Liganden leicht und in guten Ausbeuten herstellbar sind.

Überraschenderweise wurde nun gefunden, dass diese Aufgabe durch die Bereitstellung chiraler Katalysatoren auf Basis von Monopnicogenliganden bzw. Monopseudopnicogenliganden gelöst wird, die zur Ausbildung intermolekularer nichtkovalenter Bindungen befähigt sind. Derartige Liganden können prinzipiell über intermolekulare nichtkovalente Bindungen dimerisieren und somit Pseudochelatkomplexe ausbilden.

Gegenstand der vorliegenden Erfindung ist daher ein Verfahren zur Herstellung chiraler Verbindungen durch Umsetzung einer prochiralen Verbindung, die wenigstens eine ethylenisch ungesättigte Doppelbindung enthält, mit einem Substrat in Gegenwart eines chiralen Katalysators, umfassend wenigstens einen Übergangsmetallkomplex mit Liganden, die jeweils eine pnicogenatomhaltige oder pseudopnicogenatomhaltige Gruppe und wenigstens eine zur Ausbildung intermolekularer, nichtkovalenter Bindungen befähigte funktionelle Gruppe aufweisen, wobei der Komplex über intermolekulare nichtkovalente Bindungen dimerisierte Liganden aufweist.

Außerdem betrifft die vorliegende Erfindung Liganden, wie in Anspruch 26 und 27 definiert, die jeweils eine pnicogenatomhaltige oder pseudopnicogenatomhaltige Gruppe und wenigstens eine zur Ausbildung intermolekularer, nichtkovalenter Bindungen befähigte funktionelle Gruppe aufweisen, sowie chirale Katalysatoren, wie in Anspruch 28 definiert.

Der Begriff "Pnicogenatom" bezeichnet ein Atom der V. Hauptgruppe des Periodensystems der Elemente. Bevorzugte Pnicogenatome sind N, P, As und Sb, besonders bevorzugt sind N und P. Falls es sich bei dem Pnicogenatom um ein Stickstoffatom handelt, so liegt dieses vorzugsweise als Imin (=N-) vor, d. h. es weist eine Doppelbindung zu einem benachbarten Atom auf. Speziell wird als Pnicogenatom ein P-Atom eingesetzt.

Der Begriff "Pseudopnicogenatom" bezeichnet ein Atom, das mit einem Pnicogenatom gleichwirkend ist. Ein bevorzugtes Pseudopnicogenatom ist das CarbenKohlenstoffatom. Entsprechend ist eine "pseudopnicogenatomhaltige Gruppe" eine Gruppe, die mit einer pnicogenatomhaltigen Gruppe gleichwirkend ist. Bevorzugt pseudopnicogenatomhaltige Gruppen sind N-heterocyclische Carbene, wie sie von W. A. Herrmann in Angew. Chem. 2002, 114, S. 1342 - 1363 beschrieben werden. Auf die Offenbarung dieses Dokuments wird in vollem Umfang Bezug genommen.

"Chirale Verbindungen" sind im Rahmen der vorliegenden Erfindung Verbindungen mit wenigstens einem Chiralitätszentrum (d. h. wenigstens einem asymmetrischen Atom, insbesondere wenigstens einem asymmetrischen C-Atom oder P-Atom), mit Chiralitätsachse, Chiralitätsebene oder Schraubenwindung.

Der Begriff "chiraler Katalysator" wird im Rahmen der vorliegenden Erfindung weit verstanden. Er umfasst sowohl Katalysatoren, die wenigstens einen chiralen Liganden aufweisen, als auch Katalysatoren mit an sich achiralen Liganden, die aufgrund der Anordnung der Liganden infolge nichtkovalenter Wechselwirkungen und/oder der Anordnung der Liganden in komplex gebundener Form Zentrumschiralität, axiale Chiralität, planare Chiralität oder Helicität aufweisen.

"Achirale Verbindungen" sind Verbindungen, die nicht chiral sind.

Unter einer "prochiralen Verbindung" wird eine Verbindung mit wenigstens einem prochiralen Zentrum verstanden. "Asymmetrische Synthese" bezeichnet eine Reaktion, bei der aus einer Verbindung mit wenigstens einem prochiralen Zentrum eine Verbindung mit wenigstens einem Chiralitätszentrum, einer Chiralitätsachse, Chiralitätsebene oder Schraubenwindung erzeugt wird, wobei die stereoisomeren Produkte in ungleichen Mengen entstehen.

"Stereoisomere" sind Verbindungen gleicher Konstitution aber unterschiedlicher Atomanordnung im dreidimensionalen Raum.

"Enantiomere" sind Stereoisomere, die sich zueinander wie Bild zu Spiegelbild verhalten. Der bei einer asymmetrischen Synthese erzielte "Enantiomeren-Überschuss" (enantiomeric excess, ee) ergibt sich dabei nach folgender Formel: ee[%] = (R-S)/(R+S) x 100. R und S sind die Deskriptoren des CIP-Systems für die beiden Enantiomeren und geben die absolute Konfiguration am asymmetrischen Atom wieder. Die enantiomerenreine Verbindung (ee = 100 %) wird auch als "homochirale Verbindung" bezeichnet.

Das erfindungsgemäße Verfahren führt zu Produkten, die bezüglich eines bestimmten Stereoisomers angereichert sind. Der erzielte "Enantiomeren-Überschuss" (ee) beträgt in der Regel wenigstens 20 %, bevorzugt wenigstens 50 %, insbesondere wenigstens 80%.

"Diastereomere" sind Stereoisomere, die nicht enantiomer zueinander sind.

Es wurde überraschenderweise gefunden, dass chirale Katalysatoren, die wenigstens einen Komplex mit Monopnicogenliganden oder Monopseudopnicogenliganden (Liganden, die nur eine pnicogenatomhaltige Gruppe oder pseudopnicogenatomhaltige Gruppe pro Molekül aufweisen) enthalten, welche befähigt sind, über intermolekulare, nichtkovalente Bindungen Dimere zu bilden, bei denen der Abstand zwischen den beiden Pnicogenatomen/Pseudopnicogenatomen in einem Bereich liegt, wie er für Chelatliganden üblich ist, bei einem Einsatz in der asymmetrischen Synthese eine so hohe Stereoselektivität erzielen, wie sie ansonsten nur mit Chelatliganden erzielt wird. Zudem können mit diesen Katalysatoren im allgemeinen auch die für Chelatliganden typischen Regioselektivitäten erzielt werden. So werden z. B. bei einem Einsatz in der Hydroformylierung so hohe n-Selektivität erzielen, wie sie ansonsten nur mit Chelatliganden erzielt wird.

Liganden mit der Befähigung, über intermolekulare, nichtkovalente Bindungen Dimere zu bilden, werden im Rahmen dieser Erfindung auch als Pseudochelatliganden bezeichnet.

Erfindungsgemäß werden Liganden eingesetzt, die eine funktionelle Gruppe aufweisen, die zur Ausbildung intermolekularer, nichtkovalenter Bindungen befähigt ist. Vorzugsweise handelt es sich bei diesen Bindungen um Wasserstoffbrückenbindungen oder ionische Bindungen, insbesondere um Wasserstoffbrückenbindungen. Bei den funktionellen Gruppen kann es sich in einer bevorzugten Ausführung um zur Tautomerie befähigte Gruppen handeln. Die zur Ausbildung intermolekularer nichtkovalenter Bindungen befähigten funktionellen Gruppen befähigen die Liganden zur Assoziation, d. h. zur Ausbildung von Aggregaten in Form von Dimeren.

Ein Paar von funktionellen Gruppen zweier Liganden, die zur Ausbildung intermolekularer nichtkovalenter Bindungen befähigt sind, wird im Rahmen der vorliegenden Erfindung als "komplementäre funktionelle Gruppen" bezeichnet. "Komplementäre Verbindungen" sind Ligand/Ligand-Paare, die zueinander komplementäre funktionelle Gruppen aufweisen. Solche Paare sind zur Assoziation, d. h. zur Ausbildung von Aggregaten befähigt.

Vorzugsweise sind die zur Ausbildung intermolekularer nichtkovalenter Bindungen befähigten funktionellen Gruppen ausgewählt unter Hydroxyl-, primären, sekundären und tertiären Amino-, Thiol-, Keto-, Thioketon-, Imin-, Carbonsäureester-, Carbonsäureamid-, Amidin-, Urethan-, Harnstoff-, Sulfoxid-, Sulfoximin-, Sulfonsäureamid- und Sulfonsäureestergruppen.

Vorzugsweise handelt es sich bei diesen funktionellen Gruppen um so genannte selbstkomplementäre funktionelle Gruppen, d. h. die Ausbildung der nichtkovalenten Bindungen erfolgt zwischen zwei gleichen funktionellen Gruppen der eingesetzten Liganden. Funktionelle Gruppen, die zur Tautomerie befähigt sind, können in den Dimeren jeweils in Form der gleichen oder als unterschiedliche Isomere (Tautomere) vorliegen. So können beispielsweise bei einer Keto-Enol-Tautomerie beide Mono(pseudo)-pnicogenliganden in der Ketoform, beide in der Enolform oder einer in der Ketoform und einer in der Enolform vorliegen. Selbstverständlich können die Ligand/Ligand-Paare auch von zwei verschiedenen Liganden gebildet werden.

Der Abstand zwischen den an das Übergangsmetall koordinierenden Atomen der pnicogenatomhaltigen oder pseudopnicogenatomhaltigen Gruppen der dimerisierten Liganden beträgt vorzugsweise höchstens 5 Å. Er liegt vorzugsweise in einem Bereich von 2,5 bis 4,5 Å, besonders bevorzugt von 3,5 bis 4,2 Å.

Geeignete Verfahren zur Bestimmung, ob die eingesetzten Liganden befähigt sind, Dimere zu bilden, umfassen die Kristallstrukturanalyse, die Kernresonanzspektroskopie sowie Molecular-Modelling-Verfahren. Dabei ist es in der Regel ausreichend zur Bestimmung, die Liganden in nichtkomplexgebundener Form heranzuziehen. Dies gilt speziell für Molecular-Modelling-Verfahren. Es wurde zudem gefunden, dass sowohl durch Kristallstrukturanalyse, die am Festkörper erfolgt, als auch durch Kernresonanzspektroskopie in Lösung, als auch durch Berechnung der Struktur für die Gasphase im Allgemeinen zuverlässige Voraussagen über das Verhalten der eingesetzten Liganden unter den Reaktionsbedingungen der katalysierten Reaktion erzielt werden. So weisen z. B. Liganden, die nach den genannten Bestimmungsverfahren befähigt sind, Dimere zu bilden, in der Regel auch unter den Bedingungen der Reaktionen, in denen sie eingesetzt werden, Eigenschaften auf, wie sie ansonsten nur für Chelatliganden üblich sind. Dazu zählt insbesondere die Erzielung einer hohen Stereoselektivität bei der Hydrierung und Hydroformylierung von prochiralen Olefinen. Des Weiteren wurde gefunden, das diese hohe Stereoselektivität nicht mehr erzielt wird, wenn bei der Reaktion die Ausbildung intermolekularer nichtkovalenter Bindungen zwischen den Liganden durch Zugabe von Säuren oder protischen Lösungsmitteln, wie z. B. Methanol, gestört wird.

In einer geeigneten Vorgehensweise zur Bestimmung, ob ein Ligand für das erfindungsgemäße Verfahren geeignet ist, werden zunächst mit Hilfe eines graphischen Molecular-Modelling-Programms alle möglichen H-Brücken-gebundenen Dimere des Liganden und seiner Tautomeren erzeugt. Diese Dimerstrukturen werden dann mit quantenchemischen Methoden optimiert. Vorzugsweise wird hierfür die Dichtefunktionaltheorie (DFT) eingesetzt, beispielsweise unter Verwendung des Funktionals B-P86 (A. D. Becke, Phys. Rev. A 1988, 38, 3098; J. P. Perdew, Phys. Rev. B 1986, 33, 8822; ibid 1986, 34, 7406(E)) und der Basis SV(P) (A. Schäfer, H. Horn, R. Ahlrichs, J. Chem. Phys. 1992, 97, 2571) in dem Programmpaket Turbomole (R. Ahlrichs, M. Bär, M. Häser, H. Horn, C. Kölmel, Chem. Phys. Lett. 1989, 162,165; M. v. Amim, R. Ahlrichs; J. Comput. Chem. 1998, 19, 1746) (erhältlich von der Universität Karlsruhe). Ein kommerziell erhältliches geeignetes Molecular-Modelling-Paket ist Gaussian 98 (M. J. Frisch, J. A. Pople et al., Gaussian 98, Revision A.5, Gaussian Inc., Pittsburgh (PA) 1998).

Als Pseudochelatligand sind vorzugsweise solche geeignet, bei denen in der berechneten Dimerstruktur der Abstand der koordinierenden Atome, z. B. der P-Atome, weniger als 5 Å beträgt.

Für den Zweck der Erläuterung der vorliegenden Erfindung umfasst der Ausdruck "Alkyl" geradkettige und verzweigte Alkylgruppen. Vorzugsweise handelt es sich dabei um geradkettige oder verzweigte C₁-C₂₀-Alkyl, bevorzugterweise C₁-C₁₂-Alkyl-, besonders bevorzugt C₁-C₈-Alkyl- und ganz besonders bevorzugt C₁-C₄-Alkylgruppen. Beispiele für Alkylgruppen sind insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethy(propyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl, n-Octyl, 2-Ethylhexyl, 2-Propylheptyl, Nonyl, Decyl.

Der Ausdruck "Alkyl" umfasst auch substituierte Alkylgruppen, welche im Allgemeinen 1, 2, 3, 4 oder 5, bevorzugt 1, 2 oder 3 und besonders bevorzugt 1 Substituenten aufweisen. Diese sind vorzugsweise ausgewählt unter Alkoxy, Cycloalkyl, Aryl, Hetaryl, Hydroxyl, Halogen, NE¹E², NE¹E²E³⁺, Carboxylat und Sulfonat. Eine bevorzugte Perfluoralkylgruppe ist Trifluormethyl.

Der Ausdruck "Alkylen" im Sinne der vorliegenden Erfindung steht für geradkettige oder verzweigte Alkandiyl-Gruppen mit 1 bis 5 Kohlenstoffatomen.

Der Ausdruck "Cycloalkyl" umfasst im Sinne der vorliegenden Erfindung unsubstituierte als auch substituierte Cycloalkylgruppen, vorzugsweise C₅-C₇-Cycloalkylgruppen, wie Cyclopentyl, Cyclohexyl oder Cycloheptyl. Diese können im Falle einer Substitution, im Allgemeinen 1, 2, 3, 4 oder 5, bevorzugt 1, 2 oder 3 und besonders bevorzugt 1 Substituenten tragen. Vorzugsweise sind diese Substituenten ausgewählt unter Alkyl, Alkoxy, NE¹E², NE¹E²E³⁺, und Halogen.

Der Ausdruck "Heterocycloalkyl" im Sinne der vorliegenden Erfindung umfasst gesättigte, cycloaliphatische Gruppen mit im Allgemeinen 4 bis 7, vorzugsweise 5 oder 6 Ringatomen, in denen 1 oder 2 der Ringkohlenstoffatome durch Heteroatome, ausgewählt aus den Elementen Sauerstoff, Stickstoff und Schwefel, ersetzt sind und die gegebenenfalls substituiert sein können, wobei im Falle einer Substitution, diese heterocycloaliphatischen Gruppen 1, 2 oder 3, vorzugsweise 1 oder 2, besonders bevorzugt 1 Substituenten tragen können. Diese Substituenten sind vorzugsweise ausgewählt unter Alkyl, Alkoxy, Aryl, COOR^{o}, COO⁻M⁺, Hydroxyl, Halogen und NE¹E², besonders bevorzugt sind Alkylreste. Beispielhaft für solche heterocycloaliphatischen Gruppen seien Pyrrolidinyl, Piperidinyl, 2,2,6,6-Tetramethyl-piperidinyl, Imidazolidinyl, Pyrazolidinyl, Oxazolidinyl, Morpholidinyl, Thiazolidinyl, Isothiazolidinyl, Isoxazolidinyl, Piperazinyl, Tetrahydrothiophenyl, Tetrahydrofuranyl, Tetrahydropyranyl, Dioxanyl genannt.

Der Ausdruck "Aryl" umfasst im Sinne der vorliegenden Erfindung unsubstituierte als auch substituierte Arylgruppen, und steht vorzugsweise für Phenyl, Tolyl, Xylyl, Mesityl, Naphthyl, Fluorenyl, Anthracenyl, Phenanthrenyl oder Naphthacenyl, besonders bevorzugt für Phenyl oder Naphthyl, wobei diese Arylgruppen im Falle einer Substitution im Allgemeinen 1, 2, 3, 4 oder 5, vorzugsweise 1, 2 oder 3 und besonders bevorzugt 1 Substituenten, ausgewählt aus den Gruppen Alkyl, Alkoxy, Carboxylat, Trifluormethyl, Sulfonat, NE¹E², Alkylen-NE¹E², Nitro, Cyano oder Halogen, tragen können. Eine bevorzugte Perfluorarylgruppe ist Pentafluorphenyl.

Der Ausdruck "Hetaryl" umfasst im Sinne der vorliegenden Erfindung unsubstituierte oder substituierte, heterocycloaromatische Gruppen, vorzugsweise die Gruppen Furyl, Thiophenyl, Pyridyl, Chinolinyl, Acridinyl, Pyridazinyl, Pyrimidinyl, Pyrazinyl, Pyrrolyl, Imidazolyl, Pyrazolyl, Indolyl, Purinyl, Indazolyl, Benzotriazolyl, 1,2,3-Triazolyl, 1,3,4-Triazolyl und Carbazolyl. Diese heterocycloaromatischen Gruppen können im Falle einer Substitution im Allgemeinen 1, 2 oder 3 Substituenten, ausgewählt aus den Gruppen Alkyl, Alkoxy, Hydroxyl, Carboxylat, Sulfonat, NE¹E², Alkylen-NE¹E² oder Halogen, tragen.

Carboxylat und Sulfonat stehen im Rahmen dieser Erfindung vorzugsweise für ein Derivat einer Carbonsäurefunktion bzw. einer Sulfonsäurefunktion, insbesondere für ein Metallcarboxylat oder -sulfonat, eine Carbonsäureester- oder Sulfonsäureesterfunktion oder eine Carbonsäure- oder Sulfonsäureamidfunktion. Dazu zählen z. B. die Ester mit C₁-C₄-Alkanolen, wie Methanol, Ethanol, n-Propanol, Isopropanol, n-Butanol, sec.-Butanol und tert.-Butanol.

Die obigen Erläuterungen zu den Ausdrücken "Alkyl", "Cycloalkyl", "Aryl", "Heterocycloalkyl" und "Hetaryl" gelten entsprechend für die Ausdrücke "Alkoxy", "Cycloalkoxy", "Aryloxy", "Heterocycloalkoxy" und "Hetaryloxy".

Der Ausdruck "Acyl" steht im Sinne der vorliegenden Erfindung für Alkanoyl- oder Aroylgruppen mit im Allgemeinen 2 bis 11, vorzugsweise 2 bis 8 Kohlenstoffatomen, beispielsweise für die Formyl-, Acetyl-, Propanoyl-, Butanoyl-, Pentanoyl-, Hexanoyl-, Heptanoyl-, 2-Ethylhexanoyl-, 2-Propylheptanoyl-, Benzoyl- oder Naphthoyl-Gruppe.

Die Reste E¹ bis E¹² sind unabhängig voneinander ausgewählt unter Wasserstoff, Alkyl, Cycloalkyl und Aryl. Die Gruppen NE¹E², NE⁴E⁵, NE⁷E⁸ und NE¹⁰E¹¹ stehen vorzugsweise für N,N-Dimethylamino, N,N-Diethylamino, N,N-Dipropylamino, N,N-Diisopropylamino, N,N-Di-n-butylamino, N,N-Di-t.-butylamino, N,N-Dicyclohexylamino oder N,N-Diphenylamino.

Halogen steht für Fluor, Chlor, Brom und lod, bevorzugt für Fluor, Chlor und Brom.

M⁺ steht für ein Kationäquivalent, d. h. für ein einwertiges Kation oder den einer positiven Einfachladung entsprechenden Anteil eines mehrwertigen Kations. Das Kation M⁺ dient lediglich als Gegenion zur Neutralisation negativ geladener Substituentengruppen, wie der COO⁻ oder der Sulfonat-Gruppe und kann im Prinzip beliebig gewählt werden. Vorzugsweise werden deshalb Alkalimetall-, insbesondere Na⁺, K⁺-, Li⁺-Ionen oder Onium-lonen, wie Ammonium-, Mono-, Di-, Tri-, Tetraalkylammonium-, Phosphonium-, Tetraalkylphosphonium- oder Tetraarylphosphonium-lonen verwendet.

Entsprechendes gilt für das Anionäquivalent X⁻, das lediglich als Gegenion positiv geladener Substituentengruppen, wie den Ammoniumgruppen, dient und beliebig gewählt werden kann unter einwertigen Anionen und den einer negativen Einfachladung entsprechenden Anteilen eines mehrwertigen Anions, wobei im Allgemeinen Halogenidlonen X⁻ bevorzugt sind, insbesondere Chlorid und Bromid.

Die Werte für x und y stehen für eine ganze Zahl von 1 bis 240, vorzugsweise für eine ganze Zahl von 2 bis 120.

Der Begriff "polycyclische Verbindung" umfasst im Rahmen der vorliegenden Erfindung im weitesten Sinne Verbindungen, die wenigstens zwei Ringe enthalten, unabhängig davon, wie diese Ringe verknüpft sind. Hierbei kann es sich um carbocyclische und/oder heterocyclische Ringe handeln. Die Ringe können über Einfach- oder Doppelbindungen verknüpft ("mehrkernige Verbindungen"), durch Anellierung verbunden ("kondensierte Ringsysteme") oder überbrückt ("überbrückte Ringsysteme", "Käfigverbindungen") sein. Bevorzugte polycyclische Verbindungen sind kondensierte Ringsysteme.

Kondensierte Ringsysteme können durch Anellierung verknüpfte (ankondensierte) aromatische, hydroaromatische und cyclische Verbindungen sein. Kondensierte Ringsysteme bestehen aus zwei, drei oder mehr als drei Ringen. Je nach der Verknüpfungsart unterscheidet man bei kondensierten Ringsystemen zwischen einer ortho-Anellierung, d. h. jeder Ring hat mit jedem Nachbarring jeweils eine Kante, bzw. zwei Atome gemeinsam, und einer peri-Anellierung, bei der ein Kohlenstoffatom mehr als zwei Ringen angehört. Bevorzugt unter den kondensierten Ringsystemen sind orthokondensierte Ringsysteme.

Die erfindungsgemäß eingesetzten Ligand/Ligand-Paare lassen sich schematisch durch die folgende allgemeine Formel I darstellen: 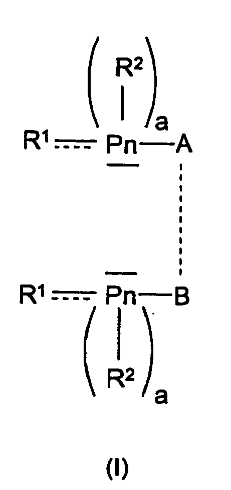 worin
- Pn: für unabhängig voneinander ausgewählte Pnicogenatome oder koordinierende Atome pseudopnicogenatomhaltiger Gruppen stehen,
- A und B: für Reste mit zueinander komplementären funktionellen Gruppen stehen, zwi- schen denen eine nichtkovalente Wechselwirkung besteht,
- R¹: für einen einfach oder doppelt gebundenen Organylrest steht,
- R²: für einen einfach gebundenen Organylrest steht,
- a: in Abhängigkeit von der Valenz des Pnicogenatoms oder koordinierenden Atoms der pseudopnicogenatomhaltigen Gruppen und der Bindigkeit des Rests R² für 0 oder 1 steht,
wobei das Pnicogenatom oder koordinierende Atom der pseudopnicogenatomhaltigen Gruppe auch gemeinsam mit wenigstens zwei der daran gebundenen Reste R¹, R² und A oder B Teil eines Ringsystems sein kann.

Bevorzugt sind die Pn-Atome in der Formel I unabhängig voneinander ausgewählt unter N, P, As, Sb und Carben-Kohlenstoffatomen.

In einer ersten Ausführung handelt es sich bei der pnicogen- oder pseudopnicogenatomhaltigen Gruppe um eine Carbengruppe der Formel R¹-C-A bzw. R¹-C-B. Bevorzugt ist das Carbenkohlenstoffatom dann Teil eines Ringsystems der allgemeinen Formel I.1 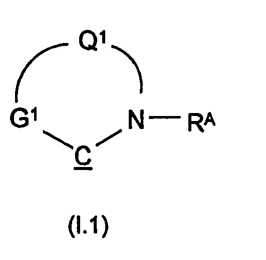 worin
- G¹: für NR^{B} oder CR^{C}R^{D} steht, worin R^{B}, R^{C} und R^{D} unabhängig voneinander für Wasserstoff, Alkyl, Cycloalkyl, Heterocycloalkyl, Aryl oder Hetaryl stehen, wobei R^{C} oder R^{D} auch für ein Bindungsäquivalent einer Doppelbindung stehen kann,
- Q¹: für eine zweiwertige verbrückende Gruppe mit 1 bis 5 Atomen zwischen den flankierenden Bindungen steht,
- R^{A}: für Wasserstoff, Alkyl, Cycloalkyl, Heterocycloalkyl, Aryl oder Hetaryl steht,
wobei einer der Reste R^{A}, R^{B}, R^{C}, R^{D} oder ein Rest an der Gruppe Q¹ für eine zur Ausbildung intermolekularer, nichtkovalenter Bindungen befähigte funktionelle Gruppe steht oder eine solche Gruppe umfasst.

Bevorzugt sind die Verbindungen der Formel I.1 ausgewählt unter den N-heterocyclischen Carbenen der Formeln I.1a bis I.1d 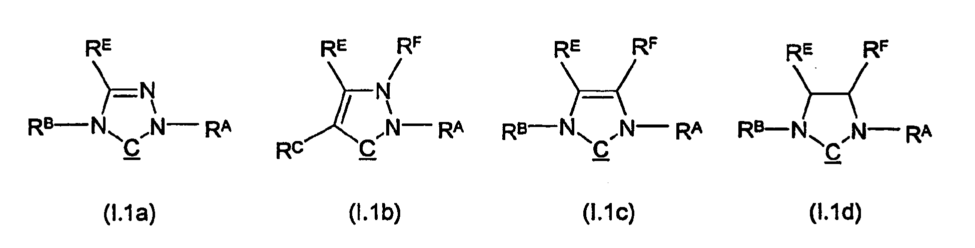 worin
- R^{A}, R^{B}, R^{C}, R^{E} und R^{F}: unabhängig voneinander für Wasserstoff, Alkyl, Cycloalkyl, Hete- rocycloalkyl, Aryl oder Hetaryl stehen, wobei einer dieser Reste für eine zur Aus- bildung intermolekularer, nichtkovalenter Bindungen befähigte funktionelle Grup- pe steht oder eine solche Gruppe umfasst.

Bevorzugt stehen in den Verbindungen der Formeln I.1a bis I.1d die Reste R^{A}, R^{B}, R^{C}, R^{E} und R^{F}, die nicht für eine zur Ausbildung intermolekularer, nichtkovalenter Bindungen befähigte funktionelle Gruppe stehen oder eine solche Gruppe umfassen, für unsubstituierte oder ein- oder mehrfach substituierte Alkyl- oder Arylreste.

Bevorzugt steht in den Verbindungen der Formeln I.1a bis I.1d der Rest R^{A} für eine zur Ausbildung intermolekularer, nichtkovalenter Bindungen befähigte funktionelle Gruppe oder umfasst eine solche Gruppe.

In einer zweiten Ausführung handelt es sich bei der pnicogen- oder pseudopnicogenatomhaltigen Gruppe um eine Imingruppe der Formel R¹=N-A bzw. R¹=N-B. Bevorzugt ist die Imingruppe dann Teil eines Ringsystems der allgemeinen Formel I.2 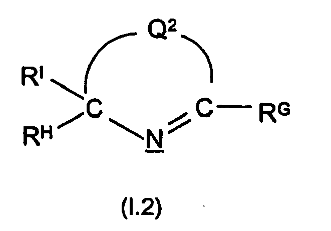 worin
- Q²: für eine zweiwertige verbrückende Gruppe mit 1 bis 5 Atomen zwischen den flankierenden Bindungen steht, und
- R^{G}, R^{H} und R¹: unabhängig voneinander für Wasserstoff, Alkyl, Cycloalkyl, Heterocyclo- alkyl, Aryl oder Hetaryl stehen,
wobei einer der Reste R^{G}, R^{H}, R^{I} oder ein Rest an der Gruppe Q² für eine zur Ausbildung intermolekularer, nichtkovalenter Bindungen befähigte funktionelle Gruppe steht oder eine solche Gruppe umfasst.

Bevorzugt steht in der Formel I.2 die Gruppe Q² für eine C₁-C₅-Alkylengruppe, die ein Heteroatom oder eine heteroatomhaltige Gruppe, vorzugsweise ausgewählt unter O, S oder NR^{K} (R^{K} = Wasserstoff, Alkyl, Cycloalkyl, Aryl), aufweisen kann.

Bevorzugt sind die Verbindungen der Formel I.2 ausgewählt unter cyclischen Iminen der Formeln I.2a oder I.2b 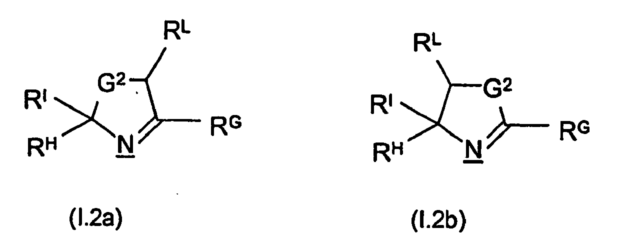 worin
- G²: für O oder NR^{K} steht, worin R^{K} für Wasserstoff, Alkyl, Cycloalkyl, Heterocycloal- kyl, Aryl oder Hetaryl steht,
- R^{G}, R^{H}, R^{I} und R^{L}: unabhängig voneinander für Wasserstoff, Alkyl, Cycloalkyl, Hetero- cycloalkyl, Aryl oder Hetaryl stehen,
wobei einer der Reste R^{G}, R^{H}, R^{I}, R^{K} und R^{L} für eine zur Ausbildung intermolekularer, nichtkovalenter Bindungen befähigte funktionelle Gruppe steht oder eine solche Gruppe umfasst.

Bevorzugt steht in den Verbindungen der Formeln I.2a oder I.2b der Rest R^{G} für eine zur Ausbildung intermolekularer, nichtkovalenter Bindungen befähigte funktionelle Gruppe oder umfasst eine solche Gruppe.

Bevorzugt steht in den Verbindungen der Formeln I.2a oder I.2b der Rest R^{H} für Alkyl, insbesondere Methyl, Ethyl, Isopropyl oder tert.-Butyl, Aryl, insbesondere Phenyl, oder Arylalkyl, insbesondere Benzyl.

Bevorzugt stehen in den Verbindungen der Formeln I.2a oder I.2b die Reste R^{I} und R^{L} für Wasserstoff.

Bevorzugt steht in den Verbindungen der Formeln I.2a oder I.2b die Gruppe G² für O oder NR^{K}.

In einer dritten Ausführung ist die pnicogen- oder pseudopnicogenatomhaltige Gruppe ausgewählt unter Gruppen der allgemeinen Formel I.3 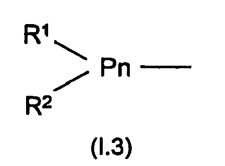 worin
- Pn: für N, P, As oder Sb, vorzugsweise P steht,
- R¹ und R²: unabhängig voneinander für Alkyl, Alkoxy, Cycloalkyl, Cycloalkoxy, Hetero- cycloalkyl, Heterocycloalkoxy, Aryl, Aryloxy, Hetaryl oder Hetaryloxy stehen oder
- R¹ und R²: zusammen mit dem Phosphoratom, an das sie gebunden sind, für einen 4- bis 8-gliedrigen Heterocyclus stehen, der gegebenenfalls zusätzlich ein-, zwei- oder dreifach mit Cycloalkyl, Heterocycloalkyl, Aryl oder Hetaryl anelliert ist, wo- bei der Heterocyclus und, falls vorhanden, die anellierten Gruppen unabhängig voneinander je einen, zwei, drei oder vier Substituenten tragen können, die aus- SR^{e}, gewählt sind unter Alkyl, Cycloalkyl, Heterocycloalkyl, Aryl, Hetaryl, COOR^{c}, COO⁻M⁺, SO₃R^{c}, SO₃⁻M⁺, PO₃(R^{c})(R^{d}), (FO₃)²⁻(M⁺)₂, NE⁴E⁵, (NE⁴E⁵E⁶)⁺X⁻, OR^{e}, (CHR^{f}CH₂O)_{y}R^{e}, (CH₂O)_{y}R^{e}, (CH₂CH₂NE⁴)_{y}R^{e}, Halogen, Nitro, Acyl oder Cyano stehen,
worin
- R^{c} und R^{d}: jeweils gleiche oder verschiedene Reste, ausgewählt unter Wasser- stoff, Alkyl, Cycloalkyl, Aryl oder Hetaryl bedeuten,
- R⁸, E⁴, E⁵, E⁶: jeweils gleiche oder verschiedene Reste, ausgewählt unter Was- serstoff, Alkyl, Cycloalkyl, Aryl oder Hetaryl bedeuten,
- R^{f}: für Wasserstoff, Methyl oder Ethyl steht,
- M⁺: für ein Kationäquivalent steht,
- X⁻: für ein Anionäquivalent steht und
- y: für eine ganze Zahl von 1 bis 240 steht.

Nach einer ersten bevorzugten Ausführungsform sind in den Gruppen der allgemeinen Formel I.3 die Reste R¹ und R² nicht miteinander verbrückt. Dann sind R¹ und R² vorzugsweise unabhängig voneinander ausgewählt unter Alkyl, Cycloalkyl, Aryl und Hetaryl, wie eingangs definiert.

Bevorzugt steht wenigstens einer der Reste R¹ und R² und besonders bevorzugt stehen R¹ und R² beide für Aryl. Dann steht beispielsweise einer der Reste R¹ und R² für Phenyl und der andere für Naphthyl oder R¹ und R² stehen beide für Phenyl oder R¹ und R² stehen beide für Naphthyl. Bevorzugte Naphthylreste sind 1-Naphthylreste.

Nach einer weiteren bevorzugten Ausführungsform sind in den Gruppen der allgemeinen Formel I.3 die Reste R¹ und R² miteinander verbrückt. Dann steht die pnicogenatomhaltige Gruppe vorzugsweise für eine Gruppe der Formel 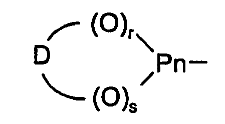 worin
- Pn für P, As oder Sb,: bevorzugt P, steht,
- r und s: unabhängig voneinander für 0 oder 1 stehen, und
- D: zusammen mit dem Phosphoratom und dem/den Sauerstoffatom(en), an die es gebunden ist, für einen 4- bis 8-gliedrigen Heterocyclus steht, der gegebenenfalls ein-, zwei- oder dreifach mit Cycloalkyl, Heterocycloalkyl, Aryl und/oder Hetaryl anelliert ist, wobei die anellierten Gruppen unabhängig voneinander je einen, zwei, drei oder vier Substituenten, ausgewählt unter Alkyl, Alkoxy, Halogen, Sul- fonat, NE⁴E⁵, Alkylen-NE⁴E⁵, Nitro, Cyano und Carboxylat, tragen können und/oder D einen, zwei, drei oder vier Substituenten, die ausgewählt sind unter Alkyl, Hydroxy, Alkoxy, gegebenenfalls substituiertem Cycloalkyl und gegebenen- falls substituiertem Aryl, aufweisen kann und/oder D durch 1, 2 oder 3 gegebe- nenfalls substituierte Heteroatome unterbrochen sein kann.

Der Rest D steht vorzugsweise für eine C₂- bis C₆-Alkylenbrücke, die 1- oder 2-fach mit Aryl anelliert ist und/oder die einen Substituenten, der ausgewählt ist unter Alkyl, gegebenenfalls substituiertem Cycloalkyl und gegebenenfalls substituiertem Aryl, aufweisen kann und/oder die durch ein gegebenenfalls substituiertes Heteroatom unterbrochen sein kann.

Bei den anellierten Arylen der Reste D handelt es sich bevorzugt um Benzol oder Naphthalin. Anellierte Benzolringe sind vorzugsweise unsubstituiert oder weisen 1, 2 oder 3, insbesondere 1 oder 2 Substituenten auf, die vorzugsweise ausgewählt sind unter Alkyl, Alkoxy, Halogen, Sulfonat, NE⁴E⁵, Alkylen-NE⁴E⁵, Trifluormethyl, Nitro, Carboxylat, Alkoxycarbonyl, Acyl und Cyano. Anellierte Naphthaline sind vorzugsweise unsubstituiert oder weisen im nicht anellierten Ring und/oder im anellierten Ring jeweils 1, 2 oder 3, insbesondere 1 oder 2 der zuvor bei den anellierten Benzolringen genannten Substituenten auf. Bei den Substituenten der anellierten Aryle steht Alkyl vorzugsweise für C₁- bis C₄-Alkyl und insbesondere für Methyl, Isopropyl und tert.-Butyl. Alkoxy steht dabei vorzugsweise für C₁- bis C₄-Alkoxy und insbesondere für Methoxy. Alkoxycarbonyl steht vorzugsweise für C₁- bis C₄-Alkoxycarbonyl.

Wenn die C₂- bis C₆-Alkylenbrücke des Restes D durch 1, 2 oder 3, gegebenenfalls substituierte Heteroatome unterbrochen ist, so sind diese vorzugsweise ausgewählt unter O, S oder NR^{h}, wobei R^{h} für Alkyl, Cycloalkyl oder Aryl steht.

Wenn die C₂- bis C₆-Alkylenbrücke des Restes D substituiert ist, so weist sie vorzugsweise 1, 2, 3 oder 4, insbesondere 2 oder 4 Substituenten auf, die ausgewählt sind unter Alkyl, Alkoxy, Hydroxy, Cycloalkyl, Heterocycloalkyl, Aryl und Hetaryl, wobei die Cycloalkyl-, Heterocycloalkyl,-, Aryl- und Hetarylsubstituenten jeweils 1, 2 oder 3 der eingangs für diese Reste als geeignet genannten Substituenten tragen können.

Vorzugsweise steht der Rest D für eine C₃- bis C₆-Alkylenbrücke, die wie zuvor beschrieben anelliert und/oder substituiert und/oder durch gegebenenfalls substituierte Heteroatome unterbrochen ist. Insbesondere steht der Rest D für eine C₃- bis C₆-Alkylenbrücke, die ein- oder zweifach mit Phenyl und/oder Naphthyl anelliert ist, wobei die Phenyl- oder Naphthylgruppen 1, 2 oder 3 der zuvor genannten Substituenten tragen können.

Vorzugsweise steht der Rest D zusammen mit dem Phosphoratom und dem/den Sauerstoffatom(en), an die er gebunden ist, für einen 4- bis 8-gliedrigen Heterocyclus, wobei D für einen Rest steht, der ausgewählt ist unter den Resten der Formeln II.1 bis II.4, 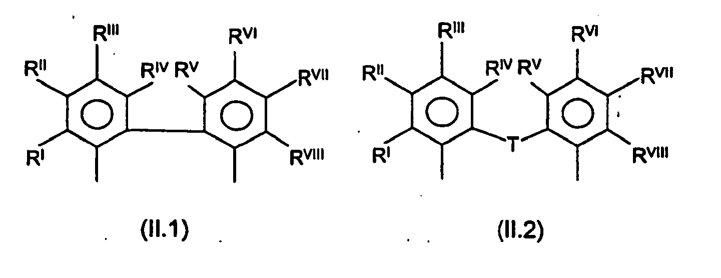 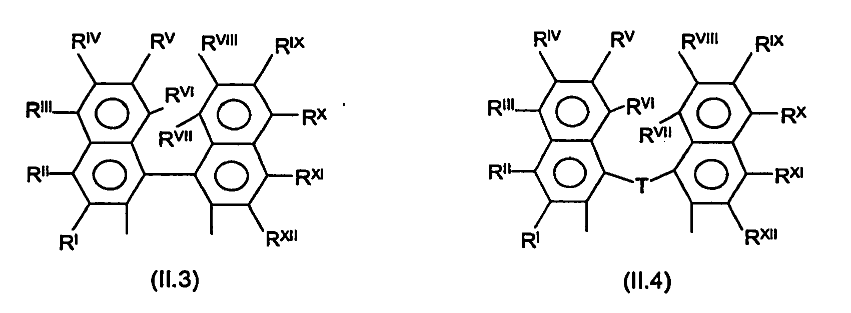 worin
- T: für O, S oder NR^{I} steht, wobei R^{I} für Alkyl, Cycloalkyl oder Aryl steht,
- oder T: für eine C₁- bis C₃-Alkylenbrücke steht, die eine Doppelbindung und/oder einen Alkyl-, Cycloalkyl- oder Arylsubstituenten aufweisen kann, wobei der Arylsubsti- tuent einen, zwei oder drei der für Aryl genannten Substituenten tragen kann,
- oder T: für eine C₂- bis C₃-Alkylenbrücke steht, die durch O, S oder NR^{I} unterbrochen ist,

R^{I}, R^{II}, R^{III}, R^{IV}, R^{V}, R^{VI}, R^{VII}, R^{VIII}, R^{IX}, R^{X}, R^{XI} und R^{XII} unabhängig voneinander für Wasserstoff, Alkyl, Cycloalkyl, Aryl, Alkoxy, Halogen, Sulfonat, NE⁴E⁵, Alkylen-NE⁴E⁵, Trifluormethyl, Nitro, Alkoxycarbonyl oder Cyano stehen.

In einer besonders bevorzugten Ausführungsform sind in den Gruppen der allgemeinen Formel I.3 die Reste R¹ und R² so miteinander verbrückt, dass die phosphoratomhaltige Gruppe der Formel 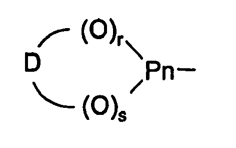 für einen chiralen Heterocyclus steht. Vorzugsweise sind die verbrückenden Gruppen D dann ausgewählt unter Gruppen der Formeln II.1 und II.3, worin
- R^{I}, R^{II}, R^{III}, R^{IV}, R^{V}, R^{VI},:
- R^{VII}, R^{VIII}, R^{IX}, R^{X}, R^{XI} und R^{XII}: unabhängig voneinander für Wasserstoff, Alkyl, Cycloalkyl, Heterocycloalkyl, Aryl, Hetaryl, Hydroxy, Thiol, Po- lyalkylenoxid, Polyalkylenimin, Alkoxy, Halogen, SO₃H, Sulfonat, NE⁴E⁶, Alkylen- NE⁴E⁵, Trifluormethyl, Nitro, Alkoxycarbonyl, Carboxyl, Acyl oder Cyano stehen, worin E⁴ und E⁵ jeweils gleiche oder verschiedene Reste, ausgewählt unter Was- serstoff, Alkyl, Cycloalkyl und Aryl bedeuten.

Des Weiteren bevorzugt steht Y für eine Gruppe der Formel II.1, worin R^{IV} und R^{V} unabhängig voneinander für C₁-C₄-Alkyl oder C₁-C₄-Alkoxy stehen. Vorzugsweise sind R^{IV} und R^{V} ausgewählt unter Methyl, Ethyl, Isopropyl, tert.-Butyl und Methoxy. Bevorzugt stehen in diesen Verbindungen R^{I}, R^{II}, R^{III}, R^{VI}, R^{VII} und R^{VIII} für Wasserstoff.

Des Weiteren bevorzugt steht Y für eine Gruppe der Formel II.1, worin R^{I} und R^{VIII} unabhängig voneinander für C₁-C₄-Alkyl oder C₁-C₄-Alkoxy stehen. Besonders bevorzugt stehen R^{I} und R^{VIII} für tert.-Butyl. Besonders bevorzugt stehen in diesen Verbindungen R^{II}, R^{III}, R^{IV}, R^{V}, R^{VI}, R^{VII} für Wasserstoff. Des Weiteren bevorzugt stehen in diesen Verbindungen R^{III} und R^{VI} unabhängig voneinander für C₁-C₄-Alkyl oder C₁-C₄-Alkoxy. Besonders bevorzugt sind R^{III} und R^{VI} unabhängig voneinander ausgewählt unter Methyl, Ethyl, Isopropyl, tert.-Butyl und Methoxy.

Des Weiteren bevorzugt steht Y für eine Gruppe der Formel II.1, worin R^{II} und R^{VII} für Wasserstoff stehen. Bevorzugt stehen in diesen Verbindungen R^{I}, R^{III}, R^{IV}, R^{V}, R^{VI} und R^{VIII} unabhängig voneinander für C₁-C₄-Alkyl oder C₁-C₄-Alkoxy. Besonders bevorzugt sind R^{I}, R^{III}, R^{IV}, R^{V}, R^{VI} und R^{VIII} unabhängig voneinander ausgewählt unter Methyl, Ethyl, Isopropyl, tert.-Butyl und Methoxy.

Weiterhin bevorzugt steht Y für eine Gruppe der Formel II.3, worin R^{I} bis R^{XII} für Wasserstoff stehen.

Weiterhin bevorzugt steht Y für eine Gruppe der Formel II.3, worin R^{I} und R^{XII} unabhängig voneinander für C₁-C₄-Alkyl oder C₁-C₄-Alkoxy stehen. Insbesondere sind R^{I} und R^{XII} unabhängig voneinander ausgewählt unter Methyl, Ethyl, Isopropyl, tert.-Butyl, Methoxy und Alkoxycarbonyl, bevorzugt Methoxycarbonyl. Besonders bevorzugt stehen in diesen Verbindungen die Reste R^{II} bis R^{XI} für Wasserstoff.

Zu bevorzugten chiralen Gruppen der allgemeinen Formel I.3 zählen z. B. (2R, 3S, 4R, 5S)-2,5-Dimethyl-3,4-dihydroxyphospholano- und (2S, 3R, 4S, 5R)-2,5-Dimethyl-3,4-dihydroxyphospholanogruppen sowie (R)-1,1'-Binaphthylen-2,2'-diyldioxyphosphino-, (S)-1,1'-Binaphthylen-2,2'-diyldioxyphosphino-, (S)-1,1'-Biphenylen-2,2'-diyldioxyphosphino- und (S)-1,1'-Biphenylen-2,2'-diyldioxyphosphinogruppen, die unsubstituiert oder, wie zuvor beschrieben, substituiert sein können.

Bevorzugt weist wenigstens einer der erfindungsgemäß eingesetzten Liganden eine zur Tautomerie und zur Ausbildung intermolekularer nichtkovalenter Bindungen befähigte funktionelle Gruppe auf. Diese ist vorzugsweise ausgewählt unter Gruppen der Formel 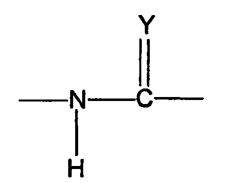 und den Tautomeren davon, worin Y für O, S oder NR⁴ steht, wobei R⁴ für Wasserstoff, Alkyl, Cycloalkyl, Heterocycloalkyl, Aryl oder Hetaryl steht.

Die Lage des jeweiligen Tautomeriegleichgewichts ist unter anderem abhängig von der Gruppe Y sowie den Substituenten an der zur Tautomerie befähigten Gruppe. Sie werden im Folgenden beispielhaft für die Keto-Enol-Tautomerie und die Imin-Enamin-Tautomerie dargestellt:

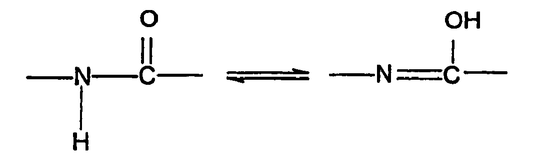

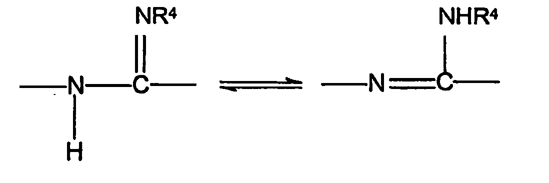

Vorzugsweise weisen die erfindungsgemäß eingesetzten Liganden wenigstens ein Strukturelement der allgemeinen Formeln I.a oder I.b 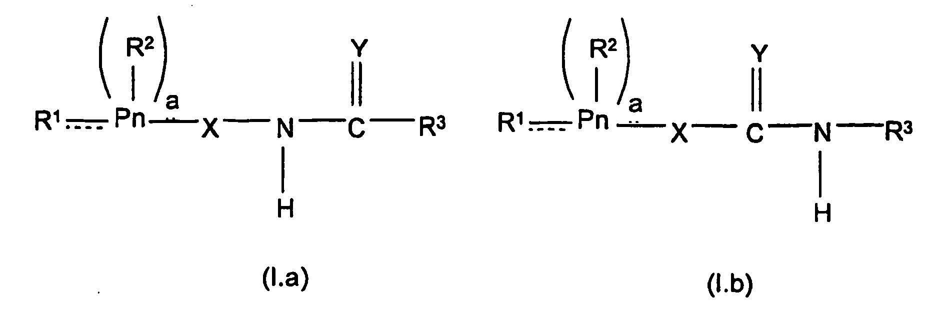 oder Tautomeren davon auf, worin
- Pn, R¹, R² und a: wie zuvor definiert sind,
- R³: für Wasserstoff, Alkyl, Alkoxy, Cycloalkyl, Cycloalkoxy, Heterocycloalkyl, Hetero- cycloalkoxy, Aryl, Aryloxy, Hetaryl oder Hetaryloxy steht,
- X: für eine zweiwertige verbrückende Gruppe mit 1 bis 5 Brückenatomen zwischen den flankierenden Bindungen steht,
- Y: für O, S oder NR⁴ steht, wobei R⁴ für Wasserstoff, Alkyl, Cycloalkyl, Heterocyclo- alkyl, Aryl oder Hetaryl steht,
wobei zwei oder mehr als zwei der Reste X und R¹ bis R⁴ gemeinsam mit dem Strukturelement der Formel I.a oder I.b, an das sie gebunden sind, für eine mono- oder polycyclische Verbindung stehen können.

Bezüglich geeigneter und bevorzugter Reste R¹ und R² wird auf die vorherigen Ausführungen Bezug genommen.

Bevorzugt steht in den Verbindungen der Formeln I.a und I.b Pn für N, P, As oder Sb, besonders bevorzugt für P, As oder Sb und insbesondere für P.

Bevorzugt weist die zweiwertige verbrückende Gruppe X in den Verbindungen der Formeln I.a und I.b 1 bis 4, besonders bevorzugt 1 bis 3 Brückenatome zwischen den flankierenden Bindungen auf.

Bevorzugt steht die zweiwertige verbrückende Gruppe X für eine C₁-C₅-Alkylen-Brücke, die, abhängig von der Anzahl der Brückenatome, eine oder zwei Doppelbindungen und/oder einen, zwei, drei oder vier Substituenten, die ausgewählt sind unter Alkyl, Cycloalkyl, Heterocycloalkyl, Aryl, Hetaryl, Carboxylat, Sulfonat, Phosphonat, NE¹E² (E¹, E² = Wasserstoff, Alkyl, Cycloalkyl, Acyl oder Aryl), Hydroxy, Thiol, Halogen, Nitro, Acyl oder Cyano, aufweisen kann, wobei die Cycloalkyl-, Aryl- und HetarylSubstituenten zusätzlichen einen, zwei oder drei Substituenten, die ausgewählt sind unter Alkyl, Alkoxy, Halogen, Trifluormethyl, Nitro, Alkoxycarbonyl oder Cyano, tragen können und/oder ein oder zwei nichtbenachbarte Brückenatome der C₁-C₅-Alkylen-Brücke X durch ein Heteroatom oder eine Heteroatom-haltige Gruppe ersetzt sein können und/oder die Alkylen-Brücke X ein- oder zweifach mit Aryl und/oder Hetaryl anelliert sein kann, wobei die anellierten Aryl- und Hetarylgruppen je einen, zwei oder drei Substituenten, die ausgewählt sind unter Alkyl, Cycloalkyl, Aryl, Alkoxy, Cycloalkoxy, Aryloxy, Acyl, Halogen, Trifluormethyl, Nitro, Cyano, Carboxyl, Alkoxycarbonyl oder NE¹E² (E¹ und E² = Wasserstoff, Alkyl, Cycloalkyl, Acyl oder Aryl) tragen können und/oder zwei oder mehr als zwei Brückenatome der C₁-C₆-Alkylen-Brücke X gemeinsam mit dem Strukturelement der Formel I.a oder I.b, an das sie gebunden sind, für eine mono- oder polycyclische Verbindung stehen können.

Bevorzugt steht X für eine C₁-C₅-Alkylen-Brücke, die eine oder zwei Doppelbindungen aufweisen kann. Des Weiteren bevorzugt können zwei oder mehr als zwei der Brückenatome der Brücke X gemeinsam mit dem Strukturelement der Formel I.a oder I.b, an das sie gebunden sind, für eine mono- oder polycyclische Verbindung stehen.

Vorzugsweise weisen die erfindungsgemäß eingesetzten Liganden wenigstens ein Strukturelement der allgemeinen Formeln I.a oder I.b auf, worin die Gruppe X und der Rest R³ gemeinsam mit der Gruppe -NH-C(=Y)-, an die sie gebunden sind, für einen 5- bis 8-gliedrigen, vorzugsweise 6-gliedrigen Ring stehen. Dieser Ring kann eine, zwei oder drei Doppelbindungen aufweisen, wobei eine dieser Doppelbindungen auf der tautomeren Gruppe -N=C(YH)- beruhen kann. Bevorzugt sind 6-gliedrige Ringe, die unter Berücksichtigung der Tautomerie drei Doppelbindungen aufweisen. Derartige Ringsysteme, bei denen eines der Tautomeren ein aromatisches Ringsystem ausbilden kann, sind besonders stabil. Die genannten Ringe können unsubstituiert sein oder einen, zwei, drei, vier oder fünf der zuvor genannten Substituenten aufweisen. Diese sind vorzugsweise ausgewählt unter C₁-C₄-Alkyl, besonders bevorzugt Methyl, Ethyl, Isopropyl oder tert.-Butyl, C₁-C₄-Alkoxy, speziell Methoxy, Ethoxy, Isopropyloxy oder tert.-Butyloxy, sowie Aryl, vorzugsweise Phenyl. In einer geeigneten Ausführungsform weisen die genannten Ringe wenigstens eine Doppelbindung auf, wobei die an diese Doppelbindung gebundenen Reste für ein kondensiertes Ringsystem mit 1, 2 oder 3 weiteren Ringen steht. Dabei handelt es sich bevorzugt um Benzol oder Naphthalinringe. Anellierte Benzolringe sind vorzugsweise unsubstituiert oder weisen 1, 2 oder 3 Substituenten auf, die ausgewählt sind unter Alkyl, Hydroxy, Alkoxy, Carboxylat, Sulfonat, Halogen, NE¹E², Trifluormethyl, Nitro, Alkoxycarbonyl, Acyl und Cyano. Anellierte Naphthalinringe sind vorzugsweise unsubstituiert oder weisen im nichtanellierten und/oder im anellierten Ring je 1, 2 oder 3 der zuvor bei den anellierten Benzolringen genannten Substituenten auf.

Vorzugsweise sind die erfindungsgemäß eingesetzten Liganden ausgewählt unter Verbindungen der allgemeinen Formeln I.A bis I.C 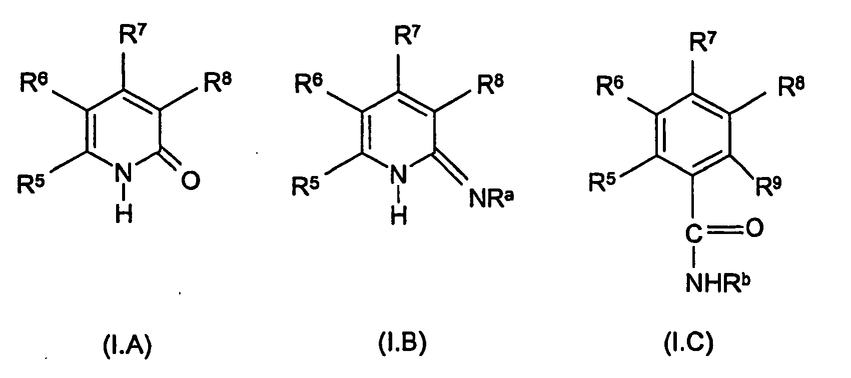 und den Tautomeren davon, worin
einer der Reste R⁵ bis R⁹ für eine pnicogen- oder pseudopnicogenatomhaltige Gruppe, wie zuvor definiert, steht,
die Reste R⁵ bis R⁹, die nicht für eine pnicogen- oder pseudopnicogenatomhaltige Gruppe stehen, unabhängig voneinander für Wasserstoff, Alkyl, Cycloalkyl, Heterocycloalkyl, Aryl, Hetaryl, WCOOR^{o}, WCOO⁻M⁺, W(SO₃)R^{o}, W(SO₃)⁻M⁺, WPO₃(R^{o})(R^{p}), W(PO₃)²⁻(M⁺)₂, WNE¹E², W(NE¹E²E³)⁺X⁻, WOR^{q}, WSR^{q}, (CHR^{r}CH₂O)ₓR^{q}, (CH₂NE¹)ₓR^{q}, (CH₂CH₂NE¹)ₓR^{q}, Halogen, Nitro, Acyl oder Cyano stehen,
worin
- W: für eine Einfachbindung, ein Heteroatom, eine heteroatomhaltige Gruppe oder eine zweiwertige verbrückende Gruppe mit 1 bis 20 Brückenatomen steht,
- R^{o} und R^{p}: jeweils gleiche oder verschiedene Reste, ausgewählt unter Alkyl, Cycloalkyl, Acyl oder Aryl bedeuten,
- R^{q}, E¹, E², E³: jeweils gleiche oder verschiedene Reste, ausgewählt unter Wasserstoff, Alkyl, Cycloalkyl, Acyl oder Aryl bedeuten,
- R^{r}: für Wasserstoff, Methyl oder Ethyl steht,
- M⁺: für ein Kationäquivalent steht,
- X⁻: für ein Anionäquivalent steht und
- x: für eine ganze Zahl von 1 bis 240 steht,
wobei zwei vicinale Reste R⁵ bis R⁹ auch für ein kondensiertes Ringsystem stehen können, und
R^{a} und R^{b} für Wasserstoff, Alkyl, Cycloalkyl, Heterocycloalkyl, Aryl oder Hetaryl stehen, wobei R^{a} auch für Acyl stehen kann.

Geeignete pnicogen- oder pseudopnicogenatomhaltige Gruppen der Verbindungen (I.A) bis (I.C) sind die zuvor genannten Gruppen I.1, I.2 und I.3. Auf geeignete und bevorzugte Ausführungen dieser Gruppen wird Bezug genommen.

Bevorzugt sind die pnicogen- oder pseudopnicogenatomhaltigen Gruppen der Verbindungen (I.A) bis (I.C) ausgewählt unter Gruppen der Formel-W'-PnR¹R², worin
- Pn: für N, P, As oder Sb, insbesondere für P, As oder Sb, speziell für P steht,
- W': für eine Einfachbindung, ein Heteroatom, eine heteroatomhaltige Gruppe oder eine zweiwertige verbrückende Gruppe mit 1 bis 4 Brückenatomen zwischen den flankierenden Bindungen steht,
- R¹ und R²: wie zuvor definiert sind.

Wenn in den Verbindungen der Formeln I.A bis I.C zwei vicinale Reste, ausgewählt unter den Resten R⁵ bis R⁹, die nicht für eine pnicogen- oder pseudopnicogenatomhaltige Gruppe stehen, für ein kondensiertes Ringsystem stehen, so handelt es sich vorzugsweise um die Reste R⁷ und R⁸. Bevorzugt handelt es sich bei den ankondensierten Ringen um Benzol- oder Naphthalinringe.

Anellierte Benzolringe sind vorzugsweise unsubstituiert oder weisen 1, 2 oder 3 Substituenten auf, die vorzugsweise ausgewählt sind unter Alkyl, Hydroxy, Alkoxy, Carboxylat, Sulfonat, Halogen, NE¹E², Trifluormethyl, Nitro, Alkoxycarbonyl, Acyl und Cyano. Anellierte Naphthalinringe sind vorzugsweise unsubstituiert oder weisen im nichtanellierten und/oder im anellierten Ring je 1, 2 oder 3 der zuvor bei den anellierten Benzolringen genannten Substituenten auf.

Wenn in den Verbindungen der Formel I.B der Rest R^{a} für Acyl steht, so sind diese Acylreste vorzugsweise ausgewählt unter Resten der Formel -C(=O)-R^{k} worin R^{k} für Wasserstoff, Alkyl, Cycloalkyl, Aryl oder Hetaryl steht. Bevorzugt steht R^{k} für C₁-C₄-Alkyl, insbesondere Methyl, Ethyl, n-Propyl, Isopropyl, n-Butyl und tert.-Butyl. Ein bevorzugter Acylrest R^{a} ist der Pivaloylrest.

Die Verbindungen der Formeln I.A bis I.C eignen sich unabhängig von ihrer Befähigung zur Ausbildung intermolekularer, nichtkovalenter Bindungen als Liganden in Katalysatoren für asymmetrische Synthesen. Gegenstand der Erfindung ist daher auch Verfahren zur Herstellung chiraler Verbindungen durch Umsetzung einer prochiralen Verbindung, die wenigstens eine ethylenisch ungesättigte Doppelbindung enthält, mit einem Substrat in Gegenwart eines chiralen Katalysators, umfassend wenigstens einen Übergangsmetallkomplex mit Liganden, die ausgewählt sind unter Verbindungen der allgemeinen Formeln I.A bis I.C, wie zuvor definiert.

Vorzugsweise sind die erfindungsgemäß eingesetzten Liganden ausgewählt unter Verbindungen der allgemeinen Formeln I.i bis I.iii 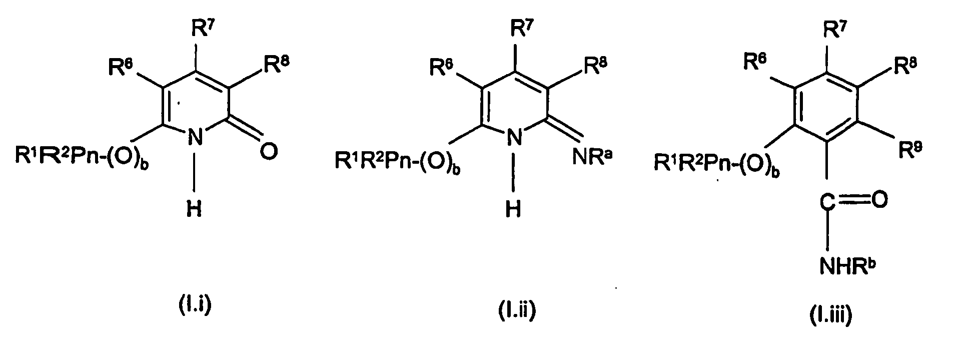 und den Tautomeren davon, worin
b für 0 oder 1 steht,
Pn für pnicogen- oder pseudopnicogenatomhaltige Gruppen, bevorzugt für N, P, As oder Sb, insbesondere für P, As oder Sb, speziell für P, steht,
R¹ und R² wie zuvor definiert sind,
R⁶ bis R⁹ unabhängig voneinander für Wasserstoff, C₁-C₄-Alkyl, C₁-C₄-Alkoxy, Aryl, Heteroaryl, Acyl, Halogen, C₁-C₄-Alkoxycarbonyl oder Carboxylat stehen,
wobei zwei vicinale Reste R⁶ bis R⁹ auch für ein kondensiertes Ringsystem stehen können, und
R^{a} und R^{b} für Wasserstoff, Alkyl, Cycloalkyl oder Aryl stehen, wobei R^{a} auch für Acyl stehen kann.

Bevorzugt stehen in den Verbindungen der Formeln I.i bis I.iii die Reste R¹und R² unabhängig voneinander für C₁-C₈-Alky, wie Methyl, Ethyl, Isopropyl und tert.-Butyl, C₅-C₈-Cycloalkyl, wie Cyclohexyl, oder Aryl, wie Phenyl. Bevorzugt stehen die Reste R¹ und R² beide für Aryl. Speziell steht einer der Reste R¹ und R² für Phenyl und der andere für Naphthyl oder R¹ und R²stehen beide für Phenyl oder R¹ und R² stehen beide für Naphthyl. Bevorzugte Naphthylreste sind 1-Naphthylreste.

Des Weiteren bevorzugt sind Verbindungen der Formeln I.i bis I.iii, worin die Reste R¹ und R² so miteinander verbrückt sind, dass sie für eine pnicogenhaltige Gruppe der Formel 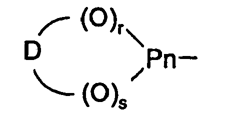 stehen, worin Pn, D, r und s die zuvor angegebenen Bedeutungen besitzen.

In einer speziellen Ausführung handelt es sich bei der pnicogenhaltigen Gruppe um eine chirale pnicogenhaltige Gruppe, wie zuvor beschrieben. Auf die Ausführungen zu den Gruppen II.1 und II.3 wird Bezug genommen.

Vorzugsweise sind in den Verbindungen I.i bis I.iii die Reste R⁶, R⁷, R⁸ und R⁹ unabhängig voneinander ausgewählt unter Wasserstoff, C₁-C₄-Alkyl, C₁-C₄-Alkoxy, Aryl, Heteroaryl, Carboxylat, Sulfonat, NE¹E², Halogen, Trifluormethyl, Nitro, Alkoxycarbonyl, Acyl und Cyano. Bevorzugt stehen R⁶, R⁷, R⁸ und R⁹ für Wasserstoff, Aryl oder Heteroaryl.

Des Weiteren bevorzugt stehen in den Verbindungen I.i bis I.iii die Reste R⁷ und R⁸ für ein ankondensiertes Ringsystem.

Bevorzugt steht in der Verbindung der Formel I.ii der Rest R^{a} für Wasserstoff, C₁-C₈-Alkyl, C₅-C₈-Cycloalkyl oder C₆-C₁₀-Aryl. Des Weiteren bevorzugt steht in der Formel I.ii der Rest R^{a} für Acyl, wie zuvor definiert. Insbesondere steht R^{a} für-C(=O)-R^{k} mit R^{k} = C₁-C₄-Alkyl, insbesondere tert.-Butyl.

Bevorzugt steht in den Verbindungen der Formel I.iii der Rest R^{b} für Wasserstoff, C₁-C₈-Alkyl, C₅-C₈-Cycloalkyl oder C₆-C₁₀-Aryl oder Hetaryl.

Ein bevorzugter Ligand der Formel I.i ist 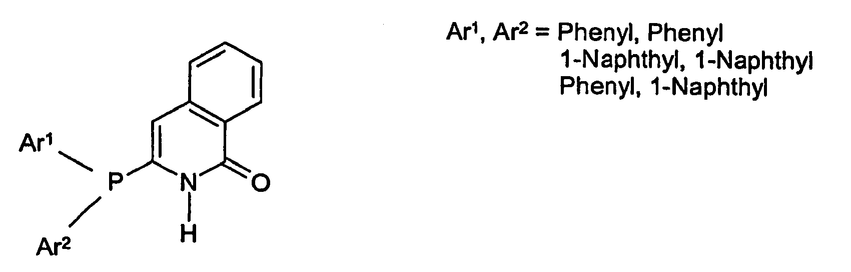 und die Tautomeren davon.

Bevorzugte Liganden der Formel I.ii sind 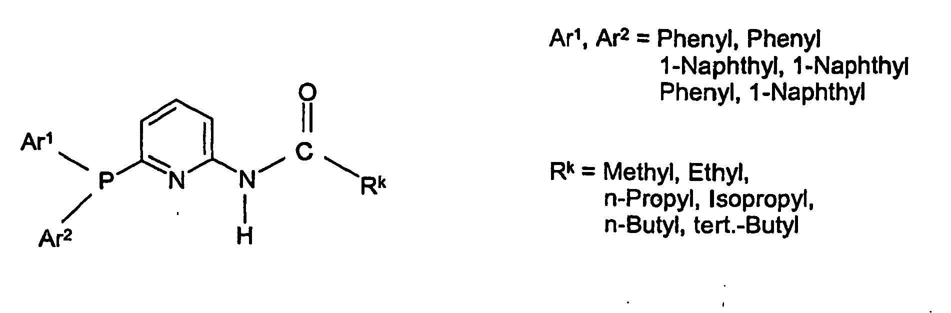 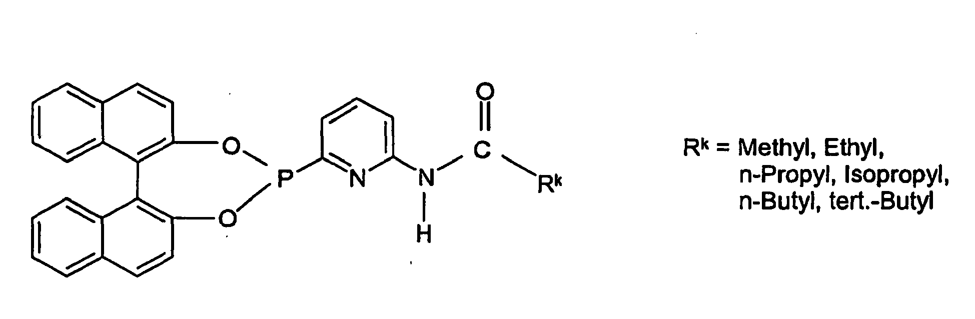 und die Tautomeren davon.

Bei dem erfindungsgemäßen und erfindungsgemäß eingesetzten Ligand/Ligand-Paaren kann es sich um Paare gleicher oder verschiedener Liganden handeln.

Beispielhaft für erfindungsgemäß einsetzbare Liganden sind die folgenden Strukturen: 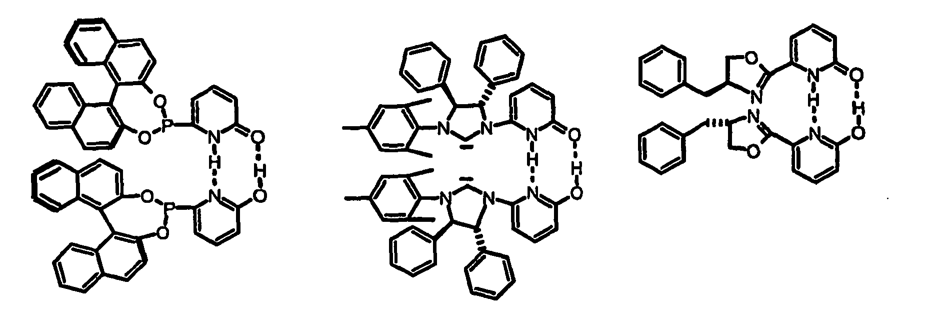 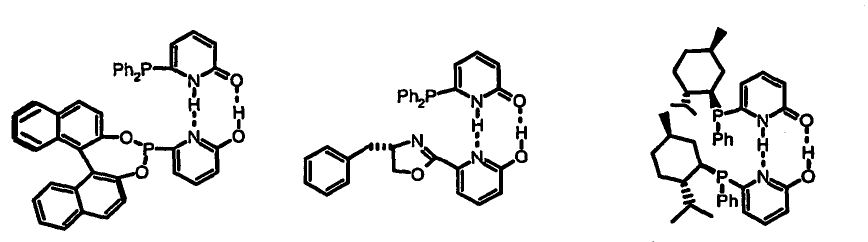 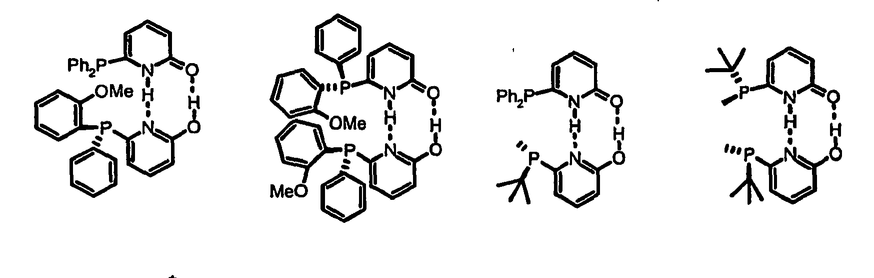 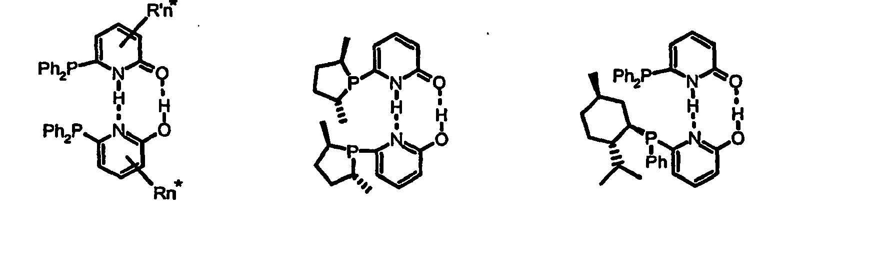 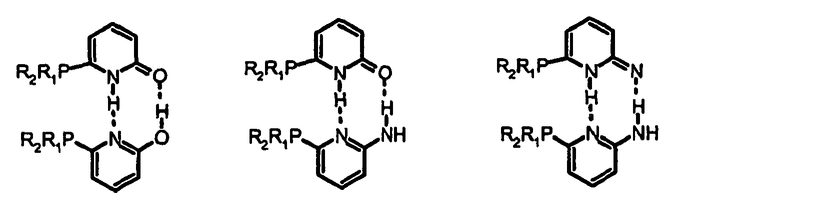 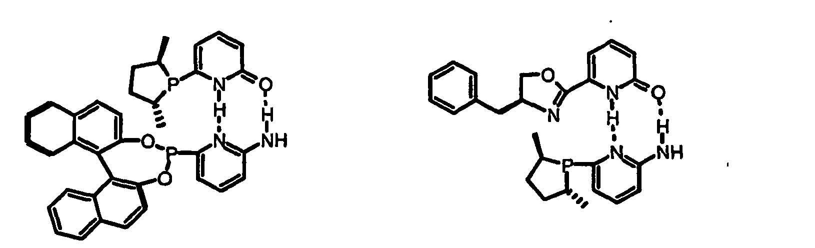 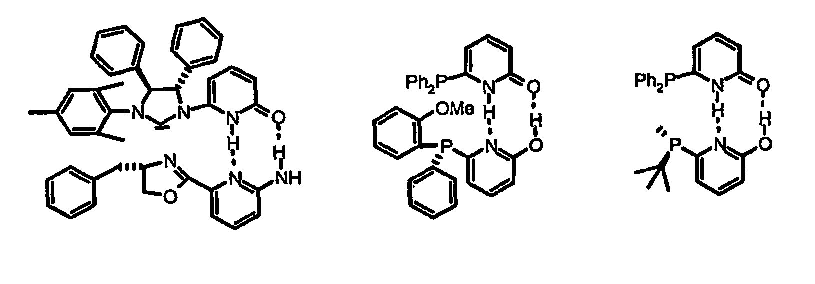 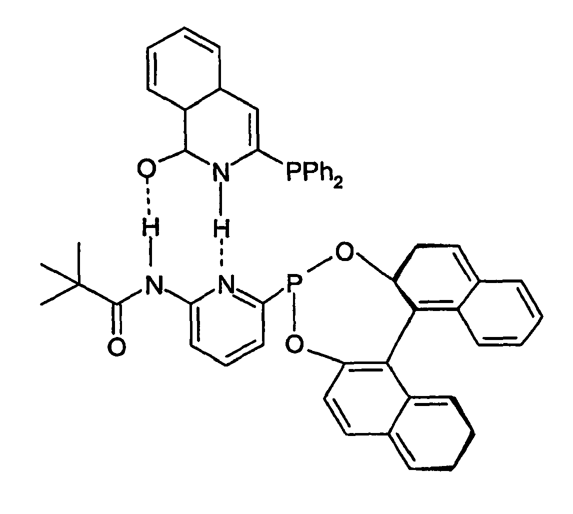 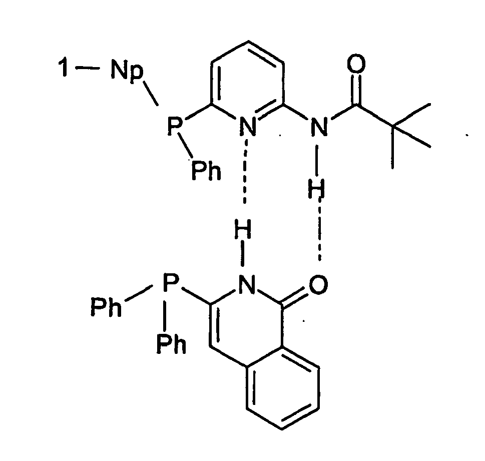 Beispielhaft für erfindungsgemäß bevorzugt einsetzbare Liganden seien
6-[(R)-1,1'-Binaphthylen-2,2'-diyldioxyphosphino]-1-H-pyridin-2-on,
6-[(S)-1,1'-Binaphthylen-2,2'-diyldioxyphosphino]-1-H-pyridin-2-on, und
6-(3,5-Dioxa-4-phosphacyclohepta[2,1-a,3,4-a]dinaphthalen-4-yloxy)-1H-pyridin-2-on genannt.

Die Herstellung von erfindungsgemäß einsetzbaren Liganden kann nach üblichen, dem Fachmann bekannten Verfahren erfolgen.

Ein weiterer Gegenstand der Erfindung ist ein chiraler Katalysator, wie zuvor beschrieben. Auf die vorherigen Ausführungen zu geeigneten und bevorzugten Liganden wird vollständig Bezug genommen.

Die erfindungsgemäßen und erfindungsgemäß eingesetzten chiralen Katalysatoren weisen vorzugsweise zwei oder mehr als zwei der zuvor beschriebenen Verbindungen als Liganden auf. Dabei liegen bevorzugt wenigstens zwei der Liganden in dimerisierter Form (als Ligand/Ligand-Paare) vor. Bei den Ligand/Ligand-Paaren kann es sich dabei um gleiche oder verschiedene Liganden handeln. Zusätzlich zu den zuvor beschriebenen Liganden können Sie noch wenigstens einen weiteren Liganden, der vorzugsweise ausgewählt ist unter Halogeniden, Aminen, Carboxylaten, Acetylacetonat, Aryl- oder Alkylsulfonaten, Hydrid, CO, Olefinen, Dienen, Cycloolefinen; Nitrilen, N-haltigen Heterocyclen, Aromaten und Heteroaromaten, Ethern, PF₃, Phospholen, Phosphabenzolen sowie ein-, zwei- und mehrzähnigen Phosphin-, Phosphinit-, Phosphonit-, Phosphoramidit- und Phosphitliganden aufweisen.

Bevorzugt handelt es sich bei dem Übergangsmetall um ein Metall der I:, VI., VII. oder VIII. Nebengruppe des Periodensystems der Elemente. Besonders bevorzugt ist das Übergangsmetall ausgewählt unter den Metallen der VIII. Nebengruppe (d.h. Fe, Co, Ni, Ru, Rh, Pd, Os, Ir, Pt). Insbesondere handelt es sich bei dem Übergangsmetall um Iridium, Nickel, Ruthenium, Rhodium, Palladium oder Platin.

Die vorliegende Erfindung betrifft ganz allgemein Verfahren zur Herstellung chiraler Verbindungen durch Umsetzung einer prochiralen Verbindung, die wenigstens eine ethylenisch ungesättigte Doppelbindung enthält, mit einem Substrat in Gegenwart eines chiralen Katalysators, wie zuvor beschrieben. Dabei ist es lediglich erforderlich, dass wenigstens einer der eingesetzten Liganden oder die katalytisch aktive Spezies insgesamt chiral ist. Im Allgemeinen werden unter den Reaktionsbedingungen der einzelnen Verfahren zur Herstellung chiraler Verbindungen bestimmte Übergangsmetallkomplexe als katalytisch aktive Spezies gebildet. So werden beispielsweise unter Hydroformylierungsbedingungen aus den jeweils eingesetzten Katalysatoren oder Katalysatorvorstufen katalytisch aktive Spezies der allgemeinen Formel HₓM_{y}(CO)_{z}L_{q} gebildet, worin M für ein Übergangsmetall, L für eine pnicogenatomhaltige Verbindung und q, x, y, z für ganze Zahlen, abhängig von der Wertigkeit und Art des Metalls sowie der Bindigkeit des Liganden L, stehen. Vorzugsweise stehen z und q unabhängig voneinander mindestens für einen Wert von 1, wie z. B. 1, 2 oder 3. Die Summe aus z und q steht bevorzugt für einen Wert von 1 bis 5. Dabei können die Komplexe gewünschtenfalls zusätzlich noch mindestens einen der zuvor beschriebenen weiteren Liganden aufweisen. Es besteht Grund zu der Annahme, dass auch die jeweils katalytisch aktive Spezies dimerisierte Liganden (Pseudochelate) aufweist.

Die katalytisch aktive Spezies liegt vorzugsweise als homogen einphasige Lösung in einem geeigneten Lösungsmittel vor. Diese Lösung kann zusätzlich freien Liganden enthalten.

Bevorzugt handelt es sich bei dem erfindungsgemäßen Verfahren zur Herstellung chiraler Verbindungen um eine Hydrierung, Hydroformylierung, Hydrocyanierung, Carbonylierung, Hydroacylierung (intramolekular und intermolekular), Hydroamidierung, Hydroveresterung, Hydrosilylierung, Hydroborierung, Aminolyse (Hydroaminierung), Alkoholyse (Hydroxy-Alkoxy-Addition), Isomerisierung, Transferhydrierung, Metathese, Cyclopropanierung, Aldolkondensation, allylische Alkylierung oder eine [4+2]-Cycloaddition (Diels-Alder-Reaktion).

Besonders bevorzugt handelt es sich bei dem erfindungsgemäßen Verfahren zur Herstellung chiraler Verbindungen um eine 1,2-Addition, insbesondere eine Hydrierung oder eine 1-Hydro-2-Carbo-Addition. Im Rahmen dieser Erfindung bedeutet 1,2-Addition, dass eine Addition an die beiden benachbarten Atome einer C=X-Doppelbindung (X = C, Heteroatom) erfolgt. 1-Hydro-2-Carbo-Addition bezeichnet eine Additionsreaktion, bei der nach der Reaktion an ein Atom der Doppelbindung Wasser stoff und an das andere eine kohlenstoffatomhaltige Gruppe gebunden ist. Doppelbindungsisomerisierungen während der Addition sind dabei zugelassen. Im Rahmen dieser Erfindung soll mit 1-Hydro-2-Carbo-Addition bei unsymmetrischen Substraten nicht auch eine bevorzugte Addition des Kohlenstofffragmentes an das C2-Atom bezeichnet werden, da die Selektivität bezüglich der Orientierung der Addition in der Regel von dem zu addierenden Agens und dem eingesetzten Katalysator abhängig ist. "1-Hydro-2-Carbo-" ist insofern gleichbedeutend mit "1-Carbo-2-Hydro-".

Die Reaktionsbedingungen der erfindungsgemäßen Verfahren zur Herstellung chiraler Verbindungen entsprechen, bis auf den eingesetzten chiralen Katalysator, in der Regel denen der entsprechenden asymmetrischen Verfahren. Geeignete Reaktoren und Reaktionsbedingungen kann der Fachmann somit der einschlägigen Literatur zu dem jeweiligen Verfahren entnehmen und routinemäßig anpassen. Geeignete Reaktionstemperaturen liegen im Allgemeinen in einem Bereich von -100 bis 500 °C, vorzugsweise in einem Bereich von -80 bis 250 °C. Geeignete Reaktionsdrücke liegen im Allgemeinen in einem Bereich von 0,0001 bis 600 bar, bevorzugt von 0,5 bis 300 bar. Die Verfahren können im Allgemeinen kontinuierlich, semikontinuierlich oder diskontinuierlich erfolgen. Geeignete Reaktoren für die kontinuierliche Umsetzung sind dem Fachmann bekannt und werden z. B. in Ullmanns Enzyklopädie der technischen Chemie, Bd. 1, 3. Aufl., 1951, S. 743 ff. beschrieben. Geeignete druckfeste Reaktoren sind dem Fachmann ebenfalls bekannt und werden z. B. in Ullmanns Enzyklopädie der technischen Chemie, Bd. 1, 3. Auflage, 1951, S. 769 ff. beschrieben.

Die erfindungsgemäßen Verfahren können in einem geeigneten, unter den jeweiligen Reaktionsbedingungen inerten Lösungsmittel durchgeführt werden. In der Regel geeignete Lösungsmittel sind z. B. Aromaten, wie Toluol und Xylole, Kohlenwasserstoffe oder Gemische von Kohlenwasserstoffen. Weiterhin geeignet sind halogenierte, insbesondere chlorierte Kohlenwasserstoffe, wie Dichlormethan, Chloroform oder 1,2-Dichlorethan. Weitere Lösungsmittel sind Ester aliphatischer Carbonsäuren mit Alkanolen, beispielsweise Essigester oder Texanol®, Ether wie tert.-Butylmethylether, Dioxan-1,4 und Tetrahydrofuran sowie Dimethylformamid. Bei ausreichend hydrophilisierten Liganden können auch Alkohole, wie Methanol, Ethanol, n-Propanol, Isopropanol, n-Butanol, Isobutanol, Ketone, wie Aceton und Methylethylketon, etc., eingesetzt werden. Ferner können als Lösungsmittel auch so genannte "ionische Flüssigkeiten" verwendet werden. Hierbei handelt es sich um flüssige Salze, beispielsweise um N,N'-Dialkylimidazoliumsalze wie die N-Butyl-N'-methylimidazoliumsalze, Tetraalkylammoniumsalze wie die Tetra-n-butylammoniumsalze, N-Alkylpyridiniumsalze wie die n-Butylpyridiniumsalze, Tetraalkylphosphoniumsalze wie die Trishexyl(tetradecyl)phosphoniumsalze, z. B. die Tetrafluoroborate, Acetate, Tetrachloroaluminate, Hexafluorophosphate, Chloride und Tosylate. Als Lösungsmittel kann auch ein Edukt, Produkt oder Nebenprodukt der jeweiligen Reaktion eingesetzt werden.

Als prochirale ethylenisch ungesättigte Verbindungen für das erfindungsgemäße Verfahren kommen prinzipiell alle prochiralen Verbindungen in Betracht, welche eine oder mehrere ethylenisch ungesättigte Kohlenstoff-Kohlenstoff- oder Kohlenstoff-Heteroatom-Doppelbindungen enthalten. Dazu zählen allgemein prochirale Olefine (Hydroformylierung, intermolekulare Hydroacylierung, Hydrocyanierung, Hydrosilylierung, Carbonylierung, Hydroamidierung, Hydroveresterung, Aminolyse, Alkoholyse, Cyclopropanierung, Hydroborierung, Diels-Alder-Reaktion, Metathese), unsubstituierte und substituierte Aldehyde (intramolekulare Hydroacylierung, Aldolkondensation, allylische Alkylierung), Ketone (Hydrierung, Hydrosilylierung, Aldolkondensation, Transfer hydrierung, allylische Alkylierung) und Imine (Hydrierung, Hydrosilyllerung, Transferhydrierung, Mannich-Reaktion).

Geeignete prochirale ethylenisch ungesättigte Olefine sind allgemein Verbindungen der Formel 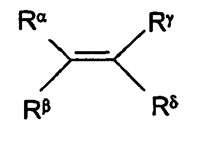 worin R^{α} und R^{β} und/oder E^{γ} und R^{δ} für Reste unterschiedlicher Definition stehen. Es versteht sich von selbst, dass zur erfindungsgemäßen Herstellung chiraler Verbindungen auch die mit der prochiralen ethylenisch ungesättigten Verbindung umgesetzten Substrate sowie unter Umständen auch die Stereoselektivität bezüglich der Anlagerung eines bestimmten Substituenten an ein bestimmtes C-Atom der C-C-Doppelbindung so gewählt werden, das zumindest ein chirales Kohlenstoffatom resultiert.

Vorzugsweise sind R^{α}, R^{β}, R^{γ} und R^{δ} unter Beachtung der vorgenannten Bedingung unabhängig voneinander ausgewählt unter Wasserstoff, Alkyl, Cycloalkyl, Heterocycloalkyl, Aryl, Hetaryl, Alkoxy, Cycloalkoxy, Heterocycloalkoxy, Aryloxy, Hetaryloxy, Hydroxy, Thiol, Polyalkylenoxid, Polyalkylenimin, COOH, Carboxylat, SO₃H, Sulfonat, NE⁷E⁸, NE⁷E⁸E⁹⁺X⁻, Halogen, Nitro, Acyl, Acyloxy oder Cyano, worin E⁷, E⁸ und E⁹ jeweils gleiche oder verschiedene Reste, ausgewählt unter Wasserstoff, Alkyl, Cycloalkyl, oder Aryl bedeuten und X⁻ für ein Anionäquivalent steht,
wobei die Alkylreste 1, 2, 3, 4, 5 oder mehr Substituenten, ausgewählt unter Cycloalkyl, Heterocycloalkyl, Aryl, Hetaryl, Alkoxy, Cycloalkoxy, Heterocycloalkoxy, Aryloxy, Hetaryloxy, Hydroxy, Thiol, Polyalkylenoxid, Polyalkylenimin, COOH, Carboxylat, SO₃H, Sulfonat, NE¹⁰E¹¹, NE¹⁰E¹¹E¹²⁺X⁻, Halogen, Nitro, Acyl, Acyloxy oder Cyano aufweisen können, worin E¹⁰, E¹¹ und E¹² jeweils gleiche oder verschiedene Reste, ausgewählt unter Wasserstoff, Alkyl, Cycloalkyl, oder Aryl bedeuten und X⁻ für ein Anionäquivalent steht,
und wobei die Cycloalkyl-, Heterocycloalkyl-, Aryl- und Hetarylreste R^{α}, R^{β}, R^{γ} und R^{δ} jeweils 1, 2, 3, 4, 5 oder mehr Substituenten aufweisen können, die ausgewählt sind unter Alkyl und den zuvor für die Alkylreste R^{α}, R^{β}, R^{γ} und R^{δ} genannten Substituenten, oder
zwei oder mehr der Reste R^{α}, R^{β}, R^{γ} und R^{δ} zusammen mit der C-C-Doppelbindung, an die sie gebunden sind, für eine mono- oder polycyclische Verbindung stehen.

Geeignete prochirale Olefine sind Olefine mit mindestens 4 Kohlenstoffatomen und endständigen oder innenständigen Doppelbindungen, die geradkettig, verzweigt oder von cyclischer Struktur sind.

Geeignete α-Olefine sind z. B. 1-Buten, 1-Penten, 1-Hexen, 1-Hepten, 1-Octen, 1-Nonen, 1-Decen, 1-Undecen, 1-Dodecen, 1-Octadecen etc.

Geeignete lineare (geradkettige) interne Olefine sind vorzugsweise C₄-C₂₀-Olefine, wie 2-Buten, 2-Penten, 2-Hexen, 3-Hexen, 2-Hepten, 3-Hepten, 2-Octen, 3-Octen, 4-Octen etc.

Geeignete verzweigte, interne Olefine sind vorzugsweise C₄-C₂₀-Olefine, wie 2-Methyl-2-buten, 2-Methyl-2-penten, 3-Methyl-2-penten, verzweigte, interne Hepten-Gemische, verzweigte, interne Octen-Gemische, verzweigte, interne Nonen-Gemische, verzweigte, interne Decen-Gemische, verzweigte, interne Undecen-Gemische, verzweigte, interne Dodecen-Gemische etc.

Geeignete zu hydroformylierende Olefine sind weiterhin C₅-C₈-Cycloalkene, wie Cyclopenten, Cyclohexen, Cyclohepten, Cycloocten und deren Derivate, wie z. B. deren C₁-C₂₀-Alkylderivate mit 1 bis 5 Alkylsubstituenten.

Geeignete zu hydroformylierende Olefine sind weiterhin Vinylaromaten, wie Styrol, α-Methylstyrol, 4-Isobutylstyrol etc., 2-Vinyl-6-methoxynaphthalin, (3-Ethenylphenyl)-phenylketon, (4-Ethenylphenyl)-2-thienylketon, 4-Ethenyl-2-fluorbiphenyl, 4-(1,3-Dihydro-1-oxo-2H-isoindol-2-yl)styrol, 2-Ethenyl-5- benzoylthiophen, (3-Ethenylphenyl)phenylether, Propenylbenzol, 2-Propenylphenol, Isobutyl-4-propenylbenzol, Phenylvinylether und cyclische Enamide, z. B. 2,3-Diydro-1,4-oxazine, wie 2,3-Diydro-4-tert.-Butoxycarbonyl-1,4-oxazin.Geeignete zu hydroformylierende Olefine sind weiterhin α,β-ethylenisch ungesättigte Mono- und/oder Dicarbonsäuren, deren Ester, Halbester und Amide, wie Acrylsäure, Methacrylsäure, Maleinsäure, Fumarsäure, Crotonsäure, Itaconsäure, 3-Pentensäuremethylester, 4-Pentensäuremethylester, Ölsäuremethylester, Acrylsäuremethylester, Methacrylsäuremethylester, ungesättigte Nitrile, wie 3-Pentennitril, 4-Pentennitril, Acrylnitril, Vinylether, wie Vinylmethylether, Vinylethylether, Vinylpropylether etc., Vinylchlorid, Allylchlorid, C₃-C₂₀-Alkenole, -Alkendiole und -Alkadienole, wie Allylalkohol, Hex-1-en-4-ol, Oct-1-en-4-ol, 2,7-Octadienol-1. Geeignete Substrate sind weiterhin Di- oder Polyene mit isolierten oder konjugierten Doppelbindungen. Dazu zählen z. B. 1,3-Butadien, 1,4-Pentadien, 1,5-Hexadien, 1,6-Heptadien, 1,7-Octadien, 1,8-Nonadien, 1 ,9-Decadien, 1,10-Undecadien, 1,11-Dodecadien, 1,12-Tridecadien, 1,13-Tetradecadien, Vinylcyclohexen, Dicyclopentadien, 1,5,9-Cyclooctatrien sowie Butadienhomo- und -copolymere.

Weitere als Synthesebausteine wichtige prochirale ethylenisch ungesättigte Verbindungen sind z. B. p-Isobutylstyrol, 2-Vinyl-6-methoxynaphthalin, (3-Ethenylphenyl)-phenylketon, (4-Ethenylphenyl)-2-thienylketon, 4-Ethenyl-2-fluorbiphenyl, 4-(1,3-Dihydro-1-oxo-2H-isoindol-2-yl)styrol, 2-Ethenyl-5- benzoylthiophen, (3-Ethenylphenyl)phenylether, Propenylbenzol, 2-Propenylphenol, Isobutyl-4-propenylbenzol, Phenylvinylether und cyclische Enamide, z. B. 2,3-Diydro-1,4-oxazine, wie 2,3-Diydro-4-tert.-Butoxycarbonyl-1,4-oxazin.

Die zuvor genannten Olefine können einzeln oder in Form von Gemischen eingesetzt werden.

Nach einer bevorzugten Ausführungsform werden die erfindungsgemäßen und erfindungsgemäß eingesetzten chiralen Katalysatoren in situ in dem für die Reaktion eingesetzten Reaktor hergestellt. Gewünschtenfalls können die erfindungsgemäßen Katalysatoren jedoch auch separat hergestellt und nach üblichen Verfahren isoliert werden. Zur in situ-Herstellung der erfindungsgemäßen Katalysatoren kann man z. B. wenigstens einen erfindungsgemäß eingesetzten Liganden, eine Verbindung oder einen Komplex eines Übergangsmetalls, gegebenenfalls wenigstens einen weiteren zusätzlichen Liganden und gegebenenfalls ein Aktivierungsmittel in einem inerten Lösungsmittel unter den Bedingungen der jeweiligen Reaktion (z. B. unter Hydroformylierungsbedingungen, Hydrocyanierungsbedingungen, etc.) umsetzen. Geeignete Aktivierungsmittel sind z. B. Brönsted-Säuren, Lewis-Säuren, wie z. B. BF₃, AlCl₃, ZnCl₂, und Lewis-Basen.

Als Katalysator-Precursor geeignet sind ganz allgemein Übergangsmetalle, Übergangsmetallverbindungen und Übergangsmetallkomplexe.

Geeignete Rhodiumverbindungen oder -komplexe sind z. B. Rhodium(II)- und Rhodium(III)-salze, wie Rhodium(III)-chlorid, Rhodium(III)-nitrat, Rhodium(III)-sulfat, Kalium-Rhodiumsulfat, Rhodium(II)- bzw. Rhodium(III)-carboxylat, Rhodium(II)- und Rhodium(III)-acetat, Rhodium(III)-oxid, Salze der Rhodium(III)-säure, Trisammonium-hexachlororhodat(III) etc. Weiterhin eignen sich Rhodiumkomplexe, wie Rh₄(CO)₁₂, Rhodiumbiscarbonylacetylacetonat, Acetylacetonatobisethylenrhodium(I) etc.

Ebenfalls geeignet sind Rutheniumsalze oder -verbindungen. Geeignete Rutheniumsalze sind beispielsweise Ruthenium(III)chlorid, Ruthenium(IV)-, Ruthenium(VI)- oder Ruthenium(VIII)oxid, Alkalisalze der Rutheniumsauerstoffsäuren wie K₂RuO₄ oder KRuO₄ oder Komplexverbindungen, wie z. B. RuHCI(CO)(PPh₃)₃, (Ru(p-Cymen)Cl)₂, (Ru(benzol)Cl)₂, (COD)Ru(methallyl)₂, Ru(acac)₃. Auch können die Metallcarbonyle des Rutheniums wie Trisrutheniumdodecacarbonyl oder Hexarutheniumoctadecacarbonyl, oder Mischformen, in denen CO teilweise durch Liganden der Formel PR₃ ersetzt sind, wie Ru(CO)₃(PPh₃)₂, im erfindungsgemäßen Verfahren verwendet werden.

Geeignete Eisenverbindungen sind z. B. Eisen(III)acetat und Eisen(III)nitrat sowie die Carbonylkomplexe des Eisens.

Geeignete Nickelverbindungen sind Nickelfluorid und Nickelsulfat. Ein zur Herstellung eines Nickelkatalysators geeigneter Nickelkomplex ist z. B. Bis(1,5-cyclooctadien)-nickel(0).

Geeignet sind weiterhin Carbonylkomplexe des Iridiums und Osmiums, Osmiumhalogenide, Osmiumoctoat, Palladiumhydride und -halogenide, Platinsäure, Iridiumsulfat, etc.

Die genannten und weitere geeignete Übergangsmetallverbindungen und -komplexe sind im Prinzip bekannt und in der Literatur hinreichend beschrieben oder sie können vom Fachmann analog zu den bereits bekannten Verbindungen hergestellt werden.

Im Allgemeinen liegt die Metallkonzentration im Reaktionsmedium in einem Bereich von etwa 1 bis 10000 ppm. Das Molmengenverhältnis von Monopnicogenligand zu Übergangsmetall liegt im Allgemeinen in einem Bereich von etwa 0,5:1 bis 1000:1, vorzugsweise 1:1 bis 500:1.

Geeignet ist auch der Einsatz von geträgerten Katalysatoren. Die zuvor beschriebenen Katalysatoren können dazu in geeigneter Weise, z. B. durch Anbindung über als Ankergruppen geeignete funktionelle Gruppen, Adsorption, Pfropfung, etc. an einen geeigneten Träger, z. B. aus Glas, Kieselgel, Kunstharzen, Polymeren etc., immobilisiert werden. Sie eignen sich dann auch für einen Einsatz als Festphasenkatalysatoren.

Nach einer ersten bevorzugten Ausführungsform handelt es sich bei dem erfindungsgemäßen Verfahren um eine Hydrierung (1,2-H,H-Addition). So gelangt man durch Umsetzung einer prochiralen Verbindung, die wenigstens eine ethylenisch ungesättigte Doppelbindung enthält, mit Wasserstoff in Gegenwart eines chiralen Katalysators, wie zuvor beschrieben, zu entsprechenden chiralen Verbindungen mit einer Einfachbindung. Aus prochiralen Olefinen gelangt man zu chiralen kohlenstoffhaltigen Verbindungen, aus prochiralen Ketonen zu chiralen Alkoholen und aus prochiralen lminen zu chiralen Aminen.

Nach einer weiteren bevorzugten Ausführungsform handelt es sich bei dem erfindungsgemäßen Verfahren um eine Umsetzung mit Kohlenmonoxid und Wasserstoff, die im Folgenden als Hydroformylierung bezeichnet wird.

Die Hydroformylierung kann in Gegenwart eines der zuvor genannten Lösungsmittel erfolgen.

Das Molmengenverhältnis von Mono(pseudo)pnicogenligand zu Metall der VIII. Nebengruppe liegt im Allgemeinen in einem Bereich von etwa 1:1 bis 1000:1, vorzugsweise 2:1 bis 500:1.

Bevorzugt ist ein Verfahren, das dadurch gekennzeichnet ist, dass der Hydroformylierungskatalysator in situ hergestellt wird, wobei man mindestens einen erfindungsgemäß einsetzbaren Liganden, eine Verbindung oder einen Komplex eines Übergangsmetalls und gegebenenfalls ein Aktivierungsmittel in einem inerten Lösungsmittel unter den Hyd roformylierungsbedingungen zur Reaktion bringt.

Bei dem Übergangsmetall handelt es sich vorzugsweise um ein Metall der VIII. Nebengruppe des Periodensystems der Elemente, besonders bevorzugt um Cobalt, Ruthenium, Iridium, Rhodium und Palladium. Insbesondere wird Rhodium eingesetzt.

Die Zusammensetzung des im erfindungsgemäßen Verfahren eingesetzten Synthesegases aus Kohlenmonoxid und Wasserstoff kann in weiten Bereichen variierten. Das molare Verhältnis von Kohlenmonoxid und Wasserstoff beträgt in der Regel etwa 5:95 bis 70:30, bevorzugt etwa 40:60 bis 60:40. Insbesondere bevorzugt wird ein molares Verhältnis von Kohlenmonoxid und Wasserstoff im Bereich von etwa 1:1 eingesetzt.

Die Temperatur bei der Hydroformylierungsreaktion liegt im Allgemeinen in einem Bereich von etwa 20 bis 180°C, bevorzugt etwa 50 bis 150 °C. Im Allgemeinen liegt der Druck in einem Bereich von etwa 1 bis 700 bar, bevorzugt 1 bis 600 bar, insbesondere 1 bis 300 bar. Der Reaktionsdruck kann in Abhängigkeit von der Aktivität des eingesetzten erfindungsgemäßen Hydroformylierungskatalysators variiert werden. Im Allgemeinen erlauben die erfindungsgemäßen Katalysatoren auf Basis von phosphorhaltigen Verbindungen eine Umsetzung in einem Bereich niedriger Drücke, wie etwa im Bereich von 1 bis 100 bar.

Die erfindungsgemäß eingesetzten und die erfindungsgemäßen Hydroformylierungskatalysatoren lassen sich nach üblichen, dem Fachmann bekannten Verfahren vom Austrag der Hydroformylierungsreaktion abtrennen und können im Allgemeinen erneut für die Hydroformylierung eingesetzt werden.

Die asymmetrische Hydroformylierung nach dem erfindungsgemäßen Verfahren zeichnet sich durch eine hohe Stereoselektivität aus. Vorteilhafterweise zeigen die erfindungsgemäßen und die erfindungsgemäß eingesetzten Katalysatoren zudem in der Regel eine hohe Regioselektivität. Weiterhin weisen die Katalysatoren im Allgemeinen eine hohe Stabilität unter den Hydroformylierungsbedingungen auf, so dass mit Ihnen in der Regel längere Katalysatorstandzeiten erzielt werden, als mit aus dem Stand der Technik bekannten Katalysatoren auf Basis herkömmlicher Chelatliganden. Vorteilhafterweise zeigen die erfindungsgemäßen und erfindungsgemäß eingesetzten Katalysatoren weiterhin eine hohe Aktivität, so dass in der Regel die entsprechenden Aldehyde, bzw. Alkohole in guten Ausbeuten erhalten werden.

Eine weitere wichtige 1-Hydro-2-Carbo-Addition ist die Umsetzung mit Cyanwasserstoff, im Folgenden Hydrocyanierung genannt.

Auch die zur Hydrocyanierung eingesetzten Katalysatoren umfassen Komplexe eines Metalls der VIII. Nebengruppe, insbesondere Cobalt, Nickel, Ruthenium, Rhodium, Palladium, Platin, bevorzugt Nickel, Palladium und Platin und ganz besonders bevorzugt Nickel. Die Herstellung der Metallkomplexe kann, wie zuvor beschrieben erfolgen. Gleiches gilt für die in situ-Herstellung der erfindungsgemäßen Hydrocyanierungskatalysatoren. Verfahren zur Hydrocyanierung sind in J. March, Advanced Organic Chemistry, 4. Aufl., S. 811 - 812 beschrieben, worauf hier Bezug genommen wird.

Nach einer weiteren bevorzugten Ausführungsform handelt es sich bei der 1-Hydro-2-Carbo-Addition um eine Umsetzung mit Kohlenmonoxid und wenigstens einer Verbindung mit einer nucleophilen Gruppe, im Folgenden als Carbonylierung bezeichnet.

Auch die Carbonylierungskatalysatoren umfassen Komplexe eines Metalls der VIII. Nebengruppe, bevorzugt Nickel, Cobalt, Eisen, Ruthenium, Rhodium und Palladium, insbesondere Palladium. Die Herstellung der Metallkomplexe kann wie zuvor beschrieben erfolgen. Gleiches gilt für die in situ-Herstellung der erfindungsgemäßen Carbonylierungskatalysatoren.

Vorzugsweise sind die Verbindungen mit einer nucleophilen Gruppe, ausgewählt unter Wasser, Alkoholen, Thiolen, Carbonsäureestern, primären und sekundären Aminen.

Eine bevorzugte Carbonylierungsreaktion ist die Überführung von Olefinen mit Kohlenmonoxid und Wasser zu Carbonsäuren (Hydrocarboxylierung).

Die Carbonylierung kann in Gegenwart von Aktivierungsmitteln erfolgen. Geeignete Aktivierungsmittel sind z. B. Brönsted-Säuren, Lewis-Säuren, wie z. B. BF₃, AlCl₃, ZnCl₂, und Lewis-Basen.

Eine weitere wichtige 1,2-Addition ist die Hydroacylierung. So gelangt man bei der asymmetrischen intramolekularen Hydroacylierung durch Umsetzung eines ungesättigten Aldehyds zu optisch aktiven cyclischen Ketonen. Bei der asymmetrischen intermolekularen Hydroacylierung gelangt man durch Umsetzung eines prochiralen Olefins mit einem Acylhalogenid in Gegenwart eines chiralen Katalysators, wie zuvor beschrieben, zu chiralen Ketonen. Geeignete Verfahren zur Hydroacylierung sind in J. March, Advanced Organic Chemistry, 4. Aufl., S. 811 beschrieben, worauf hier Bezug genommen wird.

Eine weitere wichtige 1,2-Addition ist die Hydroamidierung. So gelangt man durch Umsetzung einer prochiralen Verbindung, die wenigstens eine ethylenisch ungesättigte Doppelbindung enthält, mit Kohlenmonoxid und Ammoniak, einem primären oder einem sekundären Amin in Gegenwart eines chiralen Katalysators, wie zuvor beschrieben, zu chiralen Amiden.

Eine weitere wichtige 1,2-Addition ist die Hydroveresterung. So gelangt man durch Umsetzung einer prochiralen Verbindung, die wenigstens eine ethylenisch ungesättigte Doppelbindung enthält, mit Kohlenmonoxid und einem Alkohol in Gegenwart eines chiralen Katalysators, wie zuvor beschrieben, zu chiralen Estern.

Eine weitere wichtige 1,2-Addition ist die Hydroborierung. So gelangt man durch Umsetzung einer prochiralen Verbindung, die wenigstens eine ethylenisch ungesättigte Doppelbindung enthält, mit Boran oder einer Boranquelle in Gegenwart eines chiralen Katalysators, wie zuvor beschrieben, zu chiralen Trialkylboranen, die zu primären Alkoholen (z. B. mit NaOH/H₂O₂) oder zu Carbonsäuren oxidiert werden können. Geeignete Verfahren zur Hydroborierung sind in J. March, Advanced Organic Chemistry, 4. Aufl., S. 783 - 789 beschrieben, worauf hier Bezug genommen wird.

Eine weitere wichtige 1,2-Addition ist die Hydrosilylierung. So gelangt man durch Umsetzung einer prochiralen Verbindung, die wenigstens eine ethylenisch ungesättigte Doppelbindung enthält, mit einem Silan in Gegenwart eines chiralen Katalysators, wie zuvor beschrieben, zu chiralen mit Silylgruppen funktionalisierten Verbindungen. Aus prochiralen Olefinen resultieren chirale mit Silylgruppen funktionalisierte Alkane. Aus prochiralen Ketonen resultieren chirale Silylether oder -alkohole. Bei den Hydrosilylierungskatalysatoren ist das Übergangsmetall vorzugsweise ausgewählt unter Pt, Pd, Rh, Ru und Ir. Dabei kann es von Vorteil sein, Kombinationen oder Gemische eines der zuvor genannten Katalysatoren mit weiteren Katalysatoren einzusetzen. Zu den geeigneten zusätzlichen Katalysatoren zählt beispielsweise Platin in feinverteilter Form ("Platinmohr"), Platinchlorid und Platinkomplexe wie Hexachloroplatinsäure oder Divinyldisiloxan-Platin-Komplexe, z. B. Tetramethyldivinyldisiloxan-Platin-Komplexe. Geeignete Rhodiumkatalysatoren sind beispielsweise (RhCl(P(C₆H₅)₃)₃) und RhCl₃. Geeignet sind weiterhin RuCl₃ und IrCl₃- Geeignete Katalysatoren sind weiterhin Lewis-Säuren wie AlCl₃ oder TiCl₄ sowie Peroxide.

Geeignete Silane sind z. B. halogenierte Silane, wie Trichlorsilan, Methyldichlorsilan, Dimethylchlorsilan und Trimethylsiloxydichlorsilan; Alkoxysilane, wie Trimethoxysilan, Triethoxysilan, Methyldimethoxysilan, Phenyldimethoxysilan, 1,3,3,5,5,7,7-Heptamethyl-1,1-dimethoxytetrasiloxan sowie Acyloxysilane.

Die Reaktionstemperatur bei der Silylierung liegt vorzugsweise in einem Bereich von 0 bis 140°C, besonders bevorzugt 40 bis 120 °C. Die Reaktion wird üblicherweise unter Normaldruck durchgeführt, kann jedoch auch bei erhöhten Drücken, wie z. B. im Bereich von etwa 1,5 bis 20 bar, oder verringerten Drücken, wie z. B. 200 bis 600 mbar, erfolgen.

Die Reaktion kann ohne Lösungsmittel oder in Gegenwart eines geeigneten Lösungsmittels erfolgen. Als Lösungsmittel bevorzugt sind beispielsweise Toluol, Tetrahydrofuran und Chloroform.

Eine weitere wichtige 1,2-Addition ist die Aminolyse (Hydroaminierung). So gelangt man durch Umsetzung einer prochiralen Verbindung, die wenigstens eine ethylenisch ungesättigte Doppelbindung enthält, mit Ammoniak, einem primären oder einem sekundären Amin in Gegenwart eines chiralen Katalysators, wie zuvor beschrieben, zu chiralen primären, sekundären oder tertiären Aminen. Geeignete Verfahren zur Hydroaminierung sind in J. March, Advanced Organic Chemistry, 4. Aufl., S. 768 - 770 beschrieben, worauf hier Bezug genommen wird.

Eine weitere wichtige 1,2-Addition ist die Alkoholyse (Hydro-Alkoxy-Addition). So gelangt man durch Umsetzung einer prochiralen Verbindung, die wenigstens eine ethylenisch ungesättigte Doppelbindung enthält, mit Alkoholen in Gegenwart eines chiralen Katalysators, wie zuvor beschrieben, zu chiralen Ethern. Geeignete Verfahren zur Alkoholyse sind in J. March, Advanced Organic Chemistry, 4. Aufl., S. 763 - 764 beschrieben, worauf hier Bezug genommen wird.

Eine weitere wichtige Reaktion ist die Isomerisierung. So gelangt man von einer prochiralen Verbindung, die wenigstens eine ethylenisch ungesättigte Doppelbindung enthält, in Gegenwart eines chiralen Katalysators, wie zuvor beschrieben, zu chiralen Verbindungen.

Eine weitere wichtige Reaktion ist die Cyclopropanierung. So gelangt man von einer prochiralen Verbindung, die wenigstens eine ethylenisch ungesättigte Doppelbindung enthält, mit einer Diazoverbindung in Gegenwart eines chiralen Katalysators, wie zuvor beschrieben, zu chiralen Cyclopropanen.

Eine weitere wichtige Reaktion ist die Metathese. So gelangt man von einer prochiralen Verbindung, die wenigstens eine ethylenisch ungesättigte Doppelbindung enthält, mit einem weiteren Olefin in Gegenwart eines chiralen Katalysators, wie zuvor beschrieben, zu chiralen Kohlenwasserstoffen.

Eine weitere wichtige Reaktion ist die Aldolkondensation. So gelangt man durch Umsetzung eines prochiralen Ketons oder Aldehyds mit einem Silylenolether in Gegenwart eines chiralen Katalysators, wie zuvor beschrieben, zu chiralen Aldolen.

Eine weitere wichtige Reaktion ist die allylische Alkylierung. So gelangt man durch Umsetzung eines prochiralen Ketons oder Aldehyds mit einem allylischen Alkylierungsmittel in Gegenwart eines chiralen Katalysators, wie zuvor beschrieben, zu chiralen Kohlenwasserstoffen.

Eine weitere wichtige Reaktion ist die [4+2]-Cycloaddition. So gelangt man durch Umsetzung eines Diens mit einem Dienophil, wovon wenigstens eine Verbindung prochiral ist, in Gegenwart eines chiralen Katalysators, wie zuvor beschrieben, zu chiralen Cyclohexen-Verbindungen.

Ein weiterer Gegenstand der Erfindung ist die Verwendung von Katalysatoren, umfassend wenigstens einen Komplex eines Metalls der VIII. Nebengruppe mit wenigstens einem Liganden, wie zuvor beschrieben, zur Hydroformylierung, Hydrocyanierung, Carbonylierung, Hydroacylierung, Hydroamidierung, Hydroveresterung, Hydrosilyllerung, Hydroborierung, Hydrierung, Aminolyse, Alkoholyse, Isomerisierung, Metathese, Cyclopropanierung oder [4+2]-Cycloaddition.

Das erfindungsgemäße Verfahren eignet sich zur Herstellung einer Vielzahl nützlicher optisch aktiver Verbindungen. Dabei wird stereoselektiv ein chirales Zentrum erzeugt. Beispielhafte optisch aktive Verbindungen, die sich nach dem erfindungsgemäßen Verfahren herstellen lassen sind substituierte und unsubstituierte Alkohole oder Phenole, Amine, Amide, Ester, Carbonsäuren oder Anhydride, Ketone, Olefine, Aldehyde, Nitrile und Kohlenwasserstoffe. Bevorzugt nach dem erfindungsgemäßen asymmetrischen Hydroformylierungsverfahren hergestellte optisch aktive Aldehyde umfassen beispielsweise S-2-(p-isobutylphenyl)propionaldehyd, S-2-(6-methoxynaphthyl)propionaldehyd, S-2-(3-benzoylphenyl)propionaldehyd, S-2-(p-thienoylphenyl)propionaldehyd, S-2-(3-fluoro-4-phenyl)phenylpropionaldehyd, S-2-[4-(1,3-dihydro-I-oxo-2H-isoindol-2-yl)phenyl]propionaldehyd, S-2-(2-methylacetaldehyde)-5-benzoylthiophen, etc. Weitere nach dem erfindungsgemäßen Verfahren (einschließlich einer etwaigen Derivatisierung) herstellbare optisch aktive Verbindungen sind in Kirk-Othmer, Encyclopedia of Chemical Technology, Third Edition, 1984, und The Merck Index, An Encyclopedia of Chemicals, Drugs and Biologicals, Eleventh Edition, 1989, beschrieben, worauf hier Bezug genommen wird.

Das erfindungsgemäße Verfahren erlaubt die Herstellung von optisch aktiven Produkten mit hoher Enantioselektivität und erforderlichenfalls Regioselektivität, z. B. bei der Hydroformylierung. Enantiomere Überschüsse (ee) von mindestens 50 %, bevorzugt mindestens 75 % und insbesondere mindestens 90 % können erzielt werden.

Die Isolierung der erhaltenen Produkte gelingt nach üblichen, dem Fachmann bekannten Verfahren. Dazu zählen beispielsweise Lösungsmittelextraktion, Kristallisation, Destillation, Verdampfen z. B. in einem Wischblatt- oder Fallfilmverdampfer, etc.

Die nach dem erfindungsgemäßen Verfahren erhaltenen optisch aktiven Verbindungen können einer oder mehreren Folgeumsetzung(en) unterzogen werden. Derartige Verfahren sind dem Fachmann bekannt. Dazu zählen beispielsweise die Veresterung von Alkoholen, die Oxidation von Alkoholen zu Aldehyden, N-Alkylierung von Amiden, Addition von Aldehyden an Amide, Nitrilreduktion, Acylierung von Ketonen mit Estern, Acylierung von Aminen, etc. Beispielsweise können durch erfindungsgemäße asymmetrische Hydroformylierung erhaltene optisch aktive Aldehyde einer Oxidation zu Carbonsäuren, Reduktion zu Alkoholen, Aldolkondensation zu α,β-ungesättigten Verbindungen, reduktiven Aminierung zu Aminen, Aminierung zu Iminen, etc., unterzogen werden.

Eine bevorzugte Derivatisierung umfasst die Oxidation eines nach dem erfindungsgemäßen asymmetrischen Hydroformylierungsverfahren hergestellten Aldehyds zur entsprechenden optisch aktiven Carbonsäure. So können eine Vielzahl pharmazeutisch wichtiger Verbindungen, wie S-Ibuprofen, S-Naproxen, S-Ketoprofen, S-Suprofen, S-Fluorbiprofen, S-Indoprofen, S-Tiaprofensäure etc. hergestellt werden.

Einige bevorzugte Derivatisierungen werden in der folgenden Tabelle hinsichtlich Olefinausgangsmaterial, Aldehydzwischenprodukt und Endprodukt aufgezählt:

| Olefin | Aldehyd | Produkt |
|---|---|---|
| | | |
| p-Isobutylstyrol | S-2-(p-Isobutylphenyl)propionaldehyd | S-Ibuprofen |
| 2-Vinyl-6-methoxynaphthalin | S-2-(6-Methoxynaphthyl)propionaldehyd | S-Naproxen |
| 3-Ethenylphenylphenylketon | S-2-(3-Benzoylphenyl)propionaldehyd | S-Ketoprofen |
| 4-Ethenylphenyl-2-thienylketon | S-2-(p-Thienoylphenyl)propionaldehyd | S-Suprofen |
| 4-Ethenyl-2-fluorobiphenyl | S-2-(3-Fluoro-4-phenyl)phenylpropionaldehyd | S-Fluorbiprofen |
| 1,3-Dihydro-1-oxo-2H-isoindol-2-yl)styrol | S-2-(4-(1,3-Dihydro-1-oxo-2H-isoindol-2-yl)phenyl)-propionaldehyd | S-Indoprofen |
| 2-Ethenyl-5-benzoylthiophen | S-2-(2-Methylacetaldehyd)-5-benzoylthiophen | S-Tiaprofensäure |
| 3-Ethenylphenylphenylether | S-2-(3-Phenoxy)propionaldehyd | S-Fenoprofen |
| Propenylbenzol | S-2-Phenylbutyraldehyd | S-Phenetamid, S-Butetamat |
| Isobutyl-4-propenylbenzol | S-2-(4-Isobutylphenyl)butyraldehyd | S-Butibufen |
| Phenylvinylether | S-2-Phenoxypropionaldehyd | Pheneticillin |
| Vinylchlorid | S-2-Chlorpropionaldehyd | S-2-Chlorpropionsäure |
| 2-Vinyl-6-methoxynaphthalin | S-2-(6-Methoxynaphthyl)propionaldehyd | S-Naproxol |
| 2-Vinyl-6-methoxynaphthalin | S-2-(6-Methoxynaphthyl)propionaldehyd | S-Naproxen (Na-Salz) |
| 5-(4-Hydroxy)benzoyl-3H-pyrrolizin | 5-(4-Hydroxy)benzoyl-1-formyl-2,3-dihydro-pyrrolizin | Ketorolac oder Derivate |
| 2,3-Dihydro-[1,4]oxazin-4-carbonsäure *tert*-butyl ester | 3-Formylmorpholin-4-carbonsäure *tert*-butylester | 3-Hydroxymethyl-morpholin-4-carbonsäure *tert*-butylester |
| 2,3-Dihydro-[1,4]oxazin-4-carbaldehyd | Morpholin-3,4-dicarbaldehyd | 3-Hydroxymethyl-morpholin-4-carbaldehyd |
| Essigsäure 1-phenyl-vinylester | Essigsäure 1-phenyl-vinylester | Essigsäure 3-methylamino-l-phenyl-propylester |

### Beispiele

### Beispiel 1:

### Darstellung von 6-(1-Naphthylphenylphosphino)-2-pivaloylaminopyridin (6-NPPAP)

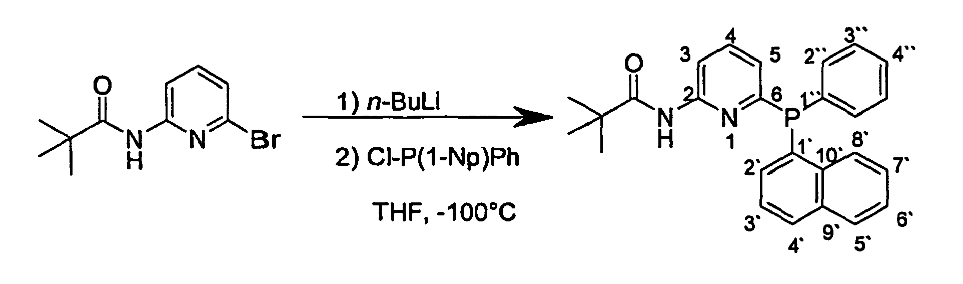

Zu einer Lösung von 2-Brom-6-N-pivaloylaminopyridin (1,80 g, 7,0 mmol) in Tetrahydrofuran (30 ml) wurde bei -100 °C innerhalb von 20 min n-Butyllithium (8,7 ml, 14,0 mmol, 1,6 M Lösung in Hexan, 2 eq) gegeben und die Reaktionslösung 1 h bei dieser Temperatur gerührt. Nach Zugabe von Chlor(1-naphtyl)phenylphosphin (1,89 g, 7,0 mmol, 1 eq, hergestellt wie von G. Wittig et al., in Justus Liebig Ann. Chem. 1971, 17-26, beschrieben) wurde die Reaktionslösung Ober 12 h auf Raumtemperatur erwärmt. Durch Zugabe von gesättigter NaHCO₃-Lösung (30 ml) wurde die Reaktion beendet, die wässrige Phase abgetrennt und mit Ethylacetat (3 x 20 ml) extrahiert. Die vereinigten organischen Phasen wurden über MgSO₄ getrocknet und das Lösungsmittel am Rotationsverdampfer entfernt. Das Rohprodukt wurde säulenchromatographisch mit Kieselgel als stationärer Phase und einem Cyclohexan-Ethylacetat-Gemisch (10:1) gereinigt.

Die Titelverbindung (1,50 g, 3,6 mmol, 52 %) konnte in Form eines weißen Feststoffs isoliert werden.
Smp: 55 °C
¹H-NMR (499,873 MHz, C₆D₆):
δ = 0,86 (s, 9H, CH₃), 6,66 (d, J = 7,5 Hz, 1H, H5), 6,93 (td, J = 7,5 Hz, J = 1,9 Hz, 1H, H4), 7,04-7,05 (m, 3H, Ar-H), 7,11 (t, J = 7,7 Hz, 1H, Ar-H), 7,17-7,19 (m, 2H, Ar-H), 7,27-7,30 (m, 1 H, Ar-H), 7,43-7,47 (m, 2H, Ar-H), 7,57-7,60 (m, 2H, Ar-H), 7,92 (br, 1H, NH), 8,51 (d, J = 7,5 Hz, 1 H, H3), 8,75-8,77 (m, 1 H, Ar-H).
¹³C-NMR (125,709 MHz, C₆D₆):
δ = 27,1 (s, 3C, C(CH₃)₃), 39,5 (s, 1C, C(CH₃)₃), 112,8 (s, 1C, C3), 124,5 (d, J_{C,P} = 11,8 Hz, 1C, C5), 126,0 (d, J_{C,P} = 1,8 Hz, 1C, Ar-C), 126,4 (d, J_{C,P} = 1,5 Hz, 1C, Ar-C), 126,6 (s, 1C, Ar-C), 126,7 (d, J_{C,P} = 18,1 Hz, 1C, Ar-C), 128,9 (d, J_{C,P} = 7,3 Hz, 2C, C3"), 129,0 (s, 1C, Ar-C), 129,3 (s, 1C, Ar-C), 130,0 (s, 1C, Ar-C), 132,9 (d, J_{C,P} = 1,2 Hz, 1C, C4), 134,0 (d, J_{C,P} = 4,2 Hz, 1C, C9'), 134,4 (d, J_{C,P} = 15,1 Hz, 1C, C1' oder C1"), 135,1 (d, J_{C,P} = 20,6 Hz, 2C, C2"), 136,0 (d, J_{C,P} = 10,9 Hz, 1C, C1' oder C1"), 136,33 (d, J_{C,P} = 22,1 Hz, 1C, C10'), 138,2 (d, J_{C,P} = 1,5 Hz, 1C, Ar-C), 152,8 (d, J_{C,P} = 15,1 Hz, 1C, C2 oder C6), 161,9 (d, J_{C,P} = 6,4 Hz, 1C, C2 oder C6), 176,5 (s, 1C, C=O).
³¹P-NMR (121,468 MHz, CDCl₃):
δ = -13,72 (s)
Chirale HPLC (AD-H, n-Heptan / EtOH 70:30, RT, 0,8 ml/min, 295 nm, RT)

| | | |
|---|---|---|
| (-)-Enantiomer : | 5,7 min | [α]_{D} = - 38° (c = 0,30, CHCl₃, 21 °C) |
| (+)-Enantiomer: | 6,8 min | [α]_{D} = + 37° (c = 0,52, CHCI₃, 21 °C) |

Die Trennung von 200 mg rac-6-NPPAP erfolgte mittels präparativer HPLC (Chiralpak AD-H, n-Heptan / EtOH 70:30, RT, 11,0 ml/min, 295 nm), wobei die einzelnen Enantiomere mit ee>99 % erhalten wurden.

### Beispiel 2:

### Darstellung eines heterodimeren Pt-Komplexes

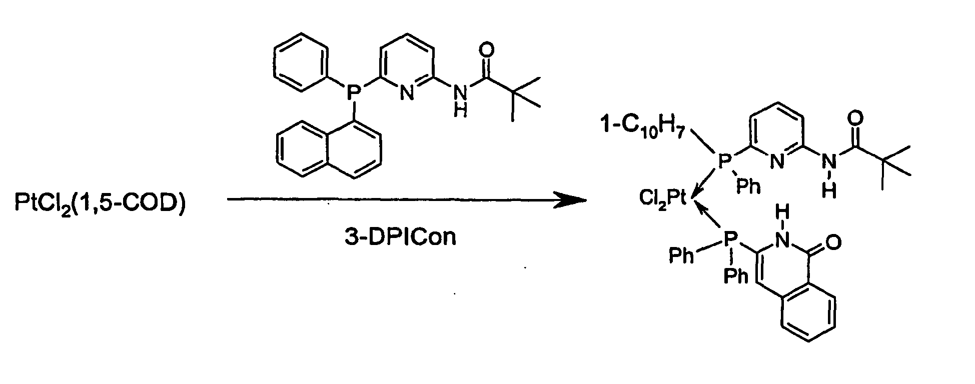

Zu einer Lösung von PtCl₂(1,5-Cyclooctadien) (14,3 mg, 3,82·10⁻² mmol, 1 eq) in CDCl₃ (0,4 ml) wurde eine Lösung aus 3-Diphenylphosphino-2-H-isochinolin-1-on (3-DPICon) (12,6 mg, 3,82·10⁻² mmol, 1 eq) und 6-NPPAP aus Beispiel 1 (14,4 mg, 3,28·10 ² mmol, 1 eq) in CDCl₃ (0.4 ml) zugegeben. Die Bildung des heteroleptischen Komplexes wurde durch Tieftemperatur-NMR-Spektroskopie beobachtet.
³¹P-NMR 294K (121,468 MHz, CDCl₃):
δ = 6,36 (bd, ¹J_{Pt-P} = 3521 Hz), 8,02 (bd, ¹J_{Pt-P} = 3756 Hz).
¹H-NMR 240K (499,873 MHz, CDCl₃):
δ = 1,11 (s, 9H, CH₃), 6,69-6,74 (m, 2H, Ar-H), 6,88 (t, J = 7,2 Hz, 1H, Ar-H), 7,17-7,27 (m, 7H, Ar-H), 7,34-7,48 (m, 5H, Ar-H), 7,55-7,72 (m, 6H, Ar-H), 7,79 (d, J = 8,0 Hz, 1H), 7,81 (d, J = 7,9 Hz, 1H), 7,87-7,89 (br, 1H, Ar-H), 7,98 (d, J = 7,7 Hz, 1 H), 8,04-8,08 (m, 3H, Ar-H), 8,24 (t, J = 8,4 Hz, 2H, Ar-H), 10,44 (s, 1H, NH), 11,53 (d, J = 5,8 Hz, NH).
³¹P-NMR 240K (121,468 MHz, CDCl₃,):
δ = 6,36 (dd, ¹J_{Pt-P} = 3515 Hz, ²J_{P-P} = 13,2 Hz), 7,26 (dd, ¹J_{Pt-P} = 3753 Hz, ²J_{P-P} = 13,2 Hz).

### Beispiel 3:

### Asymmetrische Hydrierung von 2-Acetamidoacrylsäuremethylester

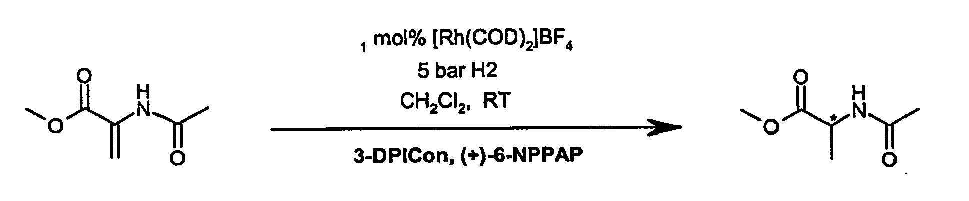

Eine Mischung aus [Rh(COD)₂]BF₄ (2 mg, 5,0·10⁻³ mmol, 1,0 mol%), 3-DPICon (2,1 mg, 6,4·10⁻³ mmol, 1,3mol%) und (+)-6-NPPAP aus Beispiel 1 (2,7 mg, 6,5·10⁻³ mmol, 1,3 mol%) wurde in trockenem und entgastem CH₂CI₂ (5 ml) gelöst und 10 min bei Raumtemperatur gerührt. Die Katalysatorlösung wurde mit 2-Acetamidoacrylsäuremethylester (71,6 mg, 0,5 mmol) versetzt und die Lösung in einen Stahlautoklaven überführt. Der Autoklav wurde fünfmal mit Wasserstoff gespült und anschließend bei Raumtemperatur für 48 h auf einen Druck von 5 bar gebracht.

Nach Beendigung der Reaktion wurde der Umsatz durch ¹H-NMR-Spektroskopie ermittelt und der Enantiomerenüberschuss mittels chiraler GC (Hydrodex β-TBDAc) bestimmt.

Der Umsatz war quantitativ, der Enantiomerenüberschuss betrug 43 % (R).

### Beispiel 4:

### Darstellung eines chiralen Phosphonitderivates des 6-DPPAP

### a) Synthese von 6-(bis(diethylamino)phosphino)-2-pivaloylaminopyridin

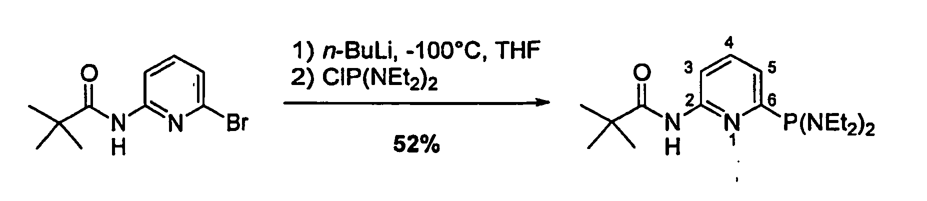

2-Brom-6-N-pivaloylaminopyridin (1,98 g, 7,7 mmol, 1 eq) wurde in Tetrahydrofuran (50 ml) gelöst. Bei -100 °C wurde n-Butyhllithium (10,0 ml, 1,54 M in Hexan, 15,4 mmol, 2 eq) langsam zugetropft. Die gelbe Lösung wurde 90 min bei -100°C gerührt. Anschließend wurde Bis-(diethylamino)-chlorphosphan, hergestellt wie von J. Sakai, W. B. Schweizer, D. Seebach in Helv. Chim. Acta 1993, 76, 2654-2665 beschrieben (1,62 g, 7,7 mmol, 1 eq), schnell zugegeben. Danach wurde das Reaktionsgemisch über Nacht auf Raumtemperatur erwärmt. Das Lösungsmittel wurde im Vakuum abgezogen, der Rückstand in Diethylether (30 ml) aufgenommen und mit entgastem Wasser (0,14 g, 0,14 ml, 7,8 mmol, 1 eq) versetzt. Die entstandene Suspension wurde unter Schutzgasatmosphäre über Celite und Magnesiumsulfat filtriert. Das Lösungsmittel wurde im Vakuum entfernt. Das Rohprodukt wurde mittels Kugelrohrdestillation bei 200°C (10⁻³ bar) aufgereinigt. Die Titelverbindung wurde als viskose, farblose Flüssigkeit erhalten (1,41 g, 4,0 mmol, 52 %).
¹H-NMR (300,064 MHz, C₆D₆):
δ = 1,05 (s, 9H, C(CH)₃), 1,10 (t, 12H, J = 7,0 Hz, CH₂CH₃), 3,07 (m, 8H, CH₂CH₃), 7,25 (d, 2H, J = 3,1 Hz, Ar-H), 8,01 (b, 1 H, NH), 8,48 (dd, 1H, J = 5,0 Hz, J = 4,0 Hz, Ar-H).
¹³C-NMR (100,620 MHz, C₆D₆):
δ = 14,9 (s, 3C, C(CH)₃), 27,3 (s, 4C, CH₂CH₃), 39,6 (s, 1C, C(CH)₃), 43,9 (d, 4C, J_{P,C} = 17,4 Hz, CH₂CH₃), 111,6 (d, 1C, J_{P,C} = 2,9 Hz, Ar-CH), 122,8 (d, 1C, J_{P,C} = 21,8 Hz, C5), 137,6 (s, 1C, Ar-CH), 152,4 (d, 1C, J_{P,C} = 7,3 Hz, Ar-C), 164,8 (d, 1C, J_{P,C} = 13,1 Hz, Ar-C), 176,1 (s, 1C, C=O).
³¹P-NMR (121,468 MHz, C₆D₆):
δ = 94,3 (s)

### b) Synthese von 6-(3,5-Dioxa-4-phosphacyclohepta[2,1-a;3,4-a']dinaphthalen-4-yl)-2-pivaloylaminopyridin

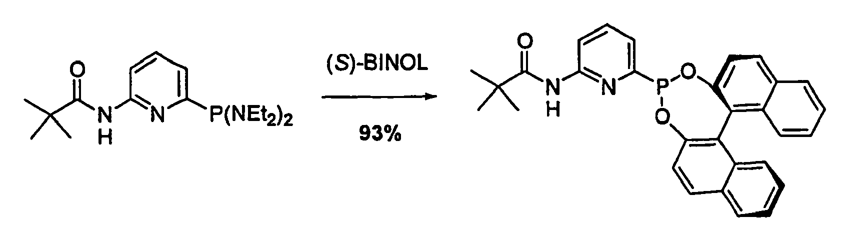

N-(6-(bis(diethylamino)phosphino)pyridin-2-yl)pivalamid (0,292 g, 0,60 mmol, 1 eq) wurde in Toluol (12 ml) gelöst. Anschließend wurde (S)-BINOL (0,172 g, 0,60 mmol, 1 eq) zugegeben und das Reaktionsgemisch 3 h am Rückfluss erhitzt. Das Lösungsmittel wurde im Vakuum entfernt. Die Titelverbindung konnte in Form eines weißen Feststoffs erhalten werden (0,276 g, 0,56 mmol, 93 %).
¹H-NMR (300,064 MHz, CDCl₃):
δ = 1,37 (s, 9H, C(CH)₃), 6,71 (d, 1H, J = 8,8 Hz, Ar-H), 6,98 (d, 1H, J = 7,5 Hz, Ar-H), 7,15-7,47 (m, 7H, Ar-H), 7,62 (pt, 2H, J = 8,9 Hz, Ar-H), 7,83 (d, 1 H, J = 8,1 Hz, Ar-H), 7,96 (d, 1 H, J = 8,0 Hz, Ar-H), 8,04 (d, 1 H, J = 8,8 Hz, Ar-H), 8,16 (b, 1H, NH), 8,27 (d, 1 H, J = 8,5 Hz, Ar-H).
³¹P-NMR (121,468 MHz, CDCl₃):
δ = 167,2 (s)

### Beispiel 5:

### Darstellung eines heterodimeren Pt-Komplexes

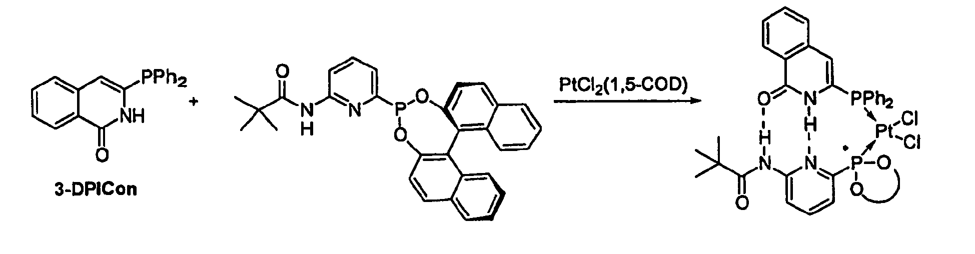

Zu einer Lösung von PtCl₂(1,5-Cyclooctadien) (10,0 mg, 2,67·10⁻² mmol, 1 eq) in CDCl₃ (0,4 ml) wurde eine Lösung aus 3-DPICon (8,8 mg, 2,67·10⁻² mmol, 1 eq) und Aminopyridin-Ligand (13,2 mg, 2,67·10⁻² mmol, 1 eq) in CDCl₃ (0,4 ml) zugegeben. Die Bildung des heteroleptischen Komplexes wurde durch NMR-Spektroskopie beobachtet.
³¹P-NMR (121,468 MHz, CDCl₃):
δ = 17,2 (dd, ¹J_{Pt-P} = 3590 Hz, ²J_{P-P} = 13,4 Hz), 108,0 (d, ²J_{P-P} = 13,4 Hz).

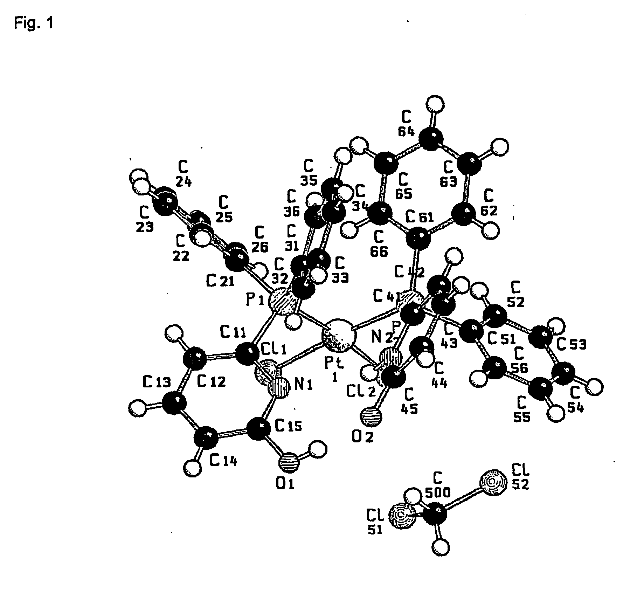

## Patentansprüche

1. Verfahren zur Herstellung chiraler Verbindungen durch Umsetzung einer prochiralen Verbindung, die wenigstens eine ethylenisch ungesättigte Doppelbindung enthält, mit einem Substrat in Gegenwart eines chiralen Katalysators, umfassend wenigstens einen Übergangsmetallkomplex mit Liganden, die jeweils eine pnicogenatomhaltige oder pseudopnicogenatomhaltige Gruppe und wenigstens eine zur Ausbildung intermolekularer, nichtkovalenter Bindungen befähigte funktionelle Gruppe aufweisen, wobei der Komplex über intermolekulare nichtkovalente Bindungen dimerisierte Liganden aufweist.

2. Verfahren nach Anspruch 1, wobei die Liganden wenigstens ein Pnicogenatom aufweisen, das ausgewählt ist unter N, P, As und Sb.

3. Verfahren nach Anspruch 2, wobei die Liganden wenigstens ein Stickstoffatom in Form eines Imins aufweisen.

4. Verfahren nach Anspruch 1, wobei die Liganden wenigstens ein CarbenKohlenstoffatom als Pseudopnicogenatomen aufweisen.

5. Verfahren nach einem der vorhergehenden Ansprüche, wobei der Abstand zwischen den an das Übergangsmetall koordinierenden Atomen der pnicogenatomhaltigen oder pseudopnicogenatomhaltigen Gruppen der dimerisierten Liganden höchstens 5 Å beträgt.

6. Verfahren nach einem der vorhergehenden Ansprüche, wobei die über intermolekulare nichtkovalente Bindungen dimerisierten Liganden ausgewählt sind unter Ligand/Ligand-Paaren der Formel 1: 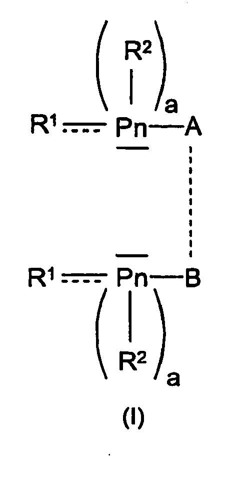 worin
Pn für unabhängig voneinander ausgewählte Pnicogenatome oder koordinie- rende Atome pseudopnicogenatomhaltiger Gruppen stehen,
A und B für Reste mit zueinander komplementären funktionellen Gruppen ste- hen, zwischen denen eine nichtkovalente Wechselwirkung besteht,
R¹ für einen einfach oder doppelt gebundenen Organylrest steht,
R² für einen einfach gebundenen Organylrest steht,
a in Abhängigkeit von der Valenz des Pnicogenatoms oder koordinierenden Atoms pseudopnicogenatomhaltiger Gruppen und der Bindigkeit des Rests R¹ für 0 oder 1 steht,
wobei das Pnicogenatom oder koordinierende Atome der pseudopnicogenatomhaltigen Gruppe auch gemeinsam mit wenigstens zwei der daran gebundenen Reste R¹, R² und A oder B Teil eines Ringsystems sein kann.

7. Verfahren nach einem der Ansprüche 1 bis 6, wobei es sich bei der pnicogen- oder pseudopnicogenatomhaltigen Gruppe um eine Carbengruppe handelt und die Carbengruppe Teil eines Ringsystems der allgemeinen Formel I.1 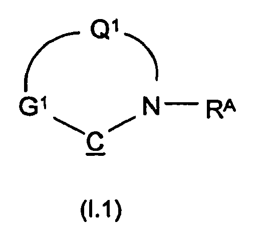 ist, worin
G¹ für NR^{B} oder CR^{C}R^{D} steht, worin R^{B}, R^{C} und R^{D} unabhängig voneinander für Wasserstoff, Alkyl, Cycloalkyl, Heterocycloalkyl, Aryl oder Hetaryl ste- hen, wobei R^{C} oder R^{D} auch für ein Bindungsäquivalent einer Doppelbin- dung stehen kann,
Q¹ für eine zweiwertige verbrückende Gruppe mit 1 bis 5 Atomen zwischen den flankierenden Bindungen steht,
R^{A} für Wasserstoff, Alkyl, Cycloalkyl, Heterocycloalkyl, Aryl oder Hetaryl steht,
wobei einer der Reste R^{A}, R^{B}, R^{C}, R^{D} oder ein Rest an der Gruppe Q¹ für eine zur Ausbildung intermolekularer, nichtkovalenter Bindungen befähigte funktionelle Gruppe steht oder eine solche Gruppe umfasst.

8. Verfahren nach Anspruch 7, wobei die Verbindungen der Formel I.1 ausgewählt unter Verbindungen der Formeln I.1a bis I.1d 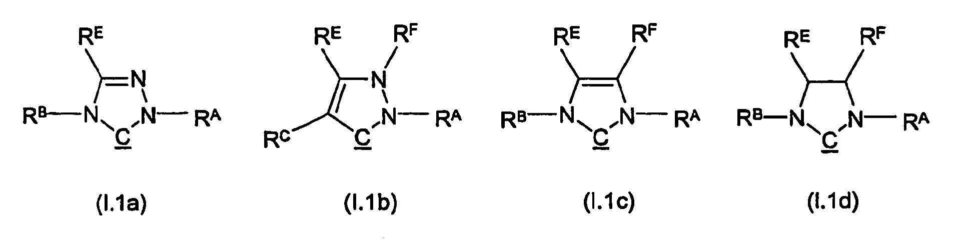 worin
R^{A}, R^{B}, R^{C}, R^{E} und R^{F} unabhängig voneinander für Wasserstoff, Alkyl, Cycloalkyl, Heterocycloalkyl, Aryl oder Hetaryl stehen, wobei einer dieser Reste für eine zur Ausbildung intermolekularer, nichtkovalenter Bindungen befähigte funktionelle Gruppe steht oder eine solche Gruppe umfasst.

9. Verfahren nach einem der Ansprüche 1 bis 6, wobei es sich bei der pnicogen- oder pseudopnicogenatomhaltigen Gruppe um eine Imingruppe handelt, die Teil eines Ringsystems der allgemeinen Formel 1.2 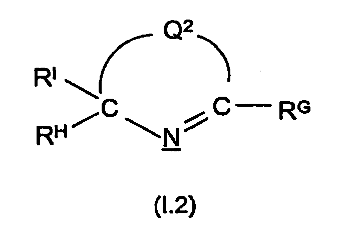 ist, worin
Q² für eine zweiwertige verbrückende Gruppe mit 1 bis 5 Atomen zwischen den flankierend en Bindungen steht, und
R^{G}, R^{H} und R^{I} unabhängig voneinander für Wasserstoff, Alkyl, Cycloalkyl, Hetero- cycloalkyl, Aryl oder Hetaryl stehen,
wobei einer der Reste R^{G}, R^{H}, R^{I} oder ein Rest an der Gruppe Q² für eine zur Ausbildung intermolekularer, nichtkovalenter Bindungen befähigte funktionelle Gruppe steht oder eine solche Gruppe umfasst.

10. Verfahren nach Anspruch 9, wobei die Verbindungen der Formel 1.2 ausgewählt sind unter cyclischen Iminen der Formeln 1.2a oder 1.2b 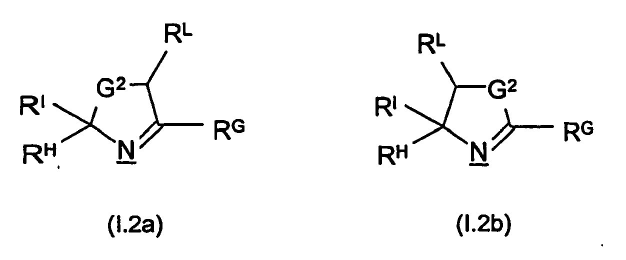 worin
G² für O oder NR^{K} steht, worin R^{K} für Wasserstoff, Alkyl, Cycloalkyl, Hetero- cycloalkyl, Aryl oder Hetaryl steht,
R^{G}, R^{H}, R^{I} und R^{L} unabhängig voneinander für Wasserstoff, Alkyl, Cycloalkyl, He- terocycloalkyl, Aryl oder Hetaryl stehen,
wobei einer der Reste R^{G}, R^{H}, R^{I}, R^{K} und R^{L} für eine zur Ausbildung intermolekularer, nichtkovalenter Bindungen befähigte funktionelle Gruppe steht oder eine solche Gruppe umfasst.

11. Verfahren nach einem der Ansprüche 1 bis 5, wobei es sich bei der pnicogen- oder pseudopnicogenatomhaltigen Gruppe, die ausgewählt ist unter Gruppen der allgemeinen Formel 1.3 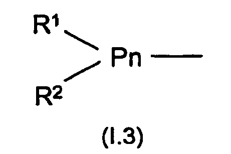 handelt, worin
Pn für N, P, As oder Sb, vorzugsweise P steht,
R¹ und R² unabhängig voneinander für Alkyl, Alkoxy, Cycloalkyl, Cycloalkoxy, Heterocycloalkyl, Heterocycloalkoxy, Aryl, Aryloxy, Hetaryl oder Hetaryloxy stehen oder
R¹ und R² zusammen mit dem Phosphoratom, an das sie gebunden sind, für ei- nen 4- bis 8-gliedrigen Heterocyclus stehen, der gegebenenfalls zusätzlich ein-, zwei- oder dreifach mit Cycloalkyl, Heterocycloalkyl, Aryl oder Hetaryl anelliert ist, wobei der Heterocyclus und, falls vorhanden, die anellierten Gruppen unabhängig voneinander je einen, zwei, drei oder vier Substituen- ten tragen können, die ausgewählt sind unter Alkyl, Cycloalkyl, Heterocyc- loalkyl, Aryl, Hetaryl, COOR^{c}, COO⁻M⁺, SO₃R^{c}, SO₃⁻M⁺, PO₃(R^{c})(R^{d}), (PO₃)²⁻ (M⁺)₂, NE⁴E⁵, (NE⁴E⁵E⁶)⁺X⁻, OR^{e}, SR^{e}, (CHR'CH₂O)_{y}R^{e}, (CH₂O)_{y}R^{e}, (CH₂CH₂N E⁴)_{y}R^{e}; Halogen, Nitro, Acyl oder Cyano stehen,
worin
R^{c} und R^{d} jeweils gleiche oder verschiedene Reste, ausgewählt unter Was- serstoff, Alkyl, Cycloalkyl, Aryl oder Hetaryl bedeuten,
R^{e}, E⁴, E⁵, E⁶ jeweils gleiche oder verschiedene Reste, ausgewählt unter Wasserstoff, Alkyl, Cycloalkyl, Aryl oder Hetaryl bedeuten,
R^{f} für Wasserstoff, Methyl oder Ethyl steht,
M⁺ für ein Kationäquivalent steht,
X⁻ für ein Anionäquivalent steht und
y für eine ganze Zahl von 1 bis 240 steht.

12. Verfahren nach einem der vorhergehenden Ansprüche, wobei die zur Ausbildung intermolekularer nichtkovalenter Bindungen befähigten funktionellen Gruppen ausgewählt sind unter Hydroxyl-, primären, sekundären und tertiären Amino-, Thiol-, Keto-, Thioketon-, Imin-, Carbonsäureester-, Carbonsäureamid-, Amidin-, Urethan-, Harnstoff-, Sulfoxid-, Sulfoximin-, Sulfonsäureamid- und Sulfonsäureestergruppen.

13. Verfahren nach einem der vorhergehenden Ansprüche, wobei die zur Ausbildung intermolekularer nichtkovalenter Bindungen befähigten funktionellen Gruppen ausgewählt sind unter Gruppen, die zur Tautomerie befähigt sind.

14. Verfahren nach einem der vorhergehenden Ansprüche, wobei die Liganden wenigstens ein Strukturelement der allgemeinen Formeln I.a oder I.b 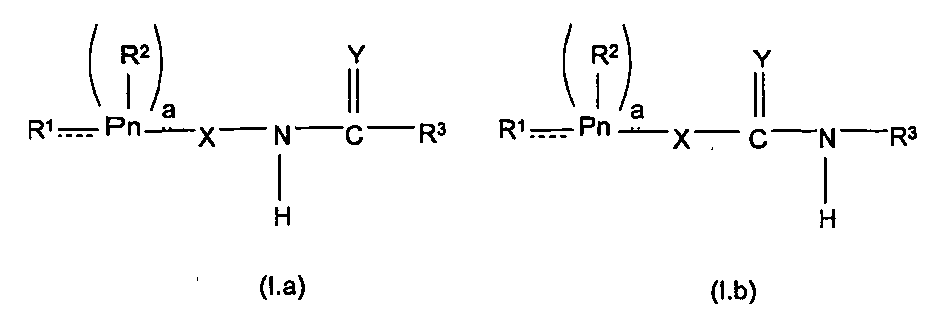 oder Tautomeren davon umfassen, worin
Pn, R¹, R² und a wie in Anspruch 6 definiert sind,
R³ für Wasserstoff, Alkyl, Alkoxy, Cycloalkyl, Cycloalkoxy, Heterocycloalkyl, Heterocycloalkoxy, Aryl, Aryloxy, Hetaryl oder Hetaryloxy steht,
X für eine zweiwertige verbrückende Gruppe mit 1 bis 5 Brückenatomen zwi- schen den flankierenden Bindungen steht,
Y für O, S oder NR⁴ steht, wobei R⁴ für Wasserstoff, Alkyl, Cycloalkyl, Hete- rocycloalkyl, Aryl oder Hetaryl steht,
wobei zwei oder mehr als zwei der Reste X und R¹ bis R⁴ gemeinsam mit dem Strukturelement der Formel I.a oder I.b, an das sie gebunden sind, für eine mono- oder polycyclische Verbindung stehen können.

15. Verfahren nach Anspruch 13, wobei in den Liganden I.a oder I.b R¹ und R² zusammen mit dem Phosphoratom, an das sie gebunden sind, für einen 5- bis 8-gliedrigen Heterocyclus stehen, der gegebenenfalls zusätzlich ein-, zwei- oder dreifach mit Cycloalkyl, Heterocycloalkyl, Aryl oder Hetaryl anelliert ist, wobei der Heterocyclus und, falls vorhanden, die anellierten Gruppen unabhängig voneinander je einen, zwei, drei oder vier Substituenten tragen können, die ausgewählt sind unter Alkyl, Cycloalkyl, Heterocycloalkyl, Aryl, Hetaryl, COOR^{c}, COO⁻M⁺, SO₃R^{c}, SO₃⁻M⁺, PO₃(R^{c})(R^{d}), (PO₃)²⁻(M⁺)₂, NE⁴E⁵, (NE⁴E⁵E⁶)⁺X⁻, OR^{e}, SR^{e}, (CHR^{f}CH₂O)_{y}R^{e}, (CH₂NE⁴)_{y}R^{e}, (CH₂CH₂NE⁴)_{y}R^{e}, Halogen, Nitro, Acyl oder Cyano stehen, worin
R^{c} und R^{d} jeweils gleiche oder verschiedene Reste, ausgewählt unter Alkyl, Cyc- loalkyl, Aryl oder Hetaryl bedeuten,
R^{e}, E⁴, E⁵, E⁶ jeweils gleiche oder verschiedene Reste, ausgewählt unter Was- serstoff, Alkyl, Cycloalkyl, Acyl, Aryl oder Hetaryl bedeuten,
R^{f} für Wasserstoff, Methyl-oder Ethyl steht,
M⁺ für ein Kationäquivalent steht,
X⁻ für ein Anionäquivalent steht und
y für eine ganze Zahl von 1 bis 240 steht.

16. Verfahren nach Anspruch 15, wobei der Heterocyclus chiral ist.

17. Verfahren nach einem der vorhergehenden Ansprüche, wobei die Liganden ausgewählt sind unter Verbindungen der allgemeinen Formeln I.A bis I.C 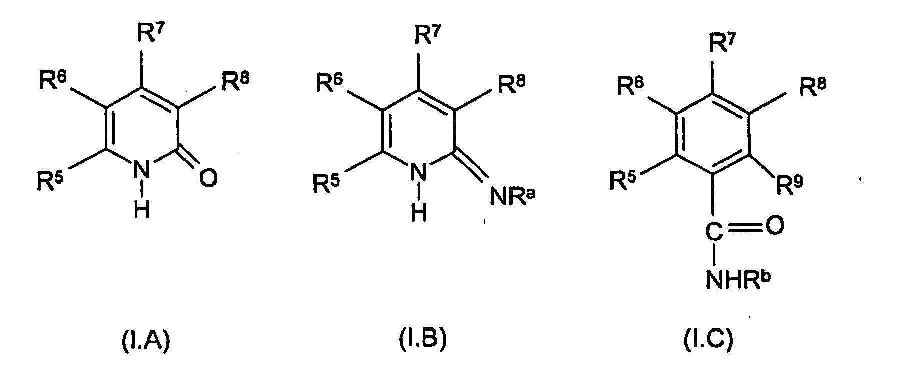 und den Tautomeren davon, worin
einer der Reste R⁵ bis R⁹ für eine pnicogen- oder pseudopnicogenatomhaltige Gruppe steht,
die Reste R⁵ bis R⁹, die nicht für eine pnicogen- oder pseudopnicogenatomhaltige Gruppe stehen, unabhängig voneinander für Wasserstoff, Alkyl, Cycloalkyl, Heterocycloalkyl, Aryl, Hetaryl, WCOOR^{o}, WCOO⁻M⁺, W(SO₃)R^{o}, W(SO₃)⁻M⁺, WPO₃(R^{o})(R^{p}), W(PO₃)²⁻(M⁺)₂, WNE¹E², W(NE¹E²E³)⁺X⁻, WOR^{q}, WSR^{q}, (CHR^{r}CH₂O)ₓR^{q}, (CH₂NE¹)ₓR^{q}, (CH₂CH₂NE¹)ₓR^{q}, Halogen, Nitro, Acyl oder Cyano stehen, worin
W für eine Einfachbindung, ein Heteroatom; eine heteroatomhaltige Gruppe oder eine zweiwertige verbrückende Gruppe mit 1 bis 20 Brückenatomen steht,
R^{o} und R^{p} jeweils gleiche oder verschiedene Reste, ausgewählt unter Alkyl, Cycloalkyl, Aryl oder Hetaryl bedeuten,
R^{q}, E¹, E², E³ jeweils gleiche oder verschiedene Reste, ausgewählt unter Was- serstoff, Alkyl, Cycloalkyl, Acyl, Aryl oder Hetaryl bedeuten,
R^{r} für Wasserstoff, Methyl oder Ethyl steht,
M⁺ für ein Kationäquivalent steht,
X⁻ für ein Anionäquivalent steht und
x für eine ganze Zahl von 1 bis 240 steht, wobei zwei vicinale Reste R⁵ bis R⁹ auch für ein kondensiertes Ringsystem stehen können, und
R^{a} und R^{b} für Wasserstoff, Alkyl, Cycloalkyl, Heterocycloalkyl, Aryl oder Hetaryl stehen, wobei R^{a} auch für Acyl stehen kann.

18. Verfahren nach Anspruch 17, wobei die Reste R⁵ bis R⁹, die für eine pnicogen- oder pseudopnicogenatomhaltige Gruppe stehen, für eine Gruppe der Formel -W'-PnR¹R² stehen, worin
Pn für ein Pnicogenatom oder Pseudopnicogenatom steht,
W' für eine Einfachbindung, ein Heteroatom, eine heteroatomhaltige Gruppe oder eine zweiwertige verbrückende Gruppe mit 1 bis 4 Brückenatomen zwischen den flankierenden Bindungen steht,
R¹ und R² wie in einem der Ansprüche 13 oder 14 definiert sind.

19. Verfahren zur Herstellung chiraler Verbindungen durch Umsetzung einer prochiralen Verbindung, die wenigstens eine ethylenisch ungesättigte Doppelbindung enthält, mit einem Substrat in Gegenwart eines chiralen Katalysators, umfassend wenigstens einen Übergangsmetallkomplex mit Liganden, die ausgewählt sind unter Verbindungen der allgemeinen Formeln I.A bis I.C 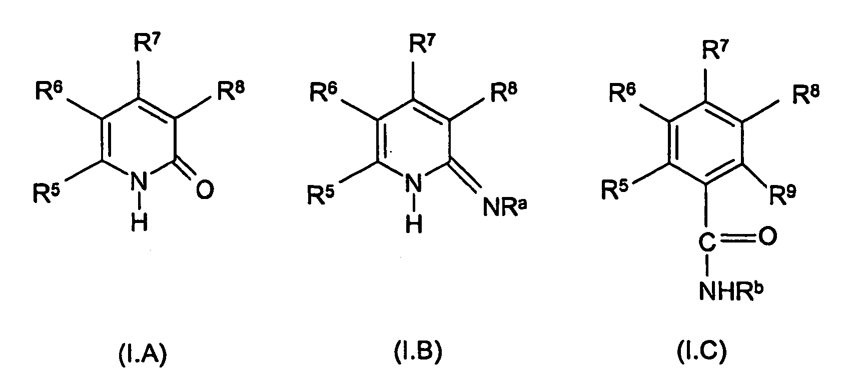 und den Tautomeren davon, worin
einer der Reste R⁵ bis R⁹ für eine pnicogen- oder pseudopnicogenatomhaltige Gruppe steht,
die Reste R⁵ bis R⁹, die nicht für eine pnicogen- oder pseudopnicogenatomhaltige Gruppe stehen, unabhängig voneinander für Wasserstoff, Alkyl, Cycloalkyl, Heterocycloalkyl, Aryl, Hetaryl, WCOOR^{o}, WCOO⁻M⁺, W(SO₃)R^{o}, W(SO₃)⁻M⁺, WPO₃(R^{o})(R^{p}), W(PO₃)²⁻(M⁺)₂, WNE¹E², W(NE¹E²E³)⁺X⁻, WOR^{q}, WSR^{q}, (CHR^{r}CH₂O)ₓR^{q}, (CH₂NE¹)ₓR^{q}, (CH₂CH₂NE¹)ₓR^{q}, Halogen, Nitro, Acyl oder Cyano stehen, worin
W für eine Einfachbindung, ein Heteroatom, eine heteroatomhaltige Gruppe oder eine zweiwertige verbrückende Gruppe mit 1 bis 20 Brückenatomen steht,
R^{o} und R^{p} jeweils gleiche oder verschiedene Reste, ausgewählt unter Alkyl, Cycloalkyl, Aryl oder Hetaryl bedeuten,
R^{q}, E¹, E², E³ jeweils gleiche oder verschiedene Reste, ausgewählt unter Was- serstoff, Alkyl, Cycloalkyl, Acyl, Aryl oder Hetaryl bedeuten,
R^{r} für Wasserstoff, Methyl oder Ethyl steht,
M⁺ für ein Kationäquivalent steht,
X⁻ für ein Anionäquivalent steht und
x für eine ganze Zahl von 1 bis 240 steht, wobei zwei vicinale Reste R⁵ bis R⁹ auch für ein kondensiertes Ringsystem stehen können, und
R^{a} und R^{b} für Wasserstoff, Alkyl, Cycloalkyl, Heterocycloalkyl, Aryl oder Hetaryl stehen, wobei R^{a} auch für Acyl stehen kann.

20. Verfahren nach einem der Ansprüche 17 bis 19, wobei die Liganden ausgewählt sind unter Verbindungen der allgemeinen Formeln I.i bis I.iii 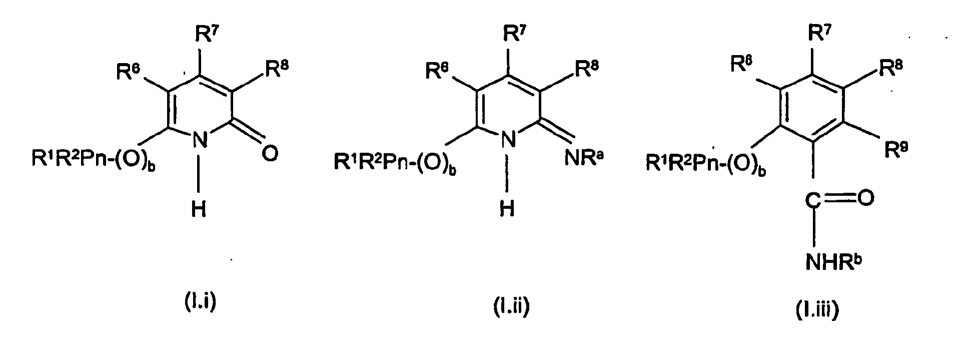 und den Tautomeren davon, worin
b für 0 der 1 steht,
Pn für eine pnicogen- oder pseudopnicogenatomhaltige Gruppe steht,
R¹ und R² wie in einem der Ansprüche 13 oder 14 definiert sind,
R⁶ bis R⁹ unabhängig voneinander für Wasserstoff, C₁-C₄-Alkyl, C₁-C₄-Alkoxy, Aryl, Heteroaryl, Acyl, Halogen, C₁-C₄-Alkoxycarbonyl oder Carboxylat ste- hen,
wobei zwei vicinale Reste R⁶ bis R⁹ auch für ein kondensiertes Ringsystem stehen können, und
R^{a} und R^{b} für Wasserstoff, Alkyl, Cycloalkyl oder Aryl stehen, wobei R^{a} auch für Acyl stehen kann.

21. Verfahren nach einem der vorhergehenden Ansprüche, wobei die prochirale Verbindung ausgewählt ist unter Olefinen, Aldehyden, Ketonen und Iminen.

22. Verfahren nach einem der vorhergehenden Ansprüche, bei dem es sich um eine Hydrierung, Hydroformylierung, Hydrocyanierung, Carbonylierung, Hydroacylierung, Hydroamidierung, Hydroveresterung, Hydrosilylierung, Hydroborierung, Aminolyse, Alkoholyse, Isomerisierung, Metathese, Cyclopropanierung, Aldolkondensation, allylische Alkylierung oder [4+2]-Cycloaddition handelt.

23. Verfahren nach einem der vorhergehenden Ansprüche, bei dem es sich um eine 1,2-Addition, bevorzugt eine 1-Hydro-2-Carbo-Addition, handelt.

24. Verfahren nach einem der vorhergehenden Ansprüche, bei dem es sich um eine Hydroformylierung handelt.

25. Verfahren nach einem der vorhergehenden Ansprüche, bei dem es sich um eine Hydrierung handelt.

26. Ligand, wie in Anspruch 20 definiert, ausgewählt unter Verbindungen der allgemeinen Formeln I.i bis I.iii 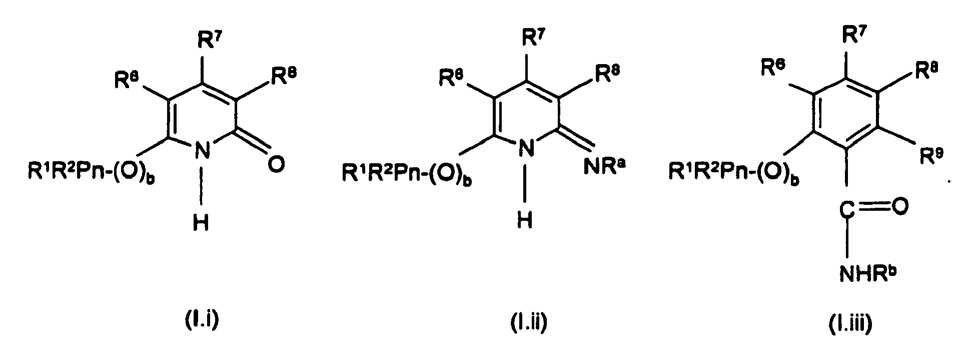 und den Tautomeren davon, worin
b für 0 oder 1 steht,
Pn für P, As oder Sb steht,
R¹ und R² so miteinander verbrückt sind, dass sie für eine pnicogenhaltige Grup- pe der Formel 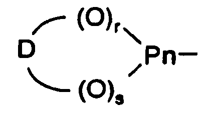 stehen, worin
r und s unabhängig voneinander für 0 oder 1 stehen, und
D zusammen mit dem Phosphoratom und dem/den Sauerstoffatom(en), an die es gebunden ist, für einen 4- bis 8-gliedrigen Heterocyclus steht, der gegebenenfalls ein-, zwei- oder dreifach mit Cycloalkyl, Heterocycloalkyl, Aryl und/oder Hetaryl anelliert ist, wobei die anellierten Gruppen unabhän- gig voneinander je einen, zwei, drei oder vier Substituenten, ausgewählt unter Alkyl, Alkoxy, Halogen, Sulfonat, NE⁴E⁵, Alkylen-NE⁴E⁵, Nitro, Cyano und Carboxylat, tragen können und/oder D einen, zwei, drei oder vier Sub- stituenten, die ausgewählt sind unter Alkyl, Hydroxy, Alkoxy, gegebenen- falls substituiertem Cycloalkyl und gegebenenfalls substituiertem Aryl, auf- weisen kann und/oder D durch 1, 2 oder 3 gegebenenfalls substituierte He- teroatome unterbrochen sein kann,
R⁶ bis R⁹ unabhängig voneinander für Wasserstoff, C₁-C₄-Alkyl, C₁-C₄-Alkoxy, Aryl, Heteroaryl, Acyl, Halogen, C₁-C₄-Alkoxycarbonyl oder Carboxylat ste- hen,
wobei zwei vicinale Reste R⁶ bis R⁹ auch für ein kondensiertes Ringsystem ste- hen können und
R^{a} und R^{b} für Wasserstoff, Alkyl, Cycloalkyl oder Aryl stehen, wobei R^{a} auch für Acyl stehen kann.

27. Ligand, wie in Anspruch 20 definiert, ausgewählt unter
- Liganden der Formel I.i 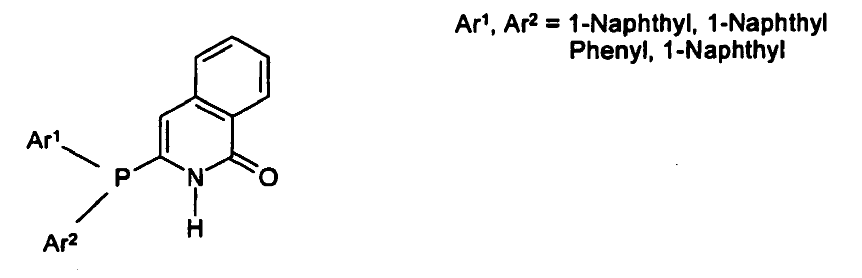
- Liganden der Formel I.ii 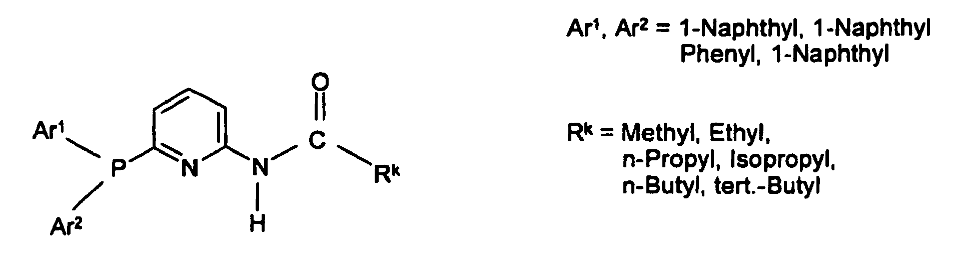 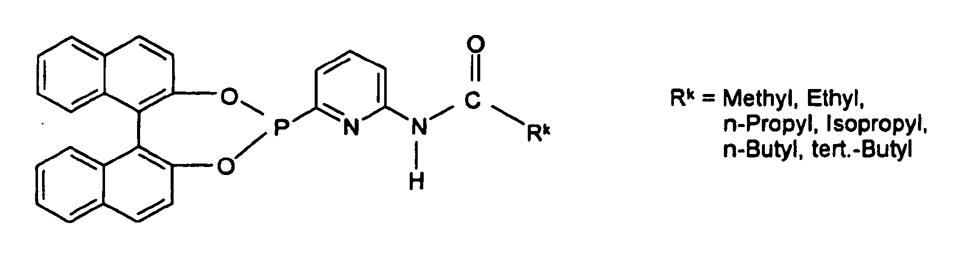 und den Tautomeren davon.

28. Katalysator, umfassend wenigstens einen Übergangsmetallkomplex mit Liganden, die jeweils eine pnicogenatomhaltige oder pseudopnicogenatomhaltige Gruppe und wenigstens eine zur Ausbildung intermolekularer, nichtkovalenter Bindungen befähigte funktionelle Gruppe aufweisen, wobei der Komplex über intermolekulare nichtkovalente Bindungen dimerisierte Liganden aufweist, die ausgewählt sind unter Verbindungen der Formeln 1.i bis 1.iii, wie in Anspruch 26 oder 27 definiert.

29. Verwendung eines Katalysators nach Anspruch 28, zur Hydrierung, Hydroformylierung, Hydrocyanierung, Carbonylierung, Hydroacylierung, Hydroamidierung, Hydroveresterung, Hydrosilylierung, Hydroborierung, Aminolyse, Alkoholyse, Isomerisierung, Metathese, Cyclopropanierung, Aldolkondensation, allylische Alkylierung oder [4+2]-Cycloaddition.

## Claims

1. A process for preparing chiral compounds by reacting a prochiral compound comprising at least one ethylenically unsaturated double bond with a substrate in the presence of a chiral catalyst comprising at least one transition metal complex with ligands which each have a pnicogen-comprising or pseudopnicogen-comprising group and at least one functional group capable of forming intermolecular, noncovalent bonds, with the complex comprising ligands dimerized via intermolecular noncovalent bonds.

2. The process according to claim 1, wherein the ligands contain at least one pnicogen atom selected from among N, P, As and Sb.

3. The process according to claim 2, wherein the ligands contain at least one nitrogen atom in the form of an imine.

4. The process according to claim 1 wherein the ligands contain at least one carbene carbon atom as pseudopnicogen atom.

5. The process according to any of the preceding claims, wherein the distance between the atoms of the pnicogen-comprising or pseudopnicogen-comprising groups of the dimerized ligands which coordinate to the transition metal is not more than 5 Å.

6. The process according to any of the preceding claims, wherein the ligands which are dimerized via intermolecular noncovalent bonds are selected from among ligand/ligand pairs of the formula I: 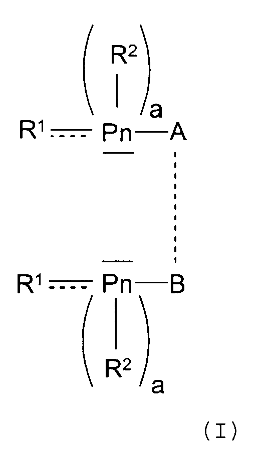 where
the atoms Pn are independently selected pnicogen atoms or coordinating atoms of pseudopnicogen- comprising groups,
A and B are radicals of mutually complementary functional groups between which there is a noncovalent interaction,
R¹ is a singly or doubly bonded organyl radical,
R² is a singly bonded organyl radical,
a is, depending on the valence of the pnicogen atom or coordinating atom of the pseudopnicogen-comprising groups and the number of coordination sites occupied by the radical R¹, 0 or 1,
where the pnicogen atom or coordinating atom of the pseudopnicogen-comprising group can, together with at least two of the radicals R¹, R² and A or B bound thereto, also be part of a ring system.

7. The process according to any of claims 1 to 6, wherein the pnicogen- or pseudopnicogen-comprising group is a carbene group and the carbene group is part of a ring system of the formula I.1 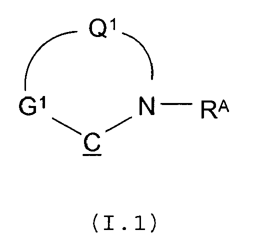 where
G¹ is NR^{B} or CR^{C}R^{D}, where R^{B}, R^{C} and R^{D} are each, independently of one another, hydrogen, alkyl, cycloalkyl, heterocycloalkyl, aryl or hetaryl, where R^{C} or R^{D} may also be one bond equivalent of a double bond,
Q¹ is a divalent bridging group having from 1 to 5 atoms between the flanking bonds,
R^{A} is hydrogen, alkyl, cycloalkyl, hetero- cycloalkyl, aryl or hetaryl,
where one of the radicals R^{A}, R^{B}, R^{C}, R^{D} or a radical on the group Q¹ is a functional group capable of forming intermolecular, noncovalent bonds or comprises such a group.

8. The process according to claim 7, where the compounds of the formula I.1 are selected from among compounds of the formulae I.1a to I.1d 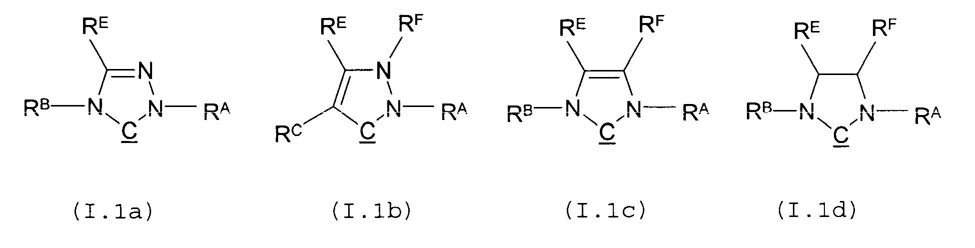 where
R^{A}, R^{B}, R^{C}, R^{E} and R^{F} are each, independently of one another, hydrogen, alkyl, cycloalkyl, heterocycloalkyl, aryl or hetaryl, where one of these radicals is a functional group capable of forming intermolecular, noncovalent bonds or comprises such a group.

9. The process according to any of claims 1 to 6, wherein the pnicogen- or pseudopnicogen-comprising group is an imine group which is part of a ring system of the formula I.2 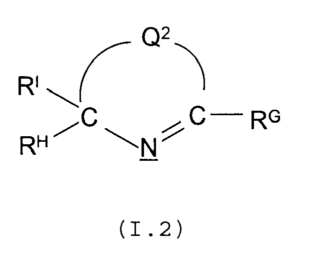 where
Q² is a divalent bridging group having from 1 to 5 atoms between the flanking bonds, and
R^{G}, R^{H} and R^{I} are each, independently of one another, hydrogen, alkyl, cycloalkyl, heterocycloalkyl, aryl or hetaryl,
where one of the radicals R^{G}, R^{H}, R^{I} or a radical on the group Q² is a functional group capable of forming intermolecular, noncovalent bonds or comprises such a group.

10. The process according to claim 9, wherein the compounds of the formula I.2 are selected from among cyclic imines of the formulae I.2a and I.2b 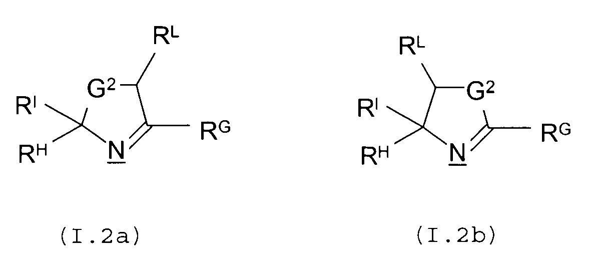 where
G² is O or NR^{K}, where R^{K} is hydrogen, alkyl, cycloalkyl, heterocycloalkyl, aryl or hetaryl,
R^{G}, R^{H}, R^{I} and R^{L} are each, independently of one another, hydrogen, alkyl, cycloalkyl, heterocycloalkyl, aryl or hetaryl,
where one of the radicals R^{G}, R^{H}, R^{I}, R^{K} and R^{L} is a functional group capable of forming intermolecular, noncovalent bonds or comprises such a group.

11. The process according to any of claims 1 to 5, wherein the pnicogen- or pseudopnicogen-comprising group is selected from among groups of the formula I.3 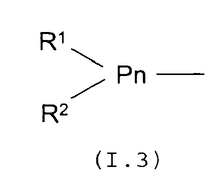 where
Pn is N, P, As or Sb, preferably P,
R¹ and R² are each, independently of one another, alkyl, alkoxy, cycloalkyl, cycloalkoxy, heterocycloalkoxyl,heterocycloalkoxy, aryl, aryloxy, hetaryl or hetaryloxy or
R¹ and R² together with the phosphorus atom to which they are bound form a 4- to 8-membered heterocycle which may additionally be fused with one, two or three cycloalkyl, heterocycloalkyl, aryl or hetaryl groups, where the heterocycle and, if present, the fused-on groups may each bear, independently of one another, one, two, three or four substituents selected from among alkyl, cycloalkyl, heterocycloalkyl, aryl, hetaryl, COOR^{c}, COO⁻M⁺, SO₃R^{c}, SO₃⁻M⁺, PO₃(R^{c}) (R^{d}) , (PO₃)²⁻(M⁺)₂, NE⁴E⁵ , (NE⁴E⁵E⁶)⁺X⁻, OR^{e}, SR^{e}, (CHR^{f}CH²O)_{y}R^{e} , (CH₂O)_{y}R^{e}, (CH₂CH₂NE⁴)_{y}R^{e}, halogen, nitro, acyl and cyano,
where
R^{c} and R^{d} are identical or different radicals selected from among hydrogen, alkyl, cycloalkyl, aryl and hetaryl,
R^{e}, E⁴, E⁵, E⁶ are identical or different rad- icals selected from among hydrogen, alkyl, cycloalkyl, aryl and hetaryl,
R^{f} is hydrogen, methyl or ethyl,
M⁺ is a cation equivalent,
X⁻ is an anion equivalent and
y is an integer from 1 to 240.

12. The process according to any of the preceding claims, wherein the functional groups capable of forming intermolecular noncovalent bonds are selected from among hydroxyl, primary, secondary and tertiary amino, thiol, keto, thioketone, imine, carboxylic ester, carboxamide, amidine, urethane, urea, sulfoxide, sulfoximine, sulfonamide and sulfonic ester groups.

13. The process according to any of the preceding claims, wherein the functional groups capable of forming intermolecular noncovalent bonds are selected from among groups which are capable of tautomerism.

14. The process according to any of the preceding claims, wherein the ligands comprise at least one structural element of the formula I.a or I.b 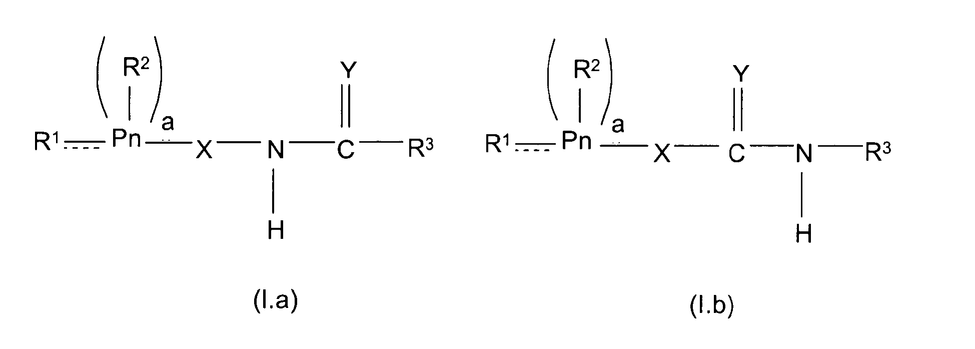 or tautomers thereof, where
Pn, R¹, R² and a are as defined in claim 6,
R³ is hydrogen, alkyl, alkoxy, cycloalkyl, cycloalkoxy, heterocycloalkyl, hetero- cycloalkoxy, aryl, aryloxy, hetaryl or hetaryloxy,
X is a divalent bridging group having from 1 to 5 bridge atoms between the flanking bonds,
Y is O, S or NR⁴, where R⁴ is hydrogen, alkyl, cycloalkyl, heterocycloalkyl, aryl or hetaryl,
where two or more of the radicals X and R¹ to R⁴ together with the structural element of the formula I.a or I.b to which they are bound may form a monocyclic or polycyclic compound.

15. The process according to claim 13, wherein, in the ligands I.a or I.b, R¹ and R² together with the phosphorus atom to which they are bound form a 5-to 8-membered heterocycle which may additionally be fused with one, two or three cycloalkyl, heterocycloalkyl, aryl or hetaryl groups, where the heterocycle and, if present, the fused-on groups may each bear, independently of one another, one, two, three or four substituents selected from among alkyl, cycloalkyl, heterocycloalkyl, aryl, hetaryl, COOR^{c}, COO⁻M⁺, SO₃R^{c}, SO₃⁻M⁺, PO₃(R^{c})(R^{d}), (PO₃)²⁻(M⁺)₂, NE⁴E⁵, (NE⁴E⁵E⁶)⁺X⁻, OR^{e}, SR^{e}, (CHR^{f}CH₂O)_{y}R^{e}, (CH₂NE⁴)_{y}R^{e}, (CH₂CH₂NE⁴)_{y}R^{e}, halogen, nitro, acyl and cyano, where
R^{c} and R^{d} are identical or different radicals selected from among alkyl, cycloalkyl, aryl and hetaryl,
R^{e}, E⁴, E⁵, E⁶ are identical or different radicals selected from among hydrogen, alkyl, cycloalkyl, acyl, aryl and hetaryl,
R^{f} is hydrogen, methyl or ethyl,
M⁺ is a cation equivalent,
X⁻ is an anion equivalent and
y is an integer from 1 to 240.

16. The process according to claim 15, wherein the heterocycle is chiral.

17. The process according to any of the preceding claims, wherein the ligands are selected from among compounds of the formulae I.A to I.C 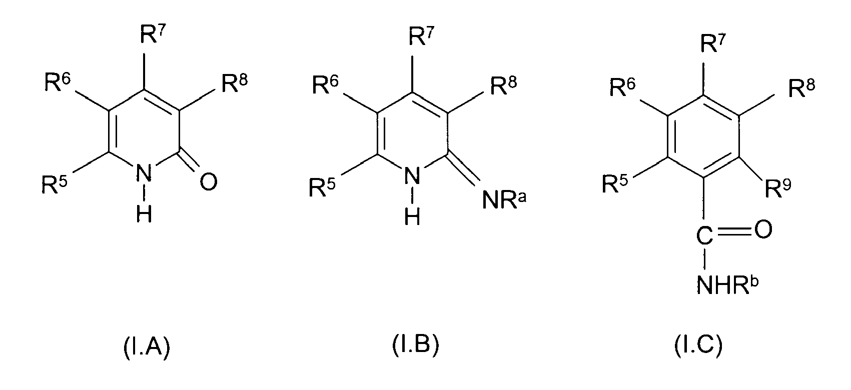 and the tautomers thereof, where
one of the radicals R⁵ to R⁹ is a pnicogen- or pseudopnicogen-comprising group,
the radicals R⁵ to R⁹ which are not a pnicogen- or pseudopnicogen-comprising group are each, independently of one another, hydrogen, alkyl, cycloalkyl, heterocycloalkyl, aryl, hetaryl, WCOOR^{o}, WCOO⁻M⁺, W(SO₃)R^{o}, W(SO₃)⁻M⁺, WPO₃(R^{o})(R^{p}), W(PO₃)²⁻(M⁺)₂, WNE¹E², W(NE¹E²E³)⁺X⁻, WOR^{q}, WSR^{q}, (CHR^{r}CH₂O)ₓR^{q}, (CH₂NE¹)ₓR^{q}, (CH₂CH₂NE¹)ₓR^{q}, halogen, nitro, acyl or cyano, where
W is a single bond, a heteroatom, a heteroatom- comprising group or a divalent bridging group having from 1 to 20 bridge atoms,
R^{o} and R^{p} are identical or different radicals selected from among alkyl, cycloalkyl, aryl and hetaryl,
R^{q}, E¹, E², E³ are identical or different radicals selected from among hydrogen, alkyl, cycloalkyl, acyl, aryl and hetaryl,
R^{r} is hydrogen, methyl or ethyl,
M⁺ is a cation equivalent,
X⁻ is an anion equivalent and
x is an integer from 1 to 240, where two vicinal radicals R⁵ to R⁹ may also form a fused ring system, and
R^{a} and R^{b} are each hydrogen, alkyl, cycloalkyl, heterocycloalkyl, aryl or hetaryl, and R^{a} can also be acyl.

18. The process according to claim 17, wherein the radicals R⁵ to R⁹ which are a pnicogen- or pseudopnicogen-comprising group are each a group of the formula -W'-PnR¹R² , where
Pn is a pnicogen atom or pseudopnicogen atom,
W' is a single bond, a heteroatom, a heteroatom- comprising group or a divalent bridging group having from 1 to 4 bridge atoms between the flanking bonds,
R¹ and R² are defined as in claim 13 or 14.

19. A process for preparing chiral compounds by reacting a prochiral compound comprising at least one ethylenically unsaturated double bond with a substrate in the presence of a chiral catalyst comprising at least one transition metal complex with ligands selected from among compounds of the formulae I.A to I.C 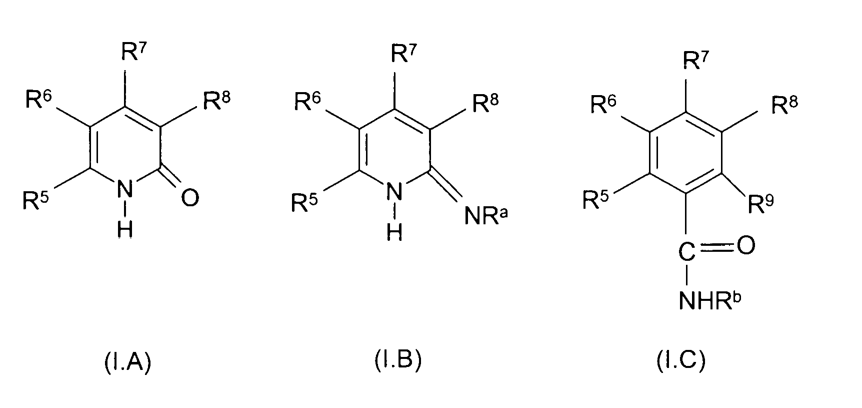 and the tautomers thereof, where
one of the radicals R⁵ to R⁹ is a pnicogen- or pseudopnicogen-comprising group,
the radicals R⁵ to R⁹ which are not a pnicogen- or pseudopnicogen-comprising group are each, independently of one another, hydrogen, alkyl, cycloalkyl, heterocycloalkyl, aryl, hetaryl, WCOOR^{o}, WCOO⁻M⁺, W(SO₃)R^{o}, W(SO₃)⁻M⁺, WPO₃(R^{o})(R^{p}), W(PO₃)²⁻(M⁺)₂, WNE¹E², W(NE¹E²E³)⁺X⁻, WOR^{q}, WSR^{q}, (CHR^{r}CH₂O)ₓR^{q}, (CH₂NE¹)ₓR^{q}, (CH₂CH₂NE¹)ₓR^{q}, halogen, nitro, acyl or cyano, where
W is a single bond, a heteroatom, a heteroatom- comprising group or a divalent bridging group having from 1 to 20 bridge atoms,
R^{o} and R^{P} are identical or different radicals selected from among alkyl, cycloalkyl, aryl and hetaryl,
R^{q}, E¹, E², E³ are identical or different radicals selected from among hydrogen, alkyl, cycloalkyl, acyl, aryl and hetaryl,
R^{r} is hydrogen, methyl or ethyl,
M⁺ is a cation equivalent,
X⁻ is an anion equivalent and
x is an integer from 1 to 240, where two vicinal radicals R⁵ to R⁹ may also form a fused ring system, and
R^{a} and R^{b} are each hydrogen, alkyl, cycloalkyl, heterocycloalkyl, aryl or hetaryl, and R^{a} can also be acyl.

20. The process according to any of claims 17 to 19, wherein the ligands are selected from among compounds of the formulae I.i to I.iii 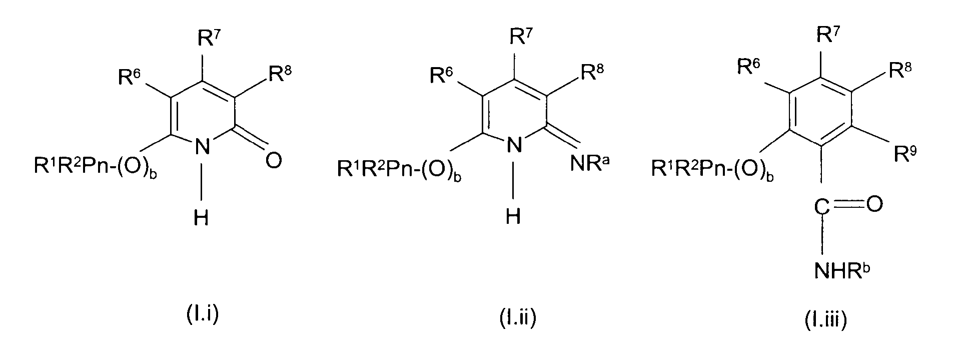 and the tautomers thereof, where
b is 0 or 1,
Pn is a pnicogen- or pseudopnicogen-comprising group,
R¹ and R² are defined as in claim 13 or 14,
R⁶ to R⁹ are each, independently of one another, hydrogen, C₁-C₄-alkyl, C₁-C₄-alkoxy, aryl, heteroaryl, acyl, halogen, C₁-C₄-alkoxycarbonyl or carboxylate,
where two vicinal radicals R⁶ to R⁹ may also form a fused ring system, and
R^{a} and R^{b} are each hydrogen, alkyl, cycloalkyl or aryl, and R^{a} can also be acyl.

21. The process according to any of the preceding claims, wherein the prochiral compound is selected from among olefins, aldehydes, ketonen and imines.

22. The process according to any of the preceding claims which is a hydrogenation, hydroformylation, hydrocyanation, carbonylation, hydroacylation, hydroamidation, hydroesterification, hydrosilylation, hydroboration, aminolysis, alcoholysis, isomerization, metathesis, cyclopropanation, aldol condensation, allylic alkylation or [4+2]-cycloaddition.

23. The process according to any of the preceding claims which is a 1,2-addition, preferably a 1-hydro-2-carbo addition.

24. The process according to any of the preceding claims which is a hydroformylation.

25. The process according to any of the preceding claims which is a hydrogenation.

26. The ligand as defined in claim 20, selected from among compounds of the formulae I.i to I.iii 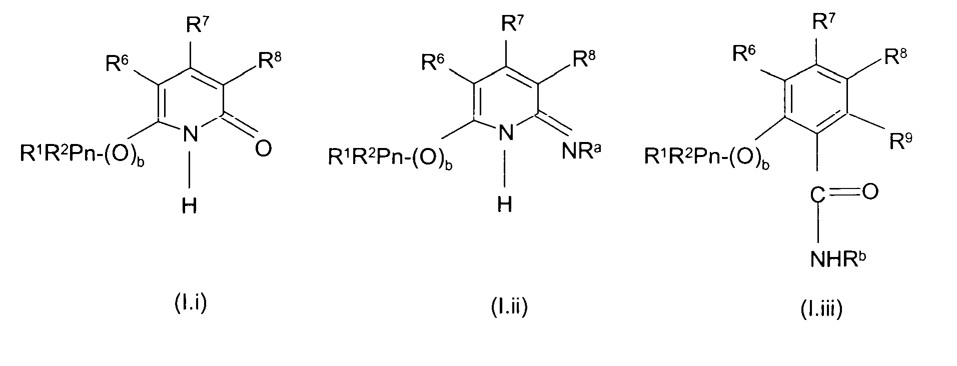 and the tautomers thereof, where
b is 0 or 1,
Pn is P, As or Sb,
R¹ and R² are bridged so that they form a pnicogen-comprising group of the formula 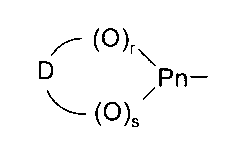 where
r and s are each, independently of one another, 0 or 1, and
D together with the phosphorus atom and the oxygen atom(s) to which it is bound forms a 4- to 8- membered heterocycle which may be fused with one, two or three cycloalkyl, heterocycloalkyl, aryl and/or hetaryl groups, where the fused-on groups may each independently of one another bear one, two, three or four substituents selected from among alkyl, alkoxy, halogen, sulfonate, NE⁴E⁵, alkylene- NE⁴E⁵, nitro, cyano and carboxylate, and/or D may bear one, two, three or four substituents selected from among alkyl, hydroxy, alkoxy, optionally substituted cycloalkyl and optionally substituted aryl, and/or D may be interrupted by 1, 2 or 3 optionally substituted heteroatoms;
R⁶ to R⁹ are each, independently of one another, hydrogen, C₁-C₄-alkyl, C₁-C₄-alkoxy, aryl, heteroaryl, acyl, halogen, C₁-C₄-alkoxycarbonyl or carboxylate,
where two vicinal radicals R⁶ to R⁹ may also form a fused ring system, and
R^{a} and R^{b} are each hydrogen, alkyl, cycloalkyl or aryl, and R^{a} can also be acyl.

27. The ligand as defined in claim 20, selected from among
- ligands of the formula I.i 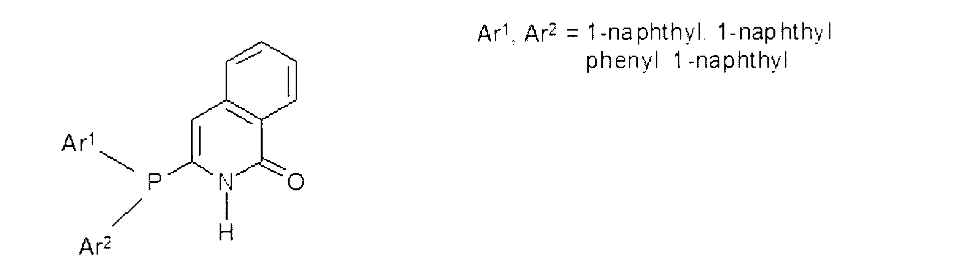
- ligands of the formula I.ii 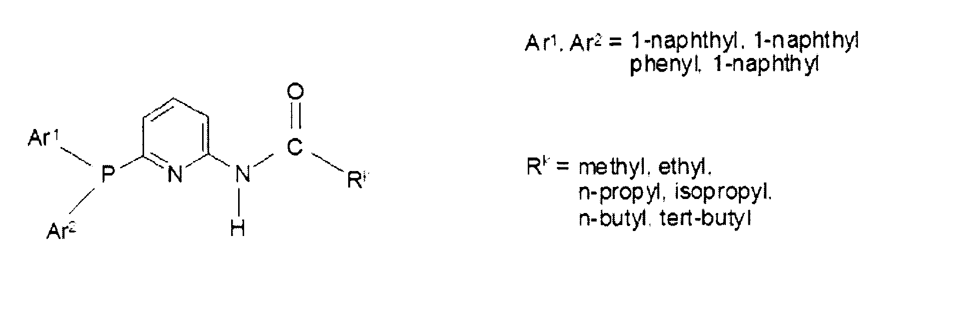 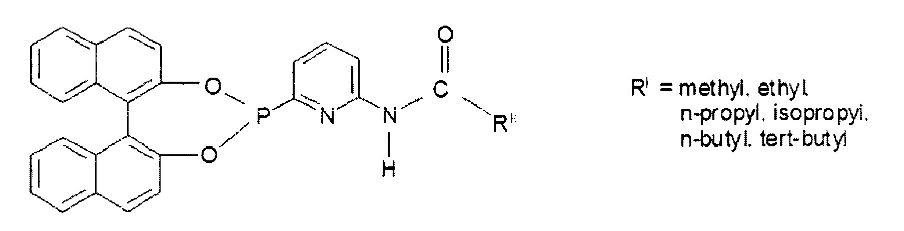 and the tautomers thereof.

28. A catalyst comprising at least one transition metal complex with ligands which each have a pnicogen-comprising or pseudopnicogen-comprising group and at least one functional group capable of forming intermolecular, noncovalent bonds, with the complex comprising ligands which are selected from among compounds of the formulae I.i to I.iii as defined in claim 26 or 27 and are dimerized via intermolecular noncovalent bonds.

29. The use of a catalyst according to claim 28 for hydrogenation, hydroformylation, hydrocyanation, carbonylation, hydroacylation, hydroamidation, hydroesterification, hydrosilylation, hydroboration, aminolysis, alcoholysis, isomerization, metathesis, cyclopropanation, aldol condensation, allylic alkylation or [4+2]-cycloaddition.

## Revendications

1. Procédé pour la préparation de composés chiraux par transformation d'un composé prochiral, qui contient au moins une double liaison éthyléniquement insaturée, avec un substrat, en présence d'un catalyseur chiral, comprenant au moins un complexe de métal de transition avec des ligands, qui présentent à chaque fois un groupe contenant des atomes de pnictogène ou de pseudopnictogène et au moins un groupe fonctionnel apte à la réalisation de liaisons non covalentes, intermoléculaires, le complexe présentant des ligands dimérisés via des liaisons non covalentes intermoléculaires.

2. Procédé selon la revendication 1, où les ligands présentent au moins un atome de pnictogène qui est choisi parmi N, P, As et Sb.

3. Procédé selon la revendication 2, où les ligands présentant au moins un atome d'azote sous forme d'une imine.

4. Procédé selon la revendication 1, où les ligands présentent au moins un atome de carbone de type carbène comme atomes de pseudopnictogène.

5. Procédé selon l'une quelconque des revendications précédentes, où la distance entre les atomes, qui coordinent avec le métal de transition, des groupes contenant des atomes de pnictogène ou de pseudopnictogène des ligands dimérisés est d'au maximum 5 Å.

6. Procédé selon l'une quelconque des revendications précédentes, où les ligands dimérisés via des liaisons non covalentes intermoléculaires sont choisis parmi les paires ligand/ligand de formule I 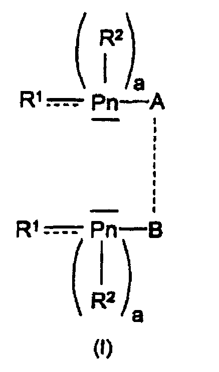 où
Pn représente des atomes de pnictogène ou des atomes de coordination de groupes contenant des atomes de pseudopnictogène, choisis indépendamment les uns des autres,
A et B représentent des radicaux avec des groupes fonctionnels complémentaires les uns aux autres, entre lesquels il existe une interaction non covalente,
R¹ représente un radical organyle lié par une liaison simple ou double,
R² représente un radical organyle lié par une liaison simple,
a en fonction de la valence de l'atome de pnictogène ou de l'atome de coordination de groupes contenant des atomes de pseudopnictogène et du type de liaison du radical R¹, représente 0 ou 1,
l'atome de pnictogène ou les atomes de coordination du groupe contenant des atomes de pseudopnictogène pouvant également faire partie, ensemble avec au moins deux des radicaux R¹, R² qui y sont liés, et A ou B, d'un système cyclique.

7. Procédé selon l'une quelconque des revendications 1 à 6, où il s'agit, pour le groupe contenant des atomes de pnictogène ou de pseudopnictogène, d'un groupe carbène et le groupe carbène fait partie d'un système cyclique de formule générale I.1 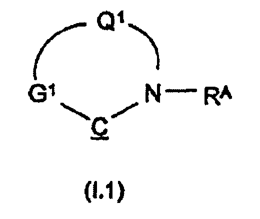 où
G¹ représente NR^{B} ou CR^{C}R^{D} où R^{B} R^{C} et R^{D} représentent indépendamment l'un de l'autre, hydrogène, alkyle, cycloalkyle, hétérocycloalkyle, aryle ou hétaryle, R^{C} ou R^{D} pouvant également représenter un équivalent de liaison d'une double liaison,
Q¹ représente un groupe divalent formant un pont comprenant 1 à 5 atomes entre les liaisons flanquantes,
R^{A} représente hydrogène, alkyle, cycloalkyle, hétérocycloalkyle, aryle ou hétaryle,
où un des radicaux R^{A}, R^{B}, R^{C}, R^{D} ou un radical sur le groupe Q¹ représente un groupe fonctionnel apte à la réalisation de liaisons non covalentes, intermoléculaires ou comprend un tel groupe.

8. Procédé selon la revendication 7, où les composés de formule I.1 sont choisis parmi les composés des formules I.1a à I.1d 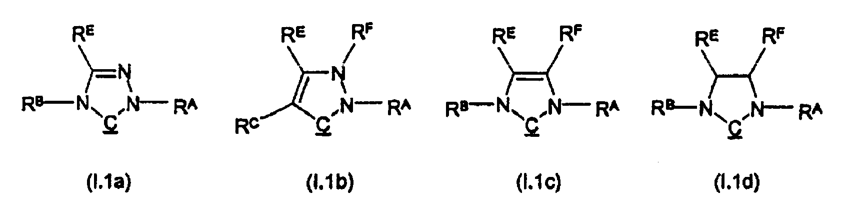 où
R^{A}, R^{B}, R^{C}, R^{E} et R^{F} représentent, indépendamment l'un de l'autre, hydrogène, alkyle, cycloalkyle, hétérocycloalkyle, aryle ou hétaryle, où un de ces radicaux représente un groupe fonctionnel apte à la réalisation de liaisons non covalentes, intermoléculaires ou comprend un tel groupe.

9. Procédé selon l'une quelconque des revendications 1 à 6, où il s'agit, pour le groupe contenant des atomes de pnictogène ou de pseudopnictogène, d'un groupe imine, qui fait partie d'un système cyclique de formule générale 1.2 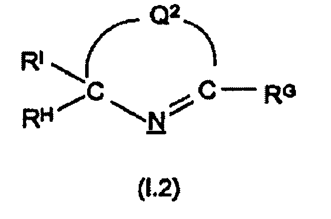 où
Q² représente un groupe divalent formant un pont comprenant 1 à 5 atomes entre les liaisons flanquantes, et
R^{G}, R^{H} et R^{I} représentent indépendamment l'un de l'autre, hydrogène, alkyle, cycloalkyle, hétérocycloalkyle, aryle ou hétaryle,
où un des radicaux R^{G}, R^{H}, R^{I} ou un radical sur le groupe Q² représente un groupe fonctionnel apte à la réalisation de liaisons non covalentes, intermoléculaires ou comprend un tel groupe.

10. Procédé selon la revendication 9, où les composés de formule 1.2 sont choisis parmi les imines cycliques des formules I.2a ou 1.2b 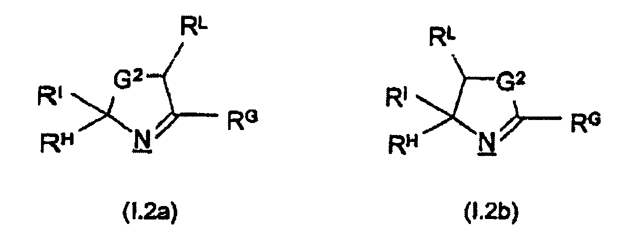 où
G² représente O ou NR^{K}, où R^{K} représente hydrogène, alkyle, cycloalkyle, hétérocycloalkyle, aryle ou hétaryle,
R^{G}, R^{H}, R^{I} et R^{L} représentent indépendamment l'un de l'autre, hydrogène, alkyle, cycloalkyle, hétérocycloalkyle, aryle ou hétaryle,
où un des radicaux R^{G}, R^{H}, R^{I}, R^{K} et R^{L} représente un groupe fonctionnel apte à la réalisation de liaisons non covalentes, intermoléculaires ou comprend un tel groupe.

11. Procédé selon l'une quelconque des revendications 1 à 5, où il s'agit, pour le groupe contenant des atomes de pnictogène ou de pseudopnictogène, d'un groupe qui est choisi parmi les groupes de formule générale I.3 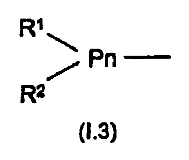 où
Pn représente N, P, As ou Sb, de préférence P,
R¹ et R² représentent, indépendamment l'un de l'autre, alkyle, alcoxy, cycloalkyle, cycloalcoxy, hétérocycloalkyle, hétérocycloalcoxy, aryle, aryloxy, hétaryle ou hétaryloxy ou
R¹ et R² ensemble avec l'atome de phosphore auquel ils sont liés, représentent un hétérocycle de 4 à 8 chaînons, qui est le cas échéant en outre monocondensé, dicondensé ou tricondensé avec cycloalkyle, hétérocycloalkyle, aryle ou hétaryle, l'hétérocycle et, le cas échéant, les groupes condensés pouvant porter, indépendamment l'un de l'autre, chacun un, deux, trois ou quatre substituants qui sont choisis parmi alkyle, cycloalkyle, hétérocycloalkyle, aryle, hétaryle, COOR^{c}, COO⁻M⁺, SO₃R^{c}, SO₃⁻M⁺, PO₃(R^{c})(R^{d}), (PO₃)²⁻(M⁺)₂, NE⁴E⁵, (NE⁴E⁵E⁶)⁺X⁻ , OR^{e}, SR^{e}, (CHR^{f}CH₂O)_{y}R^{e}, (CH₂O)_{y}R^{e}, (CH₂CH₂NE⁴)_{y}R^{e}, halogène, nitro, acyle ou cyano,
où
R^{c} et R^{d} signifient des radicaux à chaque fois identiques ou différents, choisis parmi hydrogène, alkyle, cycloalkyle, aryle ou hétaryle,
R^{e}, E⁴, E⁵, E⁶ signifient des radicaux à chaque fois identiques ou différents, choisis parmi hydrogène, alkyle, cycloalkyle, aryle ou hétaryle,
R^{f} représente hydrogène, méthyle ou éthyle,
M⁺ représente un équivalent de cation,
X⁻ représente un équivalent d'anion et
y vaut un nombre entier de 1 à 240.

12. Procédé selon l'une quelconque des revendications précédentes, ou les groupes fonctionnels aptes à la réalisation de liaisons non covalentes, intermoléculaires sont choisis parmi les groupes hydroxyle, amino primaire, secondaire et tertiaire, thiol, céto, thiocétone, imine, ester d'acide carboxylique, amide d'acide carboxylique, amidine, uréthane, urée, sulfoxyde, sulfoximine, amide d'acide sulfonique et ester d'acide sulfonique.

13. Procédé selon l'une quelconque des revendications précédentes, où les groupes fonctionnels aptes à la réalisation de liaisons non covalentes intermoléculaires sont choisis parmi les groupes qui sont aptes à une tautomérie.

14. Procédé selon l'une quelconque des revendications précédentes, où les ligands comprennent au moins un élément de structure des formules générales I.a ou I.b 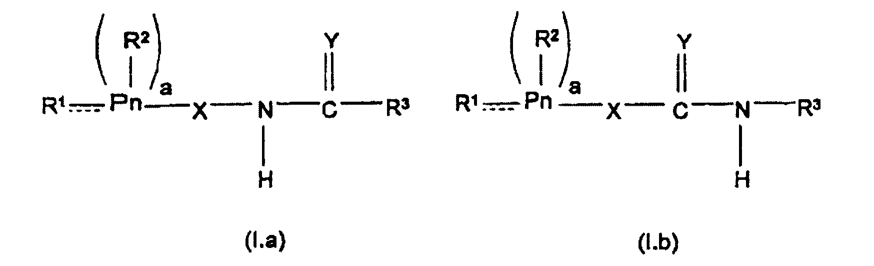 ou leurs tautomères, où
Pn, R¹, R² et a sont définis comme dans la revendication 6,
R³ représente, hydrogène, alkyle, alcoxy, cycloalkyle, cycloalcoxy, hétérocycloalkyle, hétérocycloalcoxy, aryle, aryloxy, hétaryle ou hétaryloxy,
X représente un groupe divalent formant un pont comprenant 1 à 5 atomes de pont entre les liaisons flanquantes,
Y représente O, S ou NR⁴, où R⁴ représente hydrogène, alkyle, cycloalkyle, hétérocycloalkyle, aryle ou hétaryle,
où deux des radicaux X et R¹ à R⁴ ou plus peuvent représenter, ensemble avec l'élément de structure de formule I.a ou I.b, auquel ils sont liés, un composé monocyclique ou polycyclique.

15. Procédé selon la revendication 13, où, dans les ligands I.a ou I.b, R¹ et R², ensemble avec l'atome de phosphore auquel ils sont liés, représentent un hétérocycle de 5 à 8 chaînons, qui est le cas échéant en outre monocondensé, dicondensé ou tricondensé avec cycloalkyle, hétérocycloalkyle, aryle ou hétaryle, l'hétérocycle et, le cas échéant, les groupes condensés pouvant porter, indépendamment l'un de l'autre, chacun un, deux, trois ou quatre substituants qui sont choisis parmi alkyle, cycloalkyle, hétérocycloalkyle, aryle, hétaryle, COOR^{c}, COO⁻M⁺, SO₃R^{c}, SO₃⁻M⁺, PO₃(R^{c})(R^{d}), (PO₃)²⁻(M⁺)₂, NE⁴E⁵, (NE⁴E⁵E⁶)⁺X⁻, OR^{e}, SR^{e}, (CHR^{f}CH₂O)_{y}R^{e}, (CH₂NE⁴)_{y}R^{e}, (CH₂CH₂NE⁴)_{y}R^{e}, halogène, nitro, acyle ou cyano, où
R^{c} et R^{d} signifient des radicaux à chaque fois identiques ou différents, choisis parmi alkyle, cycloalkyle, aryle ou hétaryle,
R^{e}, E⁴, E⁵, E⁶ signifient des radicaux à chaque fois identiques ou différents, choisis parmi hydrogène, alkyle, cycloalkyle, acyle, aryle ou hétaryle,
R^{f} représente hydrogène, méthyle ou éthyle,
M⁺ représente un équivalent de cation,
X⁻ représente un équivalent d'anion et
y vaut un nombre entier de 1 à 240.

16. Procédé selon la revendication 15, où l'hétérocycle est chiral.

17. Procédé selon l'une quelconque des revendications précédentes, où les ligands sont choisis parmi les composés des formules générales I.A à I.C 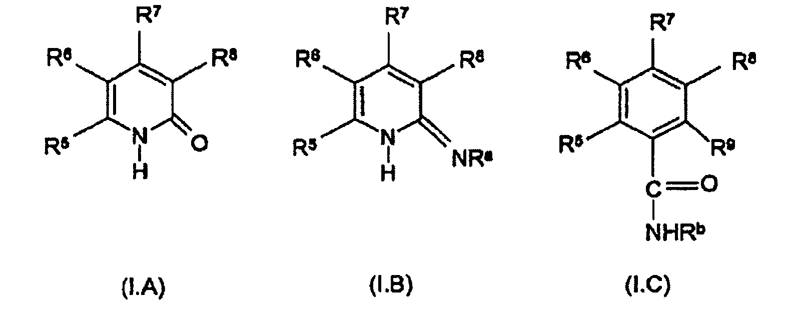 et leurs tautomères, où
- un des radicaux R⁵ à R⁹ représente un groupe contenant des atomes de pnictogène ou de pseudopnictogène,
- les radicaux R⁵ à R⁹, qui ne représentent pas un groupe contenant des atomes de pnictogène ou de pseudopnictogène, représentent, indépendamment l'un de l'autre, hydrogène, alkyle, cycloalkyle, hétérocycloalkyle, aryle, hétaryle, WCOOR^{o}, WCOO⁻M⁺, W(SO₃)R^{o}, W(SO₃)⁻M⁺, WPO₃(R^{o})(R^{p}), W(PO₃)²⁻(M⁺)₂, WNE¹E² W(NE¹E²E³)⁺X⁻, WOR^{q}, WSR^{q}, (CHR^{r}CH₂O)ₓR^{q}, (CH₂NE¹)ₓR^{q}, (CH₂CH₂NE¹)ₓR^{q}, halogène, nitro, acyle ou cyano, où
W représente une simple liaison, un hétéroatome, un groupe contenant des hétéroatomes ou un groupe divalent formant un pont comprenant 1 à 20 atomes de pont,
R^{o} et R^{p} signifient des radicaux à chaque fois identiques ou différents, choisis parmi alkyle, cycloalkyle, aryle ou hétaryle,
R^{q} E¹, E², E³ signifient des radicaux à chaque fois identiques ou différents, choisis parmi hydrogène, alkyle, cycloalkyle, acyle, aryle ou hétaryle,
R^{r} représente hydrogène, méthyle ou éthyle,
M⁺ représente un équivalent de cation,
X⁻ représente un équivalent d'anion et
x vaut un nombre entier de 1 à 240, où deux radicaux R⁵ à R⁹ vicinaux peuvent également représenter un système cyclique condensé, et
R^{a} et R^{b} représentent hydrogène, alkyle, cycloalkyle, hétérocycloalkyle, aryle ou hétaryle, où R^{a} peut également représenter acyle.

18. Procédé selon la revendication 17, où les radicaux R⁵ à R⁹. qui représentent un groupe contenant des atomes de pnictogène ou de pseudopnictogène, représentent un groupe de formule -W'-PnR¹R², où
Pn représente un atome de pnictogène ou un atome de pseudopnictogène,
W' représente une simple liaison, un hétéroatome, un groupe contenant des hétéroatomes ou un groupe divalent formant un pont comprenant 1 à 4 atomes de pont entre les liaison flanquantes,
R¹ et R² sont définis comme dans l'une quelconque des revendications 13 ou 14.

19. Procédé pour la préparation de composés chiraux par transformation d'un composé prochiral, qui contient au moins une double liaison éthyléniquement insaturée, avec un substrat en présence d'un catalyseur chiral, comprenant au moins un complexe de métal de transition avec des ligands qui sont choisis parmi les composés des formules générales I.A à I.C 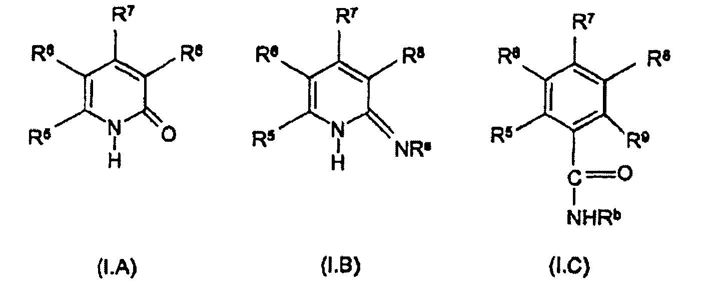 et leurs tautomères, où
- un des radicaux R⁵ à R⁹ représente un groupe contenant des atomes de pnictogène ou de pseudopnictogène,
- les radicaux R⁵ à R⁹, qui ne représentent pas un groupe contenant des atomes de pnictogène ou de pseudopnictogène, représentent, indépendamment l'un de l'autre, hydrogène, alkyle, cycloalkyle, hétérocycloalkyle, aryle, hétaryle, WCOOR^{o}, WCOO⁻M⁺, W(SO₃)R^{o}, W(SO₃)⁻M⁺, WPO₃(R^{o})(R^{p}), W(PO₃)²⁻(M⁺)₂, WNE¹E², W(NE¹E²E³)⁺X⁻, WOR^{q}, WSR^{q}, (CHR^{r}CH₂O)ₓR^{q}, (CH₂NE¹)ₓR^{q}, (CH₂CH₂NE¹)ₓR^{q}, halogène, nitro, acyle ou cyano, où
W représente une simple liaison, un hétéroatome, un groupe contenant des hétéroatomes ou un groupe divalent formant un pont comprenant 1 à 20 atomes de pont,
R^{o} et R^{p} signifient des radicaux à chaque fois identiques ou différents, choisis parmi alkyle, cycloalkyle, aryle ou hétaryle,
R^{q}, E¹, E², E³ signifient des radicaux à chaque fois identiques ou différents, choisis parmi hydrogène, alkyle, cycloalkyle, acyle, aryle ou hétaryle,
R^{r} représente hydrogène, méthyle ou éthyle,
M⁺ représente un équivalent de cation,
X⁻ représente un équivalent d'anion et
x vaut un nombre entier de 1 à 240, où deux radicaux R⁵ à R⁹ vicinaux peuvent également représenter un système cyclique condensé, et
R^{a} et R^{b} représentent hydrogène, alkyle, cycloalkyle, hétérocycloalkyle, aryle ou hétaryle, où R^{a} peut également représenter acyle.

20. Procédé selon l'une quelconque des revendications 17 à 19, où les ligands sont choisis parmi les composés des formules générales I.i à I.iii 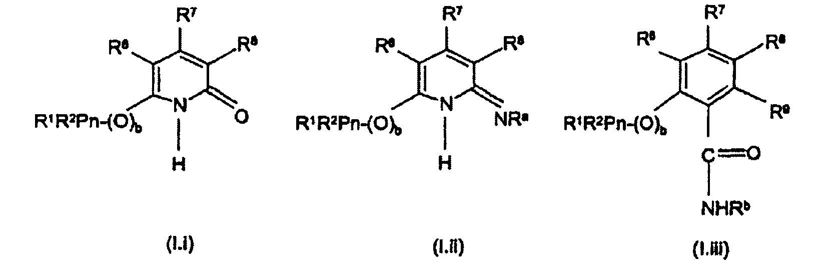 et leurs tautomères, où
b vaut 0 ou 1,
Pn représente un groupe contenant des atomes de pnictogène ou de pseudopnictogène,
R¹ et R² sont définis comme dans l'une quelconque des revendications 13 ou 14,
R⁶ à R⁹ représentent, indépendamment l'un de l'autre, hydrogène, C₁-C₄-alkyle, C₁-C₄-alcoxy, aryle, hétéroaryle, acyle, halogène, C₁-C₄-alcoxycarbonyle ou carboxylate, où deux radicaux R⁶ à R⁹ vicinaux peuvent également représenter un système cyclique condensé, et
R^{a} et R^{b} représentent hydrogène, alkyle, cycloalkyle ou aryle, où R^{a} peut également représenter acyle.

21. Procédé selon l'une quelconque des revendications précédentes, où le composé prochiral est choisi parmi les oléfines, les aldéhydes, les cétones et les imines.

22. Procédé selon l'une quelconque des revendications précédentes, où il s'agit d'une hydrogénation, d'une hydroformylation, d'une hydrocyanuration, d'une carbonylation, d'une hydroacylation, d'une hydroamidation, d'une hydroestérification, d'une hydrosilylation, d'une hydroboration, d'une aminolyse, d'une alcoolyse, d'une isomérisation, d'une métathèse, d'une cyclopropanation, d'une condensation aldolique, d'une alkylation allylique ou d'une [4+2]-cycloaddition.

23. Procédé selon l'une quelconque des revendications précédentes, où il s'agit d'une 1,2-addition, de préférence d'une 1-hydro-2-carbo-addition.

24. Procédé selon l'une quelconque des revendications précédentes, où il s'agit d'une hydroformylation.

25. Procédé selon l'une quelconque des revendications précédentes, où il s'agit d'une hydrogénation.

26. Ligand, tel que défini dans la revendication 20, choisi parmi les composés des formules générales I.i à I.iii 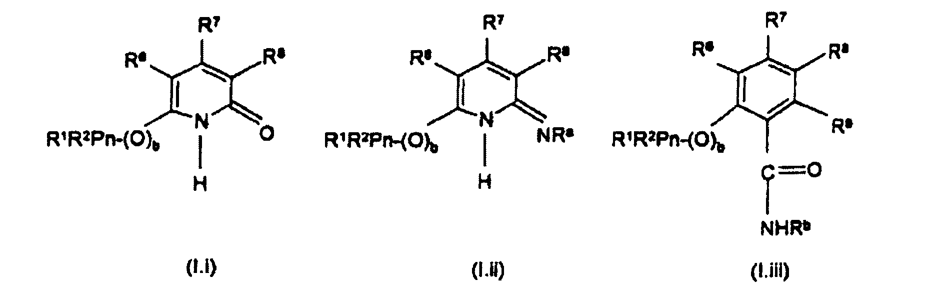 et leurs tautomères, où
b vaut 0 ou 1,
Pn représente P, As ou Sb,
R¹ et R² sont pontés l'un à l'autre de manière telle qu'ils représentent un groupe pnictogéné de formule 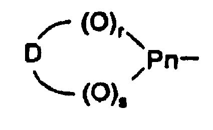
où
r et s représentent, indépendamment l'un de l'autre, 0 ou 1, et
D ensemble avec l'atome de phosphore et le/les atome(s) d'oxygène, au(x)quel(s) il est lié, représente un hétérocycle de 4 à 8 chaînons, qui est le cas échéant monocondensé, dicondensé ou tricondensé avec cycloalkyle, hétérocycloalkyle, aryle et/ou hétaryle, les groupes condensés pouvant porter indépendamment l'un de l'autre chacun un, deux, trois ou quatre substituants, choisis parmi alkyle, alcoxy, halogène, sulfonate, NE⁴E⁵, alkylène-NE⁴E⁵, nitro, cyano et carboxylate et/ou D peut présenter un, deux, trois ou quatre substituants qui sont choisis parmi alkyle, hydroxy, alcoxy, cycloalkyle le cas échéant substitué et aryle le cas échéant substitué et/ou D peut être interrompu par 1, 2 ou 3 hétéroatomes le cas échéant substitués,
R⁶ à R⁹ représentent, indépendamment l'un de l'autre, hydrogène, C₁-C₄-alkyle, C₁-C₄-alcoxy, aryle, hétéroaryle, acyle, halogène, C₁-C₄-alcoxycarbonyle ou carboxylate, où deux radicaux R⁶ à R⁹ vicinaux peuvent également représenter un système cyclique condensé, et
R^{a} et R^{b} représentent hydrogène, alkyle, cycloalkyle ou aryle, où Ra peut également représenter acyle.

27. Ligand, tel que défini dans la revendication 20, choisi parmi
- les ligands de formule I.i 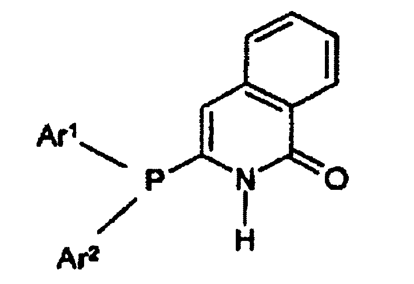 Ar¹, Ar² = 1-naphtyle, 1-naphtyle phényle, 1-naphtyle
- les ligands de formule I.ii 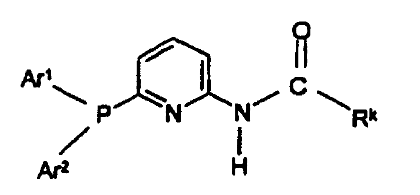
Ar¹, Ar² = 1-naphtyle, 1-naphtyle phényle, 1-naphtyle
R^{k} = méthyle, éthyle, n-propyle, isopropyle, n-butyle, tert-butyle 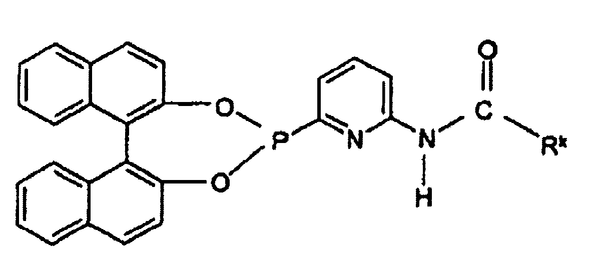
R^{k} = méthyle, éthyle, n-propyle, isopropyle, n-butyle, tert-butyle
et leurs tautomères.

28. Catalyseur, comprenant au moins un complexe de métal de transition avec des ligands qui présentent à chaque fois un groupe contenant des atomes de pnictogène ou de pseudopnictogène et au moins un groupe fonctionnel apte à la réalisation de liaisons non covalentes, intermoléculaires, le complexe présentant des ligands dimérisés via des liaisons non covalentes intermoléculaires, qui sont choisis parmi les composés des formules I.i à I.iii, tels que définis dans la revendication 28 ou 27.

29. Utilisation d'un catalyseur selon la revendication 28, pour une hydrogénation, une hydroformylation, une hydrocyanuration, une carbonylation, une hydroacylation, une hydroamidation, une hydroestérification, une hydrosilylation, une hydroboration, une aminolyse, une alcoolyse, une isomérisation, une métathèse, une cyclopropanation, une condensation aldolique, une alkylation allylique ou une [4+2]-cycloaddition.
